(19) Europäisches Patentamt
European Patent Office
Office européen des brevets

(11) Veröffentlichungsnummer: **0 030 611**
**B1**

(12) **EUROPÄISCHE PATENTSCHRIFT**

(45) Veröffentlichungstag der Patentschrift: **03.07.85**

(51) Int. Cl.⁴: **G 04 C 3/14,** H 02 P 8/00

(21) Anmeldenummer: **80106601.0**

(22) Anmeldetag: **28.10.80**

(54) **Verfahren und Anordnung zur Steuerung und Regelung eines Motors mit permanentmagnetischem Läufer.**

(30) Priorität: **12.12.79 DE 2949947**
**08.04.80 DE 3013473**

(43) Veröffentlichungstag der Anmeldung:
**24.06.81 Patentblatt 81/25**

(45) Bekanntmachung des Hinweises auf die Patenterteilung:
**03.07.85 Patentblatt 85/27**

(84) Benannte Vertragsstaaten:
**CH FR GB LI**

(56) Entgegenhaltungen:
**DE - A - 2 817 645**
**GB - A - 2 006 995**
**US - A - 4 085 577**

(73) Patentinhaber: **Braun Aktiengesellschaft,**
**Rüsselsheimer Strasse 22, D-6000 Frankfurt/Main (DE)**

(72) Erfinder: **Hoffmann, Harald, Dr., Kronberger Strasse 7,**
**D-6240 Königstein 2 (DE)**
Erfinder: **Raducanu, Dan-Cornellu, Händelstrasse 36,**
**D-6232 Bad Soden (DE)**

(74) Vertreter: **Einsele, Rolf et al, Braun Aktiengesellschaft**
**Postfach 1120 Frankfurter Strasse 145, D-6242 Kronberg**
**Taunus (DE)**

**EP 0 030 611 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein Verfahren zur Steuerung und Regelung eines Motors mit einem permanent-magnetischen Läufer mit mindestens einem Polpaar und einem Ständer mit mindestens zwei Wicklungen, von denen im Nominallauf-Betrieb eine mit Antriebsimpulsen beaufschlagt wird und die andere Wicklung als Steuerwicklung zur Erfassung der Läuferbewegung gegenüber dem Ständer dient, wobei die Läuferbewegungen in rechteckförmige Istfrequenz-Impulse umgesetzt, mit Sollfrequenz-Impulsen vorgegebener Frequenz verglichen werden und in Abhängigkeit vom Vergleich der Sollfrequenz-Impulse mit den Istfrequenz-Impulsen die Breite der Antriebsimpulse gesteuert wird, insbesondere für Reaktionsmotoren von zeithaltenden Geräten wie Uhren, sowie auf eine Anordnung zur Durchführung des Verfahrens.

Als elektromechanische Wandler für zeithaltende Geräte wie Quarzuhren, die die untersetzte Quarzfrequenz auf eine Anzeigevorrichtung übertragen, dienen niederfrequente, elektromagnetisch erregte Schrittschaltwerke, erregte oder synchronisierte Schwingungssysteme, Schrittschaltmotoren und Synchronmotoren. Die Synchronmotoren werden selbstanlaufend oder nicht selbstanlaufend mit der Erregerfrequenz angetrieben. Derartige reaktive Synchronmotoren weisen mindestens eine Feldwicklung auf, die mit einer zur rotatorischen Bewegung des durch den Läufer erzeugten magnetischen Feldes synchronen Wechselspannung beaufschlagt wird. Selbstanlaufende Synchronmotoren haben den Nachteil einer hohen Leistungsaufnahme, was bei einem Batterieantrieb entweder zu einem häufigen Batteriewechsel oder zu gross dimensionierten Batterien führt. Beides ist insbesondere bei Uhren unerwünscht. Neben dem Nachteil der hohen Leistungsaufnahme haben selbstanlaufende Synchronmotoren den weiteren Nachteil, dass ein durch einen Polsprung verlorener Impuls nicht mehr einzuholen ist. Ein solches System kann die Anzahl der Umdrehungen in einer vorgegebenen Zeitspanne nicht konstant halten. Nicht selbstanlaufende Motoren können nach einem Stillstand während des Betriebes nicht mehr von selbst starten, sondern müssen mit Hilfe eines mechanischen Anwurfs des Läufers erneut gestartet werden. Zusätzlich muss bei Synchronmotoren, die angeworfen werden, auf eine genaue Einstellbarkeit des Zeigers geachtet werden.

Bei rotierenden Schrittschaltwerken (Schrittmotoren) wird die Bewegung eines permanentmagnetischen Läufers mit n-Polpaaren in einem durch wechsel- oder gleichgerichtete Stromimpulse erregten Ständerfeld um jeweils einen halben bzw. einen Polpaarschritt ausgenutzt. Schrittschaltmotoren mit permanentmagnetischem Läufer haben Dank des hohen Magnetfeldes ein relativ grosses Drehmoment und einen hohen Wirkungsgrad und erlauben einen grossen Schrittwinkel bei günstiger Dampfung der Schrittbewegung.

Aus der Literaturstelle G. Glaser: «Quarzuhrentechnik» (Verlag Wilhelm Kempter KG, 1979, Seiten 142 bis 161, insbesondere Seite 153) ist eine Anordnung zur Phasenregelung eines reaktiven Motors bekannt, bei der ein Phasenvergleich zwischen der Phase eines entsprechend heruntergeteilten Signals einer von einem Quarzoszillator abgegebenen Sollfrequenz und der Phase eines Signals der vom reaktiven Motor abgegebenen Istfrequenz durchgeführt wird. Jedem Wert der gemessenen Phasendifferenz entspricht eine bestimmte Energiezufuhr pro Periode des reaktiven Motors. Damit stellt sich in Abhängigkeit von der Belastung des Motors eine stabile Phasenlage der Motorsignale in bezug auf die Signale der Sollfrequenz ein. Die Synchronisierungssignale, d. h. die Sollfrequenzsignale, können wahlweise über eine zusätzliche Synchronisationsspule zugeführt oder direkt zusätzlich an die Antriebsspule angelegt oder über eine Schaltung zu den Antriebsimpulsen addiert werden. Eine andere Lösung besteht darin, die Phasenlage zwischen den Wandler- und Synchronisationssignalen über eine monostabile oder bistabile Kippstufe zu messen und die Impulsbreite der Antriebsimpulse zu steuern.

Aus der US-A-4 085 577 ist eine Steuer- und Regelschaltung für den Impulsmotor einer elektronischen Uhr bekannt, bei der die Umdrehungen des Läufers des Impulsmotors mittels einer Steuerwicklung erfasst und die durch die Läuferbewegung in der Steuerwicklung induzierten Impulse über eine Impulsformschaltung einer Zählschaltung zugeführt werden, deren Ausgang mit einem ersten Eingang einer Vergleichsschaltung verbunden ist. Der zweite Eingang der Vergleichsschaltung ist ebenfalls über eine Zählschaltung mit dem Ausgang eines Frequenzteilers verbunden, dessen Eingang an eine Oszillatorschaltung angeschlossen ist und der eine vorgegebene Impulsfrequenz abgibt. Der Ausgang der Vergleichsschaltung ist mit einer Steuerschaltung verbunden, die eingangsseitig zusätzlich mit mehreren von dem Frequenzteiler abgegebenen Frequenzsignalen beaufschlagt ist und ausgangsseitig eine mit einer zweiten Wicklung des Impulsmotors verbundene Antriebsschaltung ansteuert, die in Abhängigkeit von dem in der Vergleichsschaltung durchgeführten Vergleich zwischen den Istfrequenz- und den Sollfrequenz-Impulsen Antriebsimpulse an die zweite Wicklung des Impulsmotors abgibt.

Bei einem Stillstand des Impulsmotors, beispielsweise infolge einer entladenen Batterie zur Speisung des Impulsmotors, muss der Impulsmotor erneut angestossen werden, da aufgrund der hohen Sollfrequenz ein Ingangsetzen des Läufers ohne äussere mechanische Hilfe nicht möglich ist.

Aufgabe der vorliegenden Erfindung ist es, ein Verfahren und eine Anordnung zur Steuerung, Regelung und zum Selbstanlauf eines reaktiven Motors für ein zeithaltendes Gerät zu schaffen, die eine geringstmögliche Leistungaufnahme aus einer Batterie unter Verwendung eines bei Nennfrequenz nicht selbst anlaufenden reaktiven Motors mit im Nominalbetrieb geringer Speiseleistung sicherstellen.

Diese Aufgabe wird erfindungsgemäss dadurch gelöst, dass die Läuferdrehzahl erfasst und bei Absinken der Drehzahl unterhalb eines vorgebbaren Wertes ein Selbstanlauf zur stufenweisen Steigerung der Läuferdrehzahl durch zyklisches Umschalten und Umpolen der Antriebsimpulse von der ersten Wicklung auf die zweite Wicklung unter stufenweiser Steigerung der Sollfrequenz-Impulse eingeleitet wird und dass bei Erreichen der Nominallauf-Drehzahl der Selbstanlauf abgeschaltet und die Nominallauf-Regelung eingeschaltet wird.

Eine Anordnung zur Durchführung des Verfahrens ist dadurch gekennzeichnet, dass die Eingänge eines Vergleichsgliedes sowohl mit der Steuerwicklung des reaktiven Motors verbunden als auch mit zwei Referenzspannungen beaufschlagt sind und die beiden Ausgänge des Vergleichsgliedes mit einer Entstör- und Verzögerungsstufe verbunden sind, deren erster Ausgang an einen Phasenkomparator, deren zweiter Ausgang an eine Selbstanlaufstufe und ein Wartezeitglied und deren dritter Ausgang zusammen mit den Ausgängen des Phasenkomparators an eine Verknüpfungslogik angeschlossen sind, dass die Ausgänge der Selbstanlaufstufe und der Ausgang der Verknüpfungslogik über eine Ansteuerlogik mit einer Schaltstufe verbunden sind, an der sowohl die Versorgungsspannung als auch die Wicklungen des reaktiven Motors angeschlossen sind.

Eine weitere Anordnung zur Durchführung des Verfahrens ist dadurch gekennzeichnet, dass die Eingänge eines Vergleichsgliedes sowohl mit einer Drehzahl-Erfassungseinrichtung des reaktiven Motors verbunden als auch mit zwei Referenzspannungen beaufschlagt sind und die beiden Ausgänge dieses Vergleichsgliedes mit einer Entstör- und Verzögerungsstufe verbunden sind, deren Ausgänge einerseits an eine Nominallauf-Regeleinrichtung, andererseits an eine Selbstanlaufstufe angeschlossen sind und dass die Ausgänge der Nominallauf-Regeleinrichtung und der Selbstanlaufstufe über eine Ansteuerlogik mit einer Schaltstufe verbunden sind, an der sowohl die Versorgungsspannung als auch die Wicklungen des reaktiven Motors angeschlossen sind.

Die erfindungsgemässe Lösung stellt eine geringstmögliche Leistungsaufnahme aus einer Batterie unter Verwendung eines nicht selbstanlaufenden reaktiven Motors mit im Nominalbetrieb geringer Speiseleistung sicher und ermöglicht einen Selbstanlauf des Motors in einer einzigen Richtung nach Stillstand des Motors oder einer infolge starken Gegendrehmoments an der Welle des Läufers erheblich verringerten Drehzahl durch Umschalten des Nominalbetriebes auf einen Selbstanlaufbetrieb mit zwei oder mehreren vorgebbaren Frequenzen. Darüber hinaus gewährleistet das Verfahren und die Anordnung zur Durchführung des Verfahrens im Nominalbetrieb eine einwandfreie Drehzahlregelung des Motors mit vernachlässigbarer Totzeit nach Auftreten eines Gegendrehmoments, wobei der Leistungsbedarf des Motors im Normalbetrieb äusserst gering ist und eine einwandfreie Funktion auch bei stark herabgesetzter Versorgungsspannung sichergestellt ist. Die Lösung ist daher universell bei Uhren mit kleinem bis grossem Gegendrehmoment, d. h. für kleine Armband- oder Tischuhren bis zu grossen Wanduhren, anwendbar und stellt eine erhebliche Verlängerung der Lebensdauer der Batterie einer batteriebetriebenen Uhr sicher.

Anhand eines in der Zeichnung dargestellten Ausführungsbeispieles des Erfindungsgegenstandes soll der der Erfindung zugrunde liegende Gedanke näher erläutert werden.

Es zeigen:

Fig. 1 eine schematische Darstellung eines reaktiven Motors mit der gesamten Steuer- und Regelanordnung,

Fig. 2 eine detaillierte Darstellung der einzelnen Steuer- und Regelkreisglieder,

Fig. 3, 4, 5 zeitliche Darstellungen der Impulse und Signale nach den Fig. 1 und 2,

Fig. 6 eine vereinfachte Wicklungsanordnung des reaktiven Motors,

Fig. 7 eine zeitliche Darstellung der Impulse und Signale bei der Anwendung der vereinfachten Wicklungsanordnung,

Fig. 8 ein Blockschaltbild der Steuer- und Regelanordnung für einen reaktiven Motor mit Selbstanlauf und besonders geringer Leistungsaufnahme,

Fig. 9 eine zeitliche Darstellung der Impulse und Signale bei Anwendung einer Anordnung gemäss Fig. 8,

Fig. 10 ein Blockschaltbild einer abgewandelten Steuer- und Regelanordnung für einen reaktiven Motor mit Selbstanlauf,

Fig. 11 ein detailliertes Schaltbild der Steuer- und Regelanordnung für einen reaktiven Motor mit Selbstanlauf gemäss Fig. 10,

Fig. 12 die schematische Darstellung eines aus einer Anzahl von x-Flip-Flops bestehenden Schieberegisters,

Fig. 13 ein detailliertes Schaltbild der Steuer- und Regelanordnung für einen reaktiven Motor mit Selbstanlauf gemäss Fig. 11 und

Fig. 14 eine zeitliche Darstellung der Impulse und Signale entsprechend der Anordnung nach Fig. 13.

In Fig. 1 ist schematisch ein reaktiver Motor 2 dargestellt, der einen Läufer 21 mit durch Permanent-Magnete gebildeten Polen und eine nicht näher dargestellten Ständer mit zwei Wicklungen 22, 23 aufweist. Wird eine der beiden Wicklungen 22, 23 mit Impulsen beaufschlagt, so lässt sich der Läufer 21 auf eine der Polpaarzahl und der Frequenz entsprechende Drehzahl bringen. Die Umdrehungen des Läufers 21 werden für die Anwendung in zeithaltenden Geräten, wie Uhren, über eine Welle und ein Getriebe auf ein Anzeigesystem übertragen, welches beispielsweise eine Analoganzeige mittels mehrerer Zeiger und einem Ziffernblatt ermöglicht.

Für die Erfassung der Drehzahl n und zur Abgabe einer drehzahlproportionalen Spannung $U_n$ für die Drehzahlregelung im Nominalbetrieb bzw. als Kriterium zur Einleitung des Selbstanlaufbetriebes ist eine Einrichtung 24 vorgesehen, die beispielsweise aus einer optoelektronischen, magnetischen oder gleichwertigen Einrichtung bestehen kann. In einfacher Weise kann aber auch die zweite Wicklung 23 des Ständers als Sensorwicklung verwendet werden, da sie ebenso wie die erste Wicklung 22 im Einflussbereich der Magnetlinien der Pole des Läufers 21 liegt. Bei der Rotation des Läufers 21 schneiden die Magnetfeldlinien der Pole periodisch die zweite Wicklung 23, wodurch an den Wicklungsenden eine der Drehzahl n des Läufers 21 proportionale, sinusförmige Spannung $U_n$ mit Nulldurchgängen, das sogenannte Sensorsignal ansteht.

Diese drehzahlproportionale Spannung $U_n$ wird zusammen mit zwei Vergleichsspannungen $U_v$, $U_s$ an die Eingänge eines Vergleichsgliedes 4 gelegt, wo das Sensorsignal in zwei Rechteckimpulse für die Drehzahlregelung bzw. für die Einleitung des Anlaufbetriebes umgesetzt wird, deren senkrechte Flanken an Scnittstellen mit den konstanten Vergleichsspannungen $U_v$, $U_s$ liegen. Die im wesentlichen rechteckförmigen Ausgangssignale v, i des Vergleichsgliedes 4 sind an die Eingänge eines aus zwei Teilstufen 51, 52 aufgebauten Entstör- und Verzögerungsgliedes 5 gelegt, das zusätzlich mit einer Taktfrequenz $f_4$ beaufschlagt ist. Dieses Entstör- und Verzögerungsglied 5 gibt für den Nominalbetrieb Istwertfrequenz-Impulse I, $\bar{I}$ an eine Regeleinrichtung für den Nominalbetrieb 6 und für die gegebenenfalls erforderliche Einleitung des Selbstanlaufbetriebes Selbstanlaufsignale V an eine nachgeschaltete Selbstanlaufstufe 8 ab.

Der Regeleinrichtung für den Nominalbetrieb 6 werden neben den Istwertfrequenz-Impulsen I, $\bar{I}$ von der Selbstanlaufstufe 8 abgegebene Sollwertfrequenz-Impulse $f_2$, $\bar{f_2}$ zugeführt und am Ausgang zwei verschiedene Nominallauf-Impulse Hö, $H\bar{o}$ abgegeben.

Der Selbstanlaufstufe 8 werden neben dem Selbstanlaufsignal V zusätzlich eine oder mehrere voneinander verschiedene Frequenzsignale $f_{onz}$ sowie ein vorgebbares Signal N eingegeben. Das vorgebbare Signal N wird in einem Wartezeitglied 7 erzeugt, das aus einer oder mehreren Verzögerungsstufen besteht. Der ersten Verzögerungsstufe wird eine Frequenzsignal $f_3$ eingegeben, während die Reset-Eingänge aller Verzögerungsstufen synchron in Abhängigkeit vom Selbstanlaufsignal V und vom Umschaltsignal β zurückgesetzt werden.

Von der Selbstanlaufstufe 8 werden neben dem Umschaltsignal β, $\bar{\beta}$ zwei Impulsfolgen $f_1$, $\bar{f_1}$ sowie $f_2$, $\bar{f_2}$ zusammen mit den von der Regeleinrichtung für den Nominalbetrieb 6 abgegebenen Nominallaufimpulsen Hö, $H\bar{o}$ einer nachgeschalteten Ansteuerlogik 9 zugeführt, an deren Ausgängen Impulsfolgen $T_n$ zur Ansteuerung von Schaltern einer nachgeschalteten Schaltstufe 3, die sowohl mit einer Spannungsquelle $+U_B$, $-U_B$ als auch mit den Wicklungen 22, 23 des reaktiven Motors 2 verbunden ist, wobei die Schaltstufe 3 die Wicklungen 22, 23 des reaktiven Motors 2 mit dem einen oder anderen Pol der Spannungsquelle $+U_B$, $-U_B$ verbindet.

Der gesamten Anordnung ist ein Generator zugeordnet, der einen Schwingquartz 1 und einen Frequenzteiler 11 aufweist, an dem Rechteck-Impulse mit den Frequenzen $f_3$, $f_4$ und $f_{onz}$ anstehen, die an den vorgenannten Stellen den entsprechenden Anordnungsteilen zugeführt werden.

Die der Fig. 2 zu entnehmende detaillierte Darstellung der Steuer- und Regelkreisanordnung zeigt in strichpunktierter Einfassung die in Fig. 1 dargestellten Elemente.

Das Vergleichsglied enthält zwei Komparatoren 41 und 42, deren positive Eingänge an das eine Ende der zweiten Wicklung 23 angeschlossen sind. Während der negative Eingang des ersten Komparators 41 an die eine Referenzspannung $U_s$ angeschlossen ist, ist der negative Eingang des zweiten Komparators 42 an die andere Referenzspannung $U_v$ und an das andere Wicklungsende der zweiten Wicklung 23 angeschlossen. Die Ausgänge der beiden Komparatoren 41 und 42 mit den Signalen v und i sind getrennt auf eine der beiden Teilstufen 51 und 52 der Entstör- und Verzögerungsstufe 5 geführt. Jede der beiden Teilstufen 51 und 52 enthält 4 in Reihe geschaltete, getaktete Flip-Flops D1 bis D4 bzw. D5 bis D8, deren Takteingänge $C_k$ synchron mit einer festlegbaren Frequenz $f_4$, in diesem Fall einer Frequenz von 1024 Hz, beaufschlagt sind. Der Eingang des jeweils ersten getakteten Flip-Flops D1 bzw. D5 ist mit dem Ausgang des ersten bzw. zweiten Komparators 41 bzw. 42 verbunden. Die Ausgänge Q der getakteten Flip-Flops D1 bis D3 bzw. D5 bis D7 sind jeweils mit dem Eingang des nachfolgenden getakteten Flip-Flops D2 bis D4 bzw. D6 bis D8 verbunden. Der Ausgang des jeweils letzten Flip-Flops D4 bis D8 ist an den einen Eingang eines nachgeschalteten ersten NAND-Gatters G1 bzw. G5 gelegt, an deren anderen Eingang der Ausgang des jeweils ersten getakteten Flip-Flops D1 bzw. D5 angeschlossen ist. An die Eingänge eines zweiten NAND-Gatters G2 bzw. G6 sind die negierten Ausgänge $\bar{Q}$ des ersten bzw. des letzten getakteten Flip-Flops D1 bzw. D4 und D5 bzw. D8 angeschlossen.

Die Ausgänge dieser beiden ersten NAND-Gatter G1, G2 bzw. G5, G6 sind an den Eingang eines dritten bzw. vierten NAND-Gatters G3, G4 bzw. G7, G8 gelegt, deren anderer Eingang jeweils mit dem Ausgang des jeweils anderen NAND-Gatters G4, G3 bzw. G8, G7 verbunden ist. Das Ausgangssignal V der ersten Entstör- und Verzögerungsstufe 51, das identisch ist mit dem Ausgangssignal des dritten NAND-Gatters G3, wird an den Eingang der nachgeschalteten Selbstanlaufstufe 8 angeschlossen. Die Ausgangssignale I, $\bar{I}$ der zweiten Entstör- und Verzögerungsstufe 53, die identisch sind mit den Ausgangssignalen des dritten und vierten NAND-Gatters G7, G8 dieser Stufe, sind mit der nachgeschalteten Regeleinrichtung für den Nominalbetrieb 6 verbunden.

Die Regeleinrichtung für den Nominalbetrieb 6 weist ebenfalls zwei getrennte Regeleinrichtungen 61 und 62 für die Nominallaufimpulse Hȯ, Hō auf. Jede dieser Regeleinrichtungen 61 und 62 enthält zwei D-Flip-Flops $D_{R1}$, $D_{R2}$ bzw. $D_{R3}$, $D_{R4}$, zwei NOR-Gatter G12, G13 bzw. G14, G15, die in der Weise miteinander verknüpft sind, dass die negierten Ausgänge $\overline{Q}$ der beiden D-Flip-Flops $D_{R1}$, $D_{R2}$ und $D_{R3}$, $D_{R4}$ über das erste NOR-Gatter G12 bzw. G14 zusammengefasst und an die Reset-Eingänge der beiden D-Flip-Flops $D_{R1}$, $D_{R2}$ und $D_{R3}$, $D_{R4}$ gelegt sind. Der negierte Ausgang $\overline{Q}$ des ersten D-Flip-Flops $D_{R1}$ bzw. $D_{R3}$ und der Ausgang des zweiten D-Flip-Flops $D_{R2}$ bzw. $D_{R4}$ sind zusammen mit dem Ausgangssignal I, $\overline{I}$ der zweiten Entstör- und Verzögerungsstufe 52 an die drei Eingänge des zweiten NOR-Gatters G13 bzw. G15 angeschlossen. Die Ausgänge dieser beiden NOR-Gatter G13 bzw. G15 sind mit zwei Eingängen der Ansteuerlogik 9 verbunden. Die Eingänge der vier D-Flip-Flops $D_{R1}$–$D_{R4}$ sind an positives Potential angeschlossen, während die Takteingänge $C_k$ des jeweils ersten D-Flip-Flops $D_{R1}$ bzw. $D_{R3}$ mit der abfallenden bzw. ansteigenden Flanke einer von der Selbstanlaufstufe 8 vorgegebenen Frequenz $f_2$ bzw. $\overline{f_2}$ beaufschlagt sind. Der Takteingang $C_k$ des jeweils zweiten D-Flip-Flops $D_{R3}$ bzw. $D_{R4}$ ist mit der ansteigenden bzw. abfallenden Flanke I, $\overline{I}$ der am Ausgang der zweiten Entstör- und Verzögerungsstufe 52 anstehenden Impulse beaufschlagt.

Die Selbstanlaufstufe 8 enthält die Reihenschaltung von drei T-Flip-Flops $T_{R4}$, $T_{R5}$, $T_{R6}$, deren negierte Ausgänge $\overline{Q}$ Signale P, R, S abgeben und auf den Eingang des jeweils nachgeschalteten T-Flip-Flops TR4, TR5 und TR6 geschaltet sind. Der Eingang des ersten T-Flip-Flops TR4 ist mit dem Ausgang des Wartezeitgliedes 7, das ein Signal N abgibt, verbunden. Die Reset-Eingänge R der drei T-Flip-Flops TR4 bis TR6 sind gemeinsam an den Ausgang einer Schaltung, die aus drei NOR-Gattern G9 bis G11 besteht, angeschlossen. Die Eingänge des ersten NOR-Gatters G9 sind sowohl mit dem negierten Ausgang $\overline{Q}$ des dritten T-Flip-Flops $T_{R6}$ als auch mit dem vom Wartezeitglied 7 abgegebenen vorgebbaren Signal N beaufschlagt. Ein Eingang des zweiten NOR-Gatters G10 ist mit dem Ausgang des ersten NOR-Gatters G9 verbunden, während der zweite Eingang mit dem von der ersten Entstör- und Verzögerungsstufe 51 abgegebenen Selbstanlaufsignal V beaufschlagt ist.

Das dritte NOR-Gatter G11 ist sowohl mit dem Ausgang des zweiten NOR-Gatters G10 verbunden als auch mit dem von der Selbstanlaufstufe 8 abgegebenen Umschaltsignal β beaufschlagt. Des weiteren sind in der Selbstanlaufstufe 8 vier UND-Gatter G30 bis G33 vorgesehen, an deren Eingänge vorgegebene Frequenzsignal $f_{o1z}$, $f_{o2z}$, $f_{o3z}$, im Ausführungsbeispiel 16, 32 und 64 Hz, die Ausgangssignale P und R sowie mittels zweier NAND-Gatter G28, G29 die negierten Ausgangssignale $\overline{P}$, $\overline{R}$ des ersten und zweiten T-Flip-Flops $T_{R4}$ und $T_{R5}$, das Umschaltsignal β sowie das negierte Umschaltsignal $\overline{\beta}$ in folgender Weise gelegt sind:

erstes Gatter G30: $\overline{\beta}$ (negiert) und $f_{o3z}$ (64Hz)
zweites Gatter G31: β, P, R und $f_{o1z}$ (16Hz)
drittes Gatter G32: β, $\overline{P}$, R und $f_{o2z}$ (32Hz)
viertes Gatter G33: β, $\overline{R}$ und $f_{o3z}$ (64Hz)

Die Ausgänge der vier UND-Gatter G30 bis G33 sind über ein NOR-Gatter G34 zusammengefasst, an dessem Ausgang eine Impulsfolge $f_o$ ansteht, die an den Takteingang $C_k$ eines nachgeschalteten D-Flip-Flops 82 gelegt ist, das zusammen mit einem zweiten D-Flip-Flop 83 eine Frequenz-Untersetzerstufe bildet. Bei beiden D-Flip-Flops 82 und 83 ist der negierte Ausgang $\overline{Q}$ mit dem Eingang $D_9$ bzw. $D_{10}$ verbunden. Der Ausgang Q des ersten D-Flip-Flips 82 ist mit dem Takteingang des zweiten D-Flip-Flops 83 verbunden. An den Ausgängen Q und den negierten Ausgängen $\overline{Q}$ der beiden D-Flip-Flops 82 und 83 stehen die untersetzten Frequenzfolgen f1, $\overline{f1}$ sowie f2 und $\overline{f2}$ an. An den Eingängen eines weiteren Flip-Flops 81 der Selbstanlaufstufe 8 sind das negierte Ausgangssignal $\overline{S}$ des dritten T-Flip-Flops $T_{R6}$ und das Ausgangssignal eines weiteren NOR-Gatters G36 angelegt, an dem das negierte Ausgangssignal $\overline{S}$ und das von dem Wartezeitglied 7 abgegebene Signal N zusammengefasst sind. Am Ausgang dieses Flip-Flops 81, das im Ausführungsbeispiel aus zwei NOR-Gattern G26 und G27 zusammengesetzt ist, stehen das Umschaltsignal β sowie das negierte Umschaltsignal $\overline{\beta}$ an.

Das Wartezeitglied 7 besteht im Ausführungsbeispiel aus drei Verzögerungsstufen TR1 bis TR3, deren Reset-Eingänge R gemeinsam mit den Reset-Eingängen der T-Flip-Flops der Selbstanlaufstufe 8 an den Ausgang des Gatters G11 gelegt sind. Am Eingang der ersten Verzögerungsstufe $T_{R1}$ ist eine Frequenz f3, im Ausführungsbeispiel 16 Hz, gelegt, während die Ausgänge $\overline{Q}$ der ersten und zweiten Verzögerungsstufe TR1 und TR2 mit den Eingängen der nachfolgenden Verzögerungsstufe verbunden sind und am Ausgang der dritten Verzögerungsstufe TR3 das Signal N ansteht.

Die Ausgangssignale β, $\overline{\beta}$, f1, $\overline{f1}$ und f2, $\overline{f2}$ der Selbstanlaufstufe 8 und die Ausgangssignale Hō sowie Hȯ der Regeleinrichtung für den Nominalbetrieb 6 werden in der nachgeschalteten Ansteuerlogik 9 mittels 6 UND-Gatter G20–G25, deren Ausgänge an vier weitere UND-Gatter G16–G19 angeschlossen sind in der Weise miteinander verknüpft, dass sie der folgenden Wahrheitstabelle genügen:

| | Signale | | | | | | | Schalter | | | |
|---|---|---|---|---|---|---|---|---|---|---|---|
| Betrieb | β | $T_5$ | $T_6$ | $T_7$ | $T_8$ | Hȯ | Hō | S1/S5 | S2/S6 | S3/S7 | S4/S8 |
| Selbstanlauf | H | H | L | L | L | – | – | E | A | A | A |
| | H | L | L | L | H | – | – | A | A | A | E |
| | H | L | H | L | L | – | – | A | E | A | A |
| | H | L | L | H | L | – | – | A | A | E | A |

(Fortsetzung)

| Betrieb | | Signale β | $T_5$ | $T_6$ | $T_7$ | $T_8$ | Hȯ | Hō | Schalter S1/S5 | S2/S6 | S3/S7 | S4/S8 |
|---|---|---|---|---|---|---|---|---|---|---|---|---|
| Nominal- | Hȯ | L | L | L | H | L | H | L | A | A | E | A |
| laufbe- | Hō | L | L | L | L | H | L | H | A | A | A | E |
| trieb | Hȯ = Hō | L | L | L | L | L | L | L | A | A | A | A |

wobei H = hohes Potential
L = niedriges Potential
– = unbedeutender Zustand
E = Schalter geschlossen
A = Schalter geöffnet

bedeutet.

Die Ausgänge T5 bis T8 der NAND-Glieder G16 bis G19 dienen zur Ansteuerung von acht Schaltern S1–S8 einer Schaltstufe 3, deren Schaltanschlüsse in zyklischer Vertauschung jeweils an dem positiven oder negativen Batterieanschluss $+U_{BATT}$ und $-U_{BATT}$ sowie dem einen oder anderen Wicklungsende der ersten oder zweiten Wicklung 22 oder 23 des reaktiven Motors 2 angeschlossen sind. Dabei steuert jeweils ein Ausgangssignal T5–T8 zwei Schalter an, die an dem einen oder anderen Batteriepol und an dem einen oder anderen Wicklungsende einer der beiden Wicklungen 22 oder 23 angeschlossen sind. Die in der Schaltstufe angeordneten Dioden D1–D8 sind den beiden Wicklungen 22 und 23 so parallel geschaltet, dass die in den Wicklungen gespeicherte magnetische Energie nach Abschalten der Schalter S1 bis S8 an die speisende Batterie zurückgeliefert werden kann.

Die Umdrehungen des Motorläufers 21 werden über eine nicht näher dargestellte Welle auf ein Getriebe und von diesem über eine weitere Welle auf ein Anzeigesystem übertragen, welches beispielsweise eine Analoganzeige mittels mehrerer Zeiger und einem Ziffernblatt ermöglicht.

Die Funktionsweise des erfindungsgemässen Verfahrens und der erfindungsgemässen Anordnung soll nachstehend anhand der zeitlichen Darstellungen der einzelnen Signale in den Figuren 3 und 4 erfolgen.

In Fig. 3 sind die zeitlichen Verläufe der Spannungen an der zweiten Wicklung 23, die konstanten Referenzspannungen $U_v$ und $U_s$ sowie die Ausgangssignale v und i der beiden Komparatoren 41 und 42 dargestellt. Bei der Rotation des Läufers 21 schneiden die Magnetlinien der Pole N und S periodisch die Magnetfeldlinien der zweiten Arbeitswicklung 23, wodurch eine sinusförmige Spannung $U_W$ mit Nulldurchgängen, das sogenannte Sensorsignal, erzeugt wird. Durch Vergleich mit den Referenzspannungen $U_r$ und $U_s$ in den beiden Komparatoren 41 und 42, die auch als Impulsformer bezeichnet werden können, wird das Sensorsignal in Rechteckimpulse umgesetzt, deren senkrechte Flanken an den Schnittpunkten des Sensorsignals mit den Referenzspannungen $U_v$ und $U_s$ liegen.

In den Bereichen, wo das Sensorsignal $U_w$ grösser als die jeweilige Referenzspannung $U_v$ bzw. $U_s$ ist, wird ein Rechtecksignal v bzw. i abgegeben. Die Komparatoren 41 und 42 digitalisieren daher als Sensorsignal, so dass die Ausgangssignale v und i am Ausgang der beiden Komparatoren 41 und 42 wie in Fig. 3 dargestellt aussehen. Das Signal v ist H (für hohes Potential) nur wenn das Sensorsignal $U_w$ grösser als die Referenzspannung $U_s$ ist. Damit kann zum Beispiel gemeldet werden, wenn die Rotordrehzahl unter eine der Referenzspannung $U_s$ entsprechenden Drehzahl absinkt. Diese Referenzspannung dient aber auch als erhöhter Störpegelabstand, so dass eventuelle Störungen in der zweiten Wicklung 23, die kleiner als die Referenzspannung $U_s$ sind, nicht in dem Ausgangssignal v am Ausgang des ersten Komparators 41 erscheinen. Die digitalisierten Ausgangssignale v und i der Komparatoren 41 und 42 werden auf die Eingänge der nachgeschalteten Entstör- und Verzögerungsstufen 51 und 52 gegeben, die auf der Basis einer Zeitverzögerung arbeiten. Nur für Zustände (L) und (H), die länger dauern als eine Zeitspanne Δ wird ein Wechsel in dem Signal nach der betreffenden Entstör- und Verzögerungsstufe 51 bzw. 52 erscheinen (V bzw. I), so dass Störimpulsspitzen in der Form L–H–L oder H–L–H in den Ausgangssignalen v und i, die kürzer als die genannte Zeitspanne Δt durch das betreffende Entstör- und Verzögerungsglied 51 bzw. 52 nicht weitergeleitet werden. Das Entstör- und Verzögerungsglied 51 bzw. 52 wirkt gleichzeitig als Verzögerungsglied zwischen den Signalen v und V bzw. i und I.

Die Verzögerung zwischen den Eingangssignalen v und i der Entstör- und Verzögerungsstufen 51 bzw. 52 und den Ausgangssignalen V und I bzw. $\bar{I}$ bietet Vorteile bei der Optimierung der Steuerimpulseinstellung gegenüber der ersten Wicklung 22 sowie für den Nominallaufbetrieb.

In Fig. 4 sind von oben nach unten folgende Signale dargestellt:

a) drei an unterschiedlichen Stellen der dem Quartzoszillator 1 nachgeschalteten Frequenz-Teiler-Kette 11 abgegriffene Frequenzsignale $f_{o1z}$ bis $f_{o3z}$

b) die am Ausgang der ersten Entstör- und Verzögerungsstufe 51 anstehenden Signale $\bar{V}$ bzw. das als Resetsignal für die Selbstanlaufstufe 8 dienende Signal V

c) die an den Ausgängen der T-Flip-Flips des Wartezeitgliedes 7 anstehenden Signale $Q\bar{1}$ bis $Q\bar{3}$, wobei das Ausgangssignal $Q\bar{3}$ des dritten T-Flip-Flops dem Signal N entspricht.

d) die Ausgangssignale P, R, S der drei T-Flip-Flops der Selbstanlaufstufe 8

e) das Umschaltsignal β für die Einleitung des Selbstanlaufbetriebes, das vom NOR-Gatter G34 der Selbstanlaufstufe 8 abgegebene Signal $f_o$ sowie die von der Selbstanlaufstufe abgegebenen Signale $f_1$ und $f_2$

f) die Signale $U_{w1}$ und $U_{w2}$ an den Wicklungen 22 und 23 des Motors 2.

Aus dieser zeitlichen Darstellung der einzelnen Signale ergibt sich im Zusammenhang mit der Schaltungsanordnung nach Fig. 2 folgende Funktionsweise:

Sinkt die Drehzahl des Läufers 21 des Motors 2 unter eine bestimmte Grenze, so dass das Ausgangssignal V der ersten Entstör- und Verzögerungsstufe 51 eine gewisse Zeitspanne nicht mehr auf H (für hohes Potential) kommt, bleibt während dieser Zeitspanne der gemeinsame Reset-Eingang R der T-Flip-Flops TR1 bis TR6 des Wartezeitgliedes und der Selbstanlaufstufe 8 auf L (für niedriges Potential). Dabei ist vorauszusetzen, dass das Umschaltsignal β im normalen Betrieb vom vorangegangenen Zustand her (L) war und wenigstens eines der beiden Ausgangssignale N oder S des jeweils dritten T-Flip-Flops TR3 bzw. TR6 des Wartezeitgliedes 7 bzw. der Selbstanlaufstufe 8H war. Bleibt das Signal V während einer Zeitspanne $t_1$ im Zustand L, zum Beispiel weil der Läufer 21 des Motors 2 sich nicht mehr bewegt, wird der Ausgang N des dritten T-Flip-Flops TR3 des Wartezeitgliedes 7 in den Zustand L gesetzt und setzt seinerseits das T-Flip-Flop 81, so dass das Umschaltsignal β in den Zustand H und das negierte Umschaltsignal $\bar{\beta}$ in den Zustand L gesetzt wird. Nachdem β H geworden ist und solange das Umschaltsignal in diesem Zustand verbleibt, wird ein Setzen auf Null der T-Flip-Flops TR1 bis TR6 verhindert, da der Ausgang des NOR-Gatters 11, d. h. das Reset-Signal für die T-Flip-Flops TR1 bis TR6, wegen β = H im Zustand L verbleibt. Solange das Umschaltsignal β im Zustand H bleibt dauert der Selbstanlaufbetrieb nach dem Prinzip eines Schrittmotors mit zwei Wicklungen an. Während dieser Zeit nimmt das von dem NOR-Gatter G34 in der Selbstanlaufstufe 8 abgegebene Frequenzsignal $f_o$ abhängig von dem Zeitpunkt innerhalb des Bereiches, wo das Umschaltsignal β = H ist, verschiedene Werte an. Die verschiedenen Bereiche 1Z, 2Z und 3Z werden mit Hilfe der T-Flip-Flops TR4 bis TR6 und der Gatter G28 bis G34 aus den zugeführten Frequenzsignalen $f_{o1z}$–$f_{o3z}$ erzeugt. So beträgt das Ausgangssignal $f_o$ im Bereich 1Z zum Beispiel 16 Hz, im Bereich 2Z 32 Hz und im Bereich 3Z 64 Hz. Die Zeitdauer dieser Bereiche ist von der dem ersten T-Flip-Flop TR1 des Wartezeitgliedes 7 zugeführten Frequenz f3 und von der Anzahl der T-Flip-Flops der Kette TR1 bis TR6 abhängig. Mit der veränderlichen Frequenz $f_o$ wird in den nachgeschalteten Frequenz-Untersetzerstufen 82 und 83 die Frequenz $f_1$ bzw. $f_2$ erzeugt, die die halbe Frequenz bzw. ein Viertel der Frequenz des Signals $f_o$ gemäss Fig. 4 aufweisen. Die Frequenzen $f_1$ und $f_2$ werden zusammen mit dem Umschaltsignal β bzw. dem negierten Umschaltsignal $\bar{\beta}$ der nachgeschalteten Ansteuerlogik 9 eingegeben, wo sie mit Hilfe der NAND-Gatter G16–G25 in dem Bereich, wo das Umschaltsignal β = H ist, die Schalter S1 bis S8 des Schaltgliedes 3 in der Weise ansteuern, dass die obengenannte Schalttabelle für die Schalter S1–S8 erfüllt ist. Diese Einschaltlogik für die Schalter S1 bis S8 hat die in Fig. 4f wiedergegebene Impulsfolge für die Wicklungen 22 und 23 des Motors 2 zum Ergebnis, deren Frequenz zum Beispiel im Bereich 1Z 4 Hz, im Bereich 2Z 8 Hz und im Bereich 3Z 16 Hz beträgt. Diese Selbstanlaufsteuerung erhöht die Drehzahl des Läufers 21 von zum Beispiel 0 auf 8 Umdrehungen pro Sekunde, da die Impulsreihe mit der Frequenz von 16 Hz bei einem Läufer mit 2 Polpaaren die Drehzahl von 8 Umdrehungen pro Sekunde erzeugt. Die Umschaltzeitpunkte sind in der zeitlichen Darstellung der Fig. 4 mit $t_N$ für die Einleitung des Selbstanlaufbetriebes, $t_P$ für die Umschaltung vom ersten Bereich 1Z auf den zweiten Bereich 2Z, $t_R$ für die Umschaltung vom zweiten Bereich 2Z auf den dritten Bereich 3Z und mit $t_S$ für die Umschaltung vom Selbstanlaufbetrieb auf den Nominallaufbetrieb bezeichnet.

Wird das Ausgangssignal S des dritten T-Flip-Flops TR6 der Selbstanlaufstufe 8 am Ende des dritten Bereiches 3Z in den Zustand L gesetzt, wird das Flip-Flop 81 mit dem Umschaltsignal β auf L und dem negierten Umschaltsignal $\bar{\beta}$ auf H gesetzt, was eine Änderung des bisherigen Selbstanlaufbetriebes in den Nominallaufbetrieb bedeutet. Im Nominallaufbetrieb dient die zweite Wicklung 23 des Motors 2 als Steuerspule oder als «Pick-up»-Spule, deren Ausgangssignale zu den Signalen V und I, wie oben beschrieben, führen. Während des Nominallaufbetriebes gilt die in der Einschalt-Tabelle für die Schalter S1 bis S8 angegebene Logik für den Bereich β = L.

Die Nominalbetriebsregelung, nachstehend im Zusammenhang mit der in Fig. 2 dargestellten und beschriebenen Regelungseinrichtung für den Nominalbetrieb 61 und 62 wird anhand der zeitlichen Darstellung in der Fig. 5 näher erläutert werden. In dieser Fig. 5 sind in zeitlicher Abhängigkeit folgende Signale von oben nach unten dargestellt:

a) die von der Selbstanlaufstufe 8 abgegebene Soll-Frequenz $f_2$

b) die an der nunmehr als Steuerwicklung dienenden zweiten Wicklung 23 abgegriffene Spannung $U_{w1}$ (31 gegen 1 in Fig. 2)

c) die am Ausgang des zweiten Komparators 42 anstehende digitalisierte Spannung i sowie das daraus abgeleitete, am Ausgang der zweiten Entstör- und Verzögerungsstufe 52 anstehende und um die Zeitspanne Δt gegenüber dem Signal i verschobene Signal I

d) die Nominallauf-Impulse $H\dot{o}$, $H\bar{o}$, die am Ausgang der Nominalbetriebsregeleinrichtungen 61 und 62 anstehen sowie

e) die daraus mittels der Ansteuerlogik und des Schaltgliedes gebildete Spannungskurve für die im Nominalbetrieb als Arbeitsspule dienende erste Wicklung 22.

Daraus ergibt sich die folgende Funktionsweise:

Die Einschaltdauer für die Impulse ist von der Phasenverschiebung zwischen der von der Selbstanlaufstufe 8 abgegebenen Soll-Frequenz $f_2$ und der von der zweiten Entstör- und Verzögerungsstufe 52 abgegebenen Ist-Frequenz (I-Impulse) abhängig. So beginnt der eine Nominallauf-Impuls $H\bar{o}$ mit der absteigende Flanke der Soll-Frequenz f2 an und endet mit der ansteigenden Flanke der Ist-Frequenz I. Erzeugt wird dieser Impuls mit Hilfe der bereits beschriebenen Verknüpfung der beiden D-Flip-Flops $D_{R1}$ und $D_{R2}$ sowie der beiden NOR-Gatter G12 und G13. Dieser Nominallauf-Impuls $H\bar{o}$ schaltet die beiden Schalter S4 und S8 des Schaltgliedes über die Gatter G24 und G19 an. Der zweite Nominallauf-Impuls $H\dot{o}$ beginnt mit der ansteigenden Flanke der Soll-Frequenz $f_2$ und endet mit der absteigenden Flanke der Ist-Frequenz I und wird den beiden D-Flip-Flops DR3 und DR4 sowie mit Hilfe der beiden NOR-Gatter G14 und G15 erzeugt. Dieser Nominallauf-Impuls $H\dot{o}$ schaltet im Nominallauf-Betrieb über die beiden Gatter G22 und G18 der Ansteuerlogik die Schalter S3 und S7 des Schaltgliedes. Durch wechselweises Schalten dieser beiden Schalterpaare wird die in Fig. 4 dargestellte, an der ersten Wicklung 22 angelegte Spannung erzeugt. Wie bereits ausgeführt, wird die Breite der Impulse für die Arbeitswicklung 22 von der Phasenverschiebung zwischen der Soll-Frequenz $f_2$ und der Ist-Frequenz I bestimmt, während die Lage der Impulse für die Arbeitswicklung von der Zeitverzögerung $\Delta t$, die durch die Anzahl der D-Flip-Flops der zweiten Entstör- und Verzögerungsstufe 52 abhängig ist, bestimmt wird.

Hat der Läufer 21 aus irgendeinem Grunde am Ende des Selbstanlaufbetriebes nicht die für den Nominallauf-Betrieb erforderliche Drehzahl erreicht, so wird der Selbstanlaufbetrieb wiederholt. Da das Ausgangssignal V der ersten Entstör- und Verzögerungsstufe 51 bei Nichterreichen der nominalen Drehzahl weiterhin im Zustand L bleibt, sorgt die Verknüpfung der Ausgangssignale N und S der jeweils dritten T-Flip-Flops TR3 und TR6 des Wartezeitgliedes 7 und der Selbstanlaufstufe 8, die beide im Zustand L sind, am Ausgang des Gatters G9 für ein Signal, das über die beiden Gatter G10 und G11 zu einem Reset-Signal für die T-Flip-Flop-Kette TR1 bis TR6 führt, so dass sich der Selbstanlaufbetrieb wiederholen kann.

Wie in Fig. 2 dargestellt, schliessen die beiden Wicklungen 22 und 23 des reaktiven Motors 2 einen Winkel $\Delta 22, 23$ zwischen sich ein, der folgender Gleichung genügt: $\Delta 22, 23 = k \cdot \frac{\pi}{2} \varphi 1$ mit $k = 1, 3, 5$ und $\varphi 1 = (0 \ldots\ldots 0{,}4) \cdot \frac{\pi}{2}$.

Beispielsweise ergibt sich für $k = 3$ und $\varphi 1 = 0{,}27$ ein Winkel $\Delta 22, 23 = 221°$el, was für einen Läufer mit 2 Polpaaren einen geometrischen Versatz von etwa 110° bedeutet.

Eine Variante der Lösung mit zwei getrennten Wicklungen 22 und 23 des reaktiven Motors 2 ist in Fig. 6 dargestellt und besteht aus zwei Wicklungen mit 3 Anschlüssen für die beiden Wicklungen 22 und 23. In dieser Anordnung sind zwei Wicklungsenden der beiden Wicklungen 22 und 23 zusammengeschaltet, so dass zwei Schalter des Schaltgliedes 3 sowie die entsprechenden NAND-Gatter der Ansteuerlogik entfallen. Dies ist in Fig. 6 dadurch berücksichtigt worden, dass die beiden Schalter S2 und S4 zu einem Schalter S2, 4 sowie die beiden Schalter S5 und S7 zu einem Schalter S5, 7 zusammengefasst sind. Zusätzlich ist das eine Wicklungsende der Wicklung 22 mit dem Anschluss 3 während des Nominalbetriebes ständig mit dem Minuspol der Stromversorgung $U_{B-}$ verbunden, was dadurch berücksichtigt ist, dass der Schalter S5, 7 im Nominalbetrieb geschlossen bleibt. Zur Erfassung und Digitalisierung der Drehzahl des reaktiven Motors 2 ist das eine Wicklungsende der Wicklung 23 mit den positiven Eingängen der beiden Komparatoren 41 und 42 verbunden, deren negative Eingänge zum einen (Komparator 42) mit dem Minuspol der Stromversorgung $U_{B-}$, zum anderen (Komparator 41) an eine Referenzspannung $U_S$ angeschlossen sind.

Die Funktionsweise dieser Anordnung ergibt sich im Zusammenhang mit der zeitlichen Darstellung der Signale in Fig. 7 wie folgt:

In Fig. 7 sind

a) die Spannungen an den Wicklungen 23 und 22

b) die Signale an den Wicklungsenden 1, 2 und 3

c) die Ausgangssignale $f_1$, $f_2$ sowie $f_o$ der Selbstanlaufstufe

dargestellt.

Im Selbstanlaufbetrieb ergibt sich eine Signalfrequenz $f_o$, wie in Fig. 7 dargestellt, aus der die beiden anderen Frequenzen $f_1$ und $f_2$, wie oben beschrieben, erzeugt werden. In Anlehnung an die bereits oben beschriebene Einschalttabelle ergibt sich für diese vereinfachte Variante eine Einschalttabelle, die der obengenannten mit der Massgabe entspricht, dass die gemeinsamen Schalter S2, 4 und S5, 7 im Selbstanlaufbetrieb immer dann eingeschaltet sind, wenn einer der beiden Schalter S2, S4 bzw. S5, S7 eingeschaltet ist.

Im Nominallauf-Betrieb wird der gemeinsame Anschluss 3 der beiden Wicklungen 22 und 23 ständig an den Minuspol der Stromversorgung $U_{B-}$ durch den geschlossenen Schalter S5, 7 angeschlossen. Der Anschluss 1 der zweiten Wicklung 23 ist ständig mit den positiven Eingängen der Komparatoren 41 und 42 durch die geöffneten Schalter S1 und S6 verbunden. In dieser Anordnung wird der Schalter S3 synchron mit dem von der Nominallaufregeleinrichtung 62 abgegebenen Nominallaufsignal $H\dot{o}$ ein- und ausgeschaltet. Das zweite Nominallaufsignal $H\bar{o}$ wird in dieser Variante nicht mehr verwendet, da die erste Wicklung 22 nicht mehr umpolbar ist.

Mit dieser Variante ergeben sich dadurch Vereinfachungen, dass anstelle von 4 Wicklungsanschlüssen nur noch 3 Anschlüsse, anstelle von 8 Schaltern nur noch 6 Schalter und anstelle von 3 Widerständen zur Erzeugung der Referenzspannungen nur noch 2 Widerstände sowie zum Freilauf nur noch 6 Dioden anstelle von 8 Dioden erforderlich sind.

In Fig. 8 ist schematisch ein reaktiver Motor 2 dargestellt, der einen Läufer 21 mit durch Permanent-Magnete gebildeten Polen und einen nicht näher dargestellten Ständer mit zwei Wicklungen 22, 23 aufweist. Wird eine der beiden Wicklungen 22, 23 mit Impulsen beaufschlagt, so lässt sich der Läufer 21 auf eine der Polpaarzahl und der Frequenz entsprechende Drehzahl bringen. Die Umdrehungen des Läufers 21 werden für die Anwendung in zeithaltenden Geräten, wie beispielsweise Uhren über eine Welle und ein Getriebe auf ein Anzeigesystem übertragen, welches beispielsweise eine Analoganzeige mittels mehrerer Zeiger und einem Ziffernblatt ermöglicht.

Für die Erfassung der Drehzahl n und damit der Istfrequenz dient die Steuerwicklung 23 des Ständers als Sensorwicklung zur Abgabe einer drehzahlproportionalen Spannung $U_n$ für die Drehzahlregelung. Diese Steuerwicklung 23 liegt ebenso wie die Arbeitswicklung 22 im Einflussbereich der Magnetlinien der Pole des Läufers 21. Bei der Rotation des Läufers 21 schneiden die Magnetfeldlinien der Pole periodisch die Sensorwicklung 23, wodurch an den Wicklungsenden eine der Drehzahl n und damit der Istfrequenz des Läufers 21 proportionale, sinusförmige Spannung $U_n$ mit Nulldurchgängen, das sogenannte Sensorsignal ansteht. Diese drehzahlproportionale Spannung $U_n$ wird zusammen mit einer Vergleichsspannung $U_s$ an die Eingänge eines Vergleichsgliedes 4 gelegt, wo das Sensorsignal in Rechteckimpulse für die Drehzahlregelung umgesetzt wird, deren senkrechte Flanken an Schnittstellen mit der konstanten Vergleichsspannung $U_s$ liegen. Das im wesentlichen rechteckförmige Ausgangssignal i des Vergleichsgliedes 4, das der Istfrequenz entspricht, ist an den Eingang eines nachgeschalteten Entstörgliedes 521 gelegt, das zusätzlich mit einer ersten Taktfrequenz $f_1$ beaufschlagt ist. Das in Form einer mit der Taktfrequenz $f_1$ beaufschlagten Teilerkette aufgebaute Entstörglied 4 soll fehlerhafte Signale, die keine Nutzsignale der Istfrequenz sind, eliminieren. Dieses Entstörglied 521 gibt entstörte Signale $i_1$ sowohl an einen mit einer zweiten Taktfrequenz beaufschlagten Phasenkomparator 6 also auch an ein mit einer dritten Taktfrequenz $f_3$ beaufschlagten Verzögerungsglied 522 ab. Dem Phasenkomparator 6 wird an einem weiteren Eingang die für den Phasenvergleich erforderliche Sollfrequenz $f_s$ zugeführt. Am Ausgang des Phasenkomparators 6 stehen Impulsfolgen Q1 beziehungsweise Q3 zur Beschleunigung beziehungsweise zum Abbremsen des reaktiven Motors 2 an.

Das Verzögerungsglied 522 ist ebenfalls in Form einer mit der dritten Taktfrequenz $f_3$ beaufschlagten Teilerkette aufgebaut und gibt an seinen Ausgängen gegenüber dem entstörten Istfrequenz-Signal $i_1$ verzögerte Signale I sowie $\bar{I}$ ab. Die Ausgangssignale I, $\bar{I}$; $Q_1$, $Q_3$ des Verzögerungsgliedes 522 beziehungsweise des Phasenkomparators 6 sind an die Eingänge einer Verknüpfungslogik 10 gelegt, die durch logische Verknüpfung der eingegebenen Signale mittels einer Gatterschaltung am Ausgang Impulsfolgen abgibt, die über eine nachgeschaltete Ansteuerlogik 9, die ebenfalls aus einer bestimmten Anzahl von Gattern aufgebaut sein kann, mit einer Schaltstufe 3 verbunden sind, an der sowohl die Versorgungsspannung $\mp U_B$ als auch die Steuer- und Arbeitswicklung 22, 23 des reaktiven Motors 2 angeschlossen sind. Die Schaltstufe 3 verbindet gesteuert von den am Ausgang der Ansteuerlogik 9 anstehenden Impulsfolgen $T_n$ die Wicklungen 22, 23 des reaktiven Motors 2 mit dem einen oder anderen Pol der Spannungsquelle $+U_B$, $-U_B$.

Der gesamten Anordnung ist ein Generator zugeordnet, der einen Schwingquartz und einen Frequenzteiler 11 aufweist, an dem Rechteckimpulse mit den Frequenzen $f_s$, $f_1$–$f_3$ anstehen, die den beschriebenen Bauteilen als Taktfrequenzen zugeführt werden.

Die Funktionsweise der Anordnung nach Fig. 8 soll nachstehend anhand der zeitlichen Darstellung der einzelnen Signale in Figur 9 erfolgen.

Die in Fig. 9a und b dargestellten sinusförmigen Spannungen stellen die gegeneinander um 90° elektrisch versetzten Spannungen an der Steuerwicklung $U_{23}$ und an der Arbeitswicklung $U_{22}$ dar. Mit Hilfe des Vergleichsgliedes 4 wird mittels der eingestellten Referenzspannung $U_s$ eine rechteckförmige Ausgangsspannung i erzeugt (Fig. 9c), wobei die korrekte Drehrichtung des Läufers 21 und damit der Steuerwicklungs-Spannung $U_{23}$ mit einer ausgezogenen Linie dargestellt wurde und die der korrekten Drehrichtung entgegengesetzte Drehrichtung strichpunktiert dargestellt wurde. Dieses rechteckförmige Ausgangssignal i des Vergleichsgliedes 4 wird mittels des Entstörgliedes 521 von Störsignalen befreit und als Signal $i_1$ dem nachgeschalteten Verzögerungsglied 522 zugeführt, dessen Ausgangssignal I in Fig. 9d dargestellt ist. Dieses Signal ist gegenüber der ansteigenden beziehungsweise abfallenden Flanke des Istfrequenz-Signals i um eine Zeit $\Delta t$ verzögert. In Fig. 9e ist dieses um die Zeit $\Delta t$ verzögerte Signal für die der korrekten Drehrichtung entgegengesetzte Drehrichtung als Signal I* dargestellt.

Fig. 9f zeigt die rechteckförmigen Sollfrequenz-Signal $f_s$, deren Frequenz dem Zeitnormal der Uhr entspricht. Wie dieser zeitlichen Darstellung zu entnehmen ist, tritt die ansteigende Flanke des Sollfrequenz $f_s$ zum Zeitpunkt $t_1$ vor der ansteigenden Flanke des Istfrequenz-Signals i zum Zeitpunkt $t_2$ in der korrekten Drehrichtung auf. In diesem Zeitbereich zwischen den Zeitpunkten $t_1$ und $t_2$, d. h. mit der ansteigenden Flanke der Sollfrequenz $f_s$ beginnend und endend mit der ansteigenden Flanke des Istfrequenz-Signals i im negativen Halbwellenbereich und beginnend mit der abfallenden Flanke des Sollfrequenz-Signals $f_2$ und endend mit der abfallenden Flanke des Istfrequenz-Signals i im positiven Halbwellenbereich, werden der Arbeitswicklung 22 Beschleunigungsimpulse erteilt. Diese Beschleunigungsimpulse, die in Fig. 9g als Impulse A und B dargestellt sind, werden jedoch auf die Arbeitswicklung 22 nur dann gegeben, wenn im negativen Halbwellenbereich das verzögerte Signal I = low ist, beziehungsweise im positiven Halbwellenbereich das verzögerte Istfrequenz-Signal I = high ist. Würde innerhalb des Zeitbereichs, der zwischen den ansteigenden beziehungsweise abfallenden Flanken des Sollfrequenz-Signals $f_s$ und des Istfrequenz-Signals i liegt, das verzögerte Istfrequenz-Signal I ansteigen oder abfallen, so würde der Beschleunigungsimpuls A beziehungsweise B entsprechend mit der ansteigenden beziehungsweise abfallenden Flanke des verzögerten Istfrequenz-Signals I abfallen.

Eilt das Istfrequenz-Signal i dem Sollfrequenz-Signal $f_s$ vor, d. h. tritt die ansteigende Flanke des Istfrequenz-Signals i zum Zeitpunkt $t_3$ vor der ansteigenden Flanke des Sollfrequenz-Signals $f_s$ zum Zeitpunkt $t_4$ auf, so wird der Läufer 21 des reaktiven Motors 2 durch Kurzschliessen der Arbeitswicklung 22 abgebremst. Dieses Kurzschliessen der Arbeitswicklung 22 erfolgt mit der ansteigenden Flanke des Istfrequenz-Signals i und endet mit der ansteigenden Flanke des Sollfrequenz-Signals $f_s$ (Bereich C) und/oder mit der abfallenden Flanke des Istfrequenz-Signals i und der abfallenden Flanke des Sollfrequenz-Signals $f_s$ (Bereich D).

In den zeitlichen Darstellungen der Fig. 9h und i sind die Verhältnisse bei einer Drehrichtung des Läufers 21 entgegengesetzt der korrekten Drehrichtung dargestellt. Zum besseren Verständnis muss lediglich der Verlauf der Sollfrequenz-Signale $f_s$ von rechts nach links, d. h. in der eingezeichneten Peilrichtung gesehen werden. Da sich die Lage der Sollfrequenz-Signale $f_s$ gegenüber der korrekten Drehrichtung nicht verändert, werden im Bereich, wo das Sollfrequenz-Signal $f_s$ vor dem Istfrequenz-Signal i liegt, Impulse durch die Verknüpfung mit dem in Fig. 9e dargestellten verzögerten Istfrequenz-Signal I* für die entgegengesetzte Drehrichtung in den Bereichen E und F (Fig. 9i) erzeugt, die als Beschleunigungsimpulse auftreten, aber den Läufer 21 bremsen, da sie lediglich in der korrekten Drehrichtung beschleunigen sollen. Diese Wirkung wird dadurch erzielt, dass die Istfrequenz-Signale i als Steuerimpulse verwendet werden und durch die Bereiche des verzögerten Istfrequenz-Signals I* begrenzt werden.

Tritt anschliessend das Istfrequenz-Signal i vor dem Sollfrequenz-Signal $f_s$ auf, so werden Bremsimpulse G und H durch Kurzschliessen der Arbeitswicklung 22 erzeugt, die den Läufer 21 ebenfalls abbremsen, so dass die der korrekten Drehrichtung entgegengesetzte Drehrichtung nicht mehr möglich ist.

Das in Fig. 10 dargestellte Blockschaltbild eines Ausführungsbeispiels mit einem selbstanlaufenden Motor zeigt den reaktiven Motor 2, der einen Läufer 21 mit durch Permanent-Magnete gebildeten Polen und einen nicht näher dargestellten Ständer mit den beiden Wicklungen 22 und 23 aufweist. Analog zur Anordnung nach Fig. 1 ist für die Erfassung der Drehzahl n und zur Abgabe einer drehzahlproportionalen Spannung $U_n$ für die Drehzahlregelung beziehungsweise als Kriterium zur Einleitung eines Selbstanlaufbetriebes die Steuerwicklung 23 mit einem Vergleichsglied verbunden, an dem zwei Vergleichsspannungen $U_r$ und $U_s$ anliegen, die das an der Steuerwicklung abgegriffene sinusförmige Signal in zwei Rechteckimpulse für die Drehzahlregelung beziehungsweise für die Einleitung des Selbstanlaufbetriebes umsetzen. Die senkrechten Flanken der rechteckförmigen Signale liegen an den Schnittstellen mit den konstanten Vergleichsspannungen $U_r$ und $U_s$. Die im wesentlichen rechteckförmigen Ausgangssignale v und i des Vergleichsgliedes 4 sind an die Eingänge eines nachgeschalteten Entstör- und Verzögerungsgliedes 51 für das Ausgangssignal v beziehungsweise eines Entstörgliedes 521 für das Signal i gelegt. Das Entstör- und Verzögerungslied 51 für das Ausgangssignal v wird mit einer Taktfrequenz $f_5$ beaufschlagt, während das Entstörglied 521 für das Ausgangssignal i an eine Taktfrequenz $f_1$ gelegt wird. Das entstörte Ausgangssignal i wird als Istfrequenz-Signal $i_1$ sowohl an einen nachgeschalteten Phasenkomparator 6 als auch an ein Verzögerungsglied 522 abgegeben.

Das Verzögerungsglied 522 wird mit einer dritten Taktfrequenz $f_3$ beaufschlagt und gibt an seinen Ausgängen entstörte und verzögerte Istfrequenz-Signale I beziehungsweise negierte Signale $\bar{I}$ ab. Die Entstör- und Verzögerungsglieder 51, 521 und 522 für die Ausgangssignale v und i sind in diesem Ausführungsbeispiel zu einem gemeinsamen Entstör- und Verzögerungsglied 5 strichpunktiert zusammengefasst.

Der Phasenkomparator 6 wird zusätzlich zu dem entstörten Istfrequenz-Signal $i_1$ noch mit einer zweiten Taktfrequenz $f_2$ und mit einem für den Phasenvergleich erforderlichen Sollfrequenz-Signal $f_s$ sowie mit einem Umschaltsignal $\beta$ beaufschlagt. Die Ausgänge des Verzögerungsgliedes 522 und des Phasenkomparators 6 sowie das Umschaltsignal $\bar{\beta}$ sind mit den Eingängen eines Verknüpfungsgliedes 10 verbunden, das in bereits beschriebener Weise Brems- bzw. Beschleunigungssignale an seinem Ausgang an eine Ansteuerlogik 9 abgibt.

Einer Selbstanlaufstufe 8 werden neben dem entstörten und verzögerten Selbstanlaufsignal V, das von der Entstör- und Verzögerungsstufe 51 abgegeben wird, zusätzlich eins oder mehrere voneinander verschiedene Frequenzsignale $f_{onz}$ sowie ein vorgebbares Signal N eingegeben. Das vorgebbare Signal N wird in einem Wartezeitglied 7 erzeugt, das aus einer oder mehreren Verzögerungsstufen besteht und dem eine vierte Taktfrequenz $f_4$ eingegeben wird. Die Reset-Eingänge aller Verzögerungsstufen des Wartezeitgliedes 7 werden synchron in Abhängigkeit von dem ebenfalls eingegebenen, entstörten und verzögerten Selbstanlaufsignal V und von dem Umschaltsignal $\beta$ zurückgesetzt.

Von der Selbstanlaufstufe 8 werden neben dem Umschaltsignal $\beta$ beziehungsweise dem negierten Umschaltsignal $\bar{\beta}$ zwei Impulsfolgen $F_1$ beziehungsweise $\overline{F_2}$ sowie $F_2$ beziehungsweise $\overline{F_2}$ zusammen mit dem Ausgangssignal der Verknüpfungslogik 10 der nachgeschalteten Ansteuerlogik 9 zugeführt, an deren Ausgang Impulsfolgen $T_n$, $S_n$ zur Ansteuerung von Schaltern einer nachgeschalteten Schaltstufe 3, die sowohl mit einer Spannungsquelle $+U_B$, $-U_B$ als auch mit den Wicklungen 22 und 23 des reaktiven Motors 2 verbunden ist. Die Schaltstufe 3 verbindet dabei die Arbeitswicklung 22 des reaktiven Motors 2 beziehungsweise im Selbstanlaufbetrieb sowohl die Arbeitswicklung 22 als auch die Steuerwicklung 23 des reaktiven Motors 2 mit dem einen oder anderen Pol der Spannungsquelle $+U_B$ bzw. $-U_B$.

Analog zur Anordnung nach Fig. 8 ist auch dieser Anordnung ein Generator zugeordnet, der einen Schwingquartz 1 und einen Frequenzteiler 11 aufweist, an dem Rechteck-Impulse mit den Taktfrequenzen $f_1$–$f_5$ und den Frequenzen $f_{onz}$ und der Frequenz $f_s$ für das Sollfrequenz-Signal anstehen und die an den vorgenannten Stellen den entsprechenden Bauteilen der Anordnung zugeführt werden.

Die der Fig. 11 zu entnehmende detaillierte Darstellung der Steuer- und Regelkreisanordnung zeigt in strichpunktierter Einfassung die in Fig. 3 dargestellten Elemente.

Das Vergleichsglied 4 enthält zwei Komparatoren 41 und 42, deren positive Eingänge an das eine Ende der Steuerwicklung 23 angeschlossen sind. Während der negative Eingang des ersten Komparators 41 an die eine Referenzspannung $U_s$ angeschlossen ist, ist der negative Eingang des zweiten Komparators 42 an die andere Referenzspannung $U_r$ und an das andere Wicklungsende der Steuerwicklung 23 angeschlossen. Die Referenzspannungen $U_r$ bzw. $U_s$ werden an einem Widerstandsteiler mit den Widerständen R1 bis R3 abgegriffen.

Die Ausgänge der beiden Komparatoren 41 und 42 mit den Ausgangssignalen v und i sind getrennt auf die eine Entstör- und Verzögerungsstufe 51 bzw. auf die Entstörstufe 521 geführt. Die Entstör- und Verzögerungsstufe 51 enthält 4 in Reihe geschaltete, getaktete Flip-Flops D1–D4, deren Takteingänge $C_k$ synchron mit einer festlegbaren fünften Taktfrequenz $f_5$, in diesem Fall einer Frequenz von 256 Hz, beaufschlagt sind. Der Eingang des ersten getakteten Flip-Flops D1 ist mit dem Ausgang des ersten Komparators 41 verbunden. Die Ausgänge Q der getakteten Flip-Flops D1–D3 sind jeweils mit dem Eingang des nachfolgenden getakteten Flip-Flops D2–D4 verbunden. Der Ausgang des letzten Flip-Flops D4 ist an den Eingang eines nachgeschalteten ersten NAND-Gatters G24 gelegt, an dessen anderem Eingang der Ausgang des jeweils ersten getakteten Flip-Flops D1 angeschlossen ist. An die Eingänge eines zweiten NAND-Gatters G26 sind die negierten Ausgänge $\overline{Q}$ des ersten bzw. des letzten getakteten Flip-Flops D1 bzw. D4 angeschlossen.

Das Entstörglied 521 enthält drei in Reihe geschaltete getaktete Flip-Flops D5–D7, deren Takteingänge $C_k$ synchron mit einer ersten Taktfrequenz $f_1$, in diesem Fall einer Frequenz von 1024 Hz, beaufschlagt sind. Entsprechend zur Entstör- und Verzögerungsstufe 51 ist der Eingang des ersten getakteten Flip-Flops D5 mit dem Ausgang des zweiten Komparators 42 und damit mit dem Istfrequenz-Signal i verbunden. Die Ausgänge Q der getakteten Flip-Flops D5 und D6 sind jeweils mit dem Eingang des nachfolgenden getakteten Flip-Flops D6 bzw. D7 verbunden. Der Ausgang des letzten Flip-Flops D7 ist an den Eingang eines nachgeschalteten ersten NAND-Gatters G28 gelegt, an dessen anderem Eingang der Ausgang des ersten getakteten Flip-Flops D5 angeschlossen ist. An die Eingänge eines zweiten NAND-Gatters G30 sind die negierten Ausgänge $\overline{Q}$ des ersten und letzten getakteten Flip-Flops D5 und D7 angeschlossen.

Das Verzögerungsglied 522 das entstörte Istfrequenz-Signal $i_1$ ist analog zur Entstör- und Verzögerungsstufe 51 aufgebaut und enthält die getakteten Flip-Flops D8–D11, deren Takteingänge $C_k$ synchron mit einer dritten Taktfrequenz $f_3$, in diesem Fall einer Frequenz von 256 Hz, beaufschlagt sind. Allen drei Gliedern 51, 521 und 522 ist folgende Anordnung gemeinsam: Die Ausgänge der beiden ersten NAND-Gatter G24, G26; G28, G30 und G35, G36 sind an den Eingang eines dritten bzw. vierten NAND-Gatters G25, G27; G29, G31 bzw. G37, G38 gelegt, deren anderer Eingang jeweils mit dem Ausgang des jeweils anderen NAND-Gatters G25 bzw. G27, G29 bzw. G31, G37 bzw. G38 verbunden ist. Das Ausgangssignal V der Entstör- und Verzögerungsstufe 51, das identisch ist mit Ausgangssignal des NAND-Gatters G25 wird an den Eingang der nachgeschalteten Selbstanlaufstufe 8 angeschlossen. Das entstörte Istfrequenz-Signal $i_1$, das identisch ist mit dem Ausgangssignal des NAND-Gatters G29 – wie bereits beschrieben –, wird sowohl an den Eingang des Phasenkomparators 6 als auch an den Eingang der Verzögerungsstufe 522 angeschlossen. Die beiden von den NAND-Gattern G37 und G38 abgegebenen entstörten und verzögerten Ausgangssignale I und $\overline{I}$ sind an die Eingänge der nachgeschalteten Verknüpfungslogik 10 gelegt.

Der Phasenkomparator 6 enthält zwei getaktete Flip-Flops D14, D15, deren Takteingänge $C_k$ mit einer zweiten Taktfrequenz $f_s$ von 4096 Hz beaufschlagt sind. Der Eingang des ersten getakteten Flip-Flops D14 ist mit dem Sollfrequenz-Signal $f_s$ von beispielsweise 16 Hz beaufschlagt, während an den Eingang des zweiten getakteten Flip-Flops D15 das entstörte Istfrequenz-Signal $i_1$ gelegt ist. Die Ausgänge Q der beiden getakteten Flip-Flops D14 und D15 sind an den einen Eingang je eines nachgeschalteten Exklusiv-ODER-Gatters G39 und G40 gelegt, deren andere Eingänge mit dem Sollfrequenz-Signal $f_s$ bzw. mit dem entstörten Istfrequenz-Signal $i_1$ beaufschlagt sind. Die Ausgänge der beiden Exklusiv-ODER-Gatter G39, G40 sind an den einen Eingang je eines nachgeschalteten NAND-Gatters G41 bzw. G42 und über einen Inverter G43 bzw. G44 an den anderen Eingang des jeweils anderen NAND-Gatters G42 bzw. G41 angeschlossen. Die Ausgänge dieser beiden NAND-Gatter G41 und G42 werden zusammen mit der über einen Inverter G45 geführten zweiten Taktfrequenz $f_2$ und dem Umschaltsignal $\beta$ einem

Schieberegister zugeführt. Dieses Schieberegister umfasst 3 J/K-Flip-Flops J1–J3 sowie 4 ODER-Gatter, G46, G48, G49, G51 sowie zwei weitere Inverter G47 und G50. Die Setz-Eingänge S der J/K-Flip-Flops J1–J3 werden mit dem Umschaltsignal β beaufschlagt, während die Takteingänge $C_K$ der Flip-Flops an die invertierte Taktfrequenz $f_2$ angeschlossen sind. Die J-Eingänge der J/K-Flip-Flops J1–J3 sind an die Ausgänge der ODER-Gatter G46, G48 bzw. an den Ausgang des Inverters G50 angeschlossen. Die beiden ODER-Gatter G46 und G48 und der Inverter G50 sind an den Ausgang des ersten NAND-Gatters G41 angeschlossen. Die beiden anderen Eingänge der ODER-Gatter G46 und G48 sind an die negierten Ausgänge $\overline{Q}$ des zweiten J/K-Flip-Flops J2 bzw. des ersten J/K-Flip-Flops J1 angeschlossen. Zyklisch vertauscht sind die K-Eingänge der drei J/K-Flip-Flops J1–J3 mit den Ausgängen eines Inverters G47 bzw. zweier ODER-Gatter G49 bzw. G51 verbunden. Je ein Eingang der beiden ODER-Gatter G49 und G51 sowie der Eingang des Inverters G47 sind an den Ausgang des zweiten NAND-Gatters G42 angeschlossen. Die beiden anderen Eingänge der ODER-Gatter G49 und G50 sind mit den Ausgängen Q des zweiten bzw. dritten J/K-Flip-Flops J2 und J3 verbunden. Zur weiteren Signalverarbeitung werden die Ausgänge $Q_1$ und $Q_3$ des ersten bzw. dritten J/K-Flip-Flops der Verknüpfungslogik 10 zugeführt.

Die Funktionsweise des Phasenkomparators 6 wird nachstehend kurz erläutert:

Mit den beiden getakteten Flip-Flops D14 und D15 sowie den UND-Gattern G39, G40 sowie den Invertern G43, G44 und den NAND-Gattern G41 und G42 werden zwei Impulsfolgen miteinander verglichen. Die eine Impulsfolge wird von dem Sollfrequenz-Signal $f_s$ und die andere Impulsfolge vom entstörten Istfrequenz-Signal $i_1$ abgeleitet. Da beide Frequenzen $f_s$ und $i_1$ im Normalfall gegeneinander phasenverschoben sind, werden abhängig von der Phasenverschiebung zwischen den beiden Frequenzen Signale erzeugt, die zur Beschleunigung bzw. zur Abbremsung des Läufers 21 des reaktiven Motors 2 entsprechend der zeitlichen Darstellung der Fig. 2 führen. Das Schieberegister ist in diesem Ausführungsbeispiel erforderlich, um die Phasenverschiebung zwischen den Sollfrequenz- und den Istfrequenz-Signalen $f_s$ und $i_1$ nach einem eingeleiteten Selbstanlaufbetrieb zu speichern. Anstelle des Schieberegisters kann selbstverständlich auch ein Aufwärts-Abwärtszähler verwendet werden. Die Anzahl der J/K-Flip-Flops in dem Schieberegister kann von der in diesem Ausführungsbeispiel gewählten Zahl 3 auf n vergrössert werden, so dass die vom Schieberegister zur Drehzahlregelung abgegebenen Signale $Q_1$ und $Q_3$ am Ausgang einer Kette erscheinen, die mehr als drei J/K-Flip-Flops beinhaltet. Mit einer vergrösserten Anzahl von J/K-Flip-Flops wird das Erinnerungsvermögen des Schieberegisters für die Lage der Sollfrequenz-Signale gegenüber der Lage der Istfrequenz-Signale vergrössert. Die Ausgangssignale I, $\overline{I}$ sowie $Q_1$, $Q_3$ der Verzögerungsstufe 522 bzw. des Phasenkomparators 6 sowie das negierte Umschaltsignal $\overline{\beta}$ und die Ausgänge der jeweils vorangeschalteten NAND-Gatter werden entsprechend der nachstehenden Aufstellung an die Eingänge der NAND-Gatter der Verknüpfungslogik 10 geschaltet:

a) Gatter G52: Signal $\overline{I}$ und $Q_3$
b) Gatter G56: Signal I und $Q_3$
c) Ausgangssignal Gatter G52 und Signal $Q_1$
d) Gatter G57: Ausgangssignal Gatter G56 und Signal $Q_1$
e) Gatter G60: Signal $\overline{I}$, Signal $Q_3$, Umschaltsignal $\overline{\beta}$
f) Gatter G54: Ausgangssignal des Gatters G53 und Umschaltsignal $\overline{\beta}$
g) Gatter G61: Signal $Q_3$, Signal I und Umschaltsignal $\overline{\beta}$
h) Gatter G58: Ausgangssignal des Gatters G57 und Umschaltsignal β

Die Ausgangssignale β, $F_1$, $\overline{F_1}$ und $F_2$, $\overline{F_2}$ der Selbstanlaufstufe 8 und die Ausgangssignale der Verknüpfungslogik 10 werden in der nachgeschalteten Ansteuerlogik 9 mittels 10 NAND-Gatter logisch zusammengefasst. An die Eingänge eines ersten NAND-Gatters G6 werden die Signale $F_2$, $F_1$ und das Umschaltsignal β angeschlossen. An ein zweites NAND-Gatter G7 werden ebenfalls das Umschaltsignal β und die Signale $F_1$ und $\overline{F_2}$ angeschlossen. Ein drittes NAND-Gatter G9 erhält die Signale $\overline{F_2}$ und $\overline{F_1}$ sowie das Umschaltsignal β, das ebenfalls einem vierten NAND-Gatter G11 zusammen mit den Signalen $\overline{F_1}$ und $F_2$ zugeführt wird. Die Ausgangssignale der beiden ersten NAND-Gatter G6 und G7 werden über zwei Inverter G2 und G3 an die nachgeschaltete Schaltstufe 3 abgegeben. Das Ausgangssignal des dritten NAND-Gatters G9 wird an je einen Eingang zweier nachgeschalteter NAND-Gatter G59 und G63 gelegt, deren andere Eingänge mit den Ausgangssignalen der NAND-Gatter G61 und G58 der Verknüpfungslogik verbunden sind. Das Ausgangssignal des NAND-Gatters G11 wird an die Eingänge zweier weiterer NAND-Gatter G55 und G62 gelegt, deren andere Eingänge mit den beiden anderen Ausgangssignalen der NAND-Gatter G60 und G54 der Verknüpfungslogik 10 verbunden sind.

Die Ausgänge T5, T6 bzw. S3, S4, S7 und S8 der Ansteuerlogik 9 dienen zur Ansteuerung von acht Schaltern S1–S8 der Schaltstufe 3, deren Schaltanschlüsse in zyklischer Vertauschung jeweils an dem positiven oder negativen Batterieanschluss $+U_B$ und $-U_B$ sowie dem einen oder anderen Wicklungsende der Steuer- und Arbeitswicklung 22 oder 23 im Selbstanlaufbetrieb bzw. der Arbeitswicklung 22 im Regelungsbetrieb des reaktiven Motors 2 angeschlossen sind. Dabei steuert jeweils ein Ausgangssignal T5, T6 bzw. S3, S4, S7 oder S8 zwei Schalter an, die an dem einen oder anderen Batteriepol und dem einen oder anderen Wicklungsende einer der beiden Wicklungen 22 oder 23 angeschlossen sind. Die in der Schaltstufe angeordneten Dioden D1–D8 sind den beiden Wicklungen 22 und 23 so parallel geschaltet, dass die in den Wicklungen 22 und 23 gespeicherte magnetische Energie nach Abschalten der Schalter S1–S8 an die speisende Batterie zurückgeliefert werden kann.

Die Umdrehungen des Motorläufers 21 werden über eine nicht näher dargestellte Welle auf ein Getriebe und von diesem über eine weitere Welle auf ein Anzeigesystem übertragen, welches beispielsweise eine Analoganzeige mittels mehrerer Zeiger und einem Ziffernblatt ermöglicht.

Die Funktionsweise des erfindungsgemässen Verfahrens und der erfindungsgemässen Anordnung gemäss diesem Ausführungsbeispiel soll nachstehend kurz erläutert werden.

Bei der Rotation des Läufers 21 des reaktiven Motors 2 schneiden die Magnetlinien der Pole N und S periodisch die Magnetfeldlinien der Steuerwicklung 23, wodurch eine sinusförmige Spannung mit Nulldurchgängen, das sogenannte Sensorsignal, erzeugt wird. Durch Vergleich mit den Referenzspannungen $U_r$ und $U_s$ in den beiden Komparatoren 41 und 42, die auch als Impulsformer bezeichnet werden können, wird das Sensorsignal in Rechteck-Impulse umgesetzt, deren senkrechte Flanken an den Schnittpunkten des Sensorsignals mit der Referenzspannung $U_r$ und $U_s$ liegen.

In den Bereichen, wo das Sensorsignal grösser als die jeweilige Referenzspannung $U_r$ bzw. $U_s$ ist, wird ein Rechtecksignal v bzw. i abgegeben. Die Komparatoren 41 und 42 digitalisieren daher das Sensorsignal, so dass die Ausgangssignale v und i am Ausgang der beiden Komparatoren 41 und 42 im wesentlichen rechteckförmig sind. Das Signal v ist H (für hohes Potential) nur dann, wenn das Sensorsignal grösser als die Referenzspannung $U_s$ ist. Damit kann zum Beispiel gemeldet werden, wenn die Läuferdrehzahl unter einer der Referenzspannung $U_s$ entsprechenden Drehzahl absinkt. Diese Referenzspannung $U_s$ dient aber auch als erhöhter Störpegelabstand, so dass eventuelle Störungen in der Steuerwicklung 23, die kleiner als die Referenzspannung $U_s$ sind, nicht in dem Ausgangssignal v am Ausgang des ersten Komparators 41 erscheinen. Die digitalisierten Ausgangssignale v und i der Komparatoren 41 und 42 werden auf die Eingänge der nachgeschalteten Entstör- und Verzögerungsstufe 51 bzw. der nachgeschalteten Entstörstufe 521 gegeben, die auf der Basis einer Verzögerungsstufe arbeiten, wobei die Verzögerung des Entstörgliedes 521 wegen der hohen an ihm anliegenden Taktfrequenz vernachlässigbar ist. Nur für Zustände (L) (H), die länger dauern als eine Zeitspanne $\Delta t$, wird ein Wechsel in dem Signal nach der betreffenden Entstör- und Verzögerungsstufe bzw. der Entstörstufe erscheinen, so dass Störimpulsspitzen in der Form L–H–L oder H–L–H in den Ausgangssignalen v und i der beiden Komparatoren 41 und 42, die kürzer sind als die genannte Zeitspanne $\Delta t$, durch das betreffende Entstör- und Verzögerungsglied 51 bzw. das Entstörglied 521 nicht weitergeleitet werden. Das Ausgangssignal V der Entstör- und Verzögerungsstufe 51 erfüllt dabei folgende Funktion. Sinkt die Drehzahl des Läufers 21 des reaktiven Motors 2 unter eine bestimmte Grenze, so dass das Ausgangssignal V der Entstör- und Verzögerungsstufe 51 eine gewisse Zeitspanne nicht mehr auf H (für hohes Potential) kommt, bleibt während dieser Zeitspanne der Reset-Eingang R der T-Flip-Flops TR1 bis TR4 des Wartezeitgliedes 7 und der Selbstanlaufstufe 8 auf L (für niedriges Potential). Dabei ist vorauszusetzen, dass das Umschaltsignal $\beta$ im normalen Betrieb vom vorangegangenen Zustand her (L) war und wenigstens eins der beiden Ausgangssignale N oder S des Wartezeitgliedes 7 bzw. des dritten T-Flip-Flops TR5 der Selbstanlaufstufe 8 im Zustand (H) war. Bleibt das Signal während einer bestimmten Zeitspanne im Zustand (L), zum Beispiel weil der Läufer 21 des reaktiven Motors 2 sich nicht mehr bewegt, so wird der Ausgang N des zweiten T-Flip-Flops TR2 des Wartezeitglieds 7 in den Zustand (L) gesetzt und setzt seinerseits die NAND-Gatter G14 und G15, so dass das Umschaltsignal $\beta$ in den Zustand (H) und das negierte Umschaltsignal $\bar{\beta}$ in den Zustand (L) gesetzt wird. Nachdem $\beta$ H geworden ist und solange das Umschaltsignal $\beta$ in diesem Zustand verbleibt, wird ein Setzen auf Null der T-Flip-Flops TR1–TR5 verhindert, da der Ausgang des NOR-Gatters G34, d. h. das Reset-Signal für die T-Flip-Flops TR1–TR4, wegen $\beta$ = H im Zustand (L) verbleibt. Solange das Umschaltsignal $\beta$ im Zustand (H) bleibt, dauert der Selbstanlaufbetrieb nach dem Prinzip eines Schrittmotors mit zwei Wicklungen an. Während dieser Zeit nimmt das von dem NOR-Gatter G16 in der Selbstanlaufstufe 8 abgegebene Frequenzsignal $F_o$ abhängig von dem Zeitpunkt innerhalb des Bereiches, wo das Umschaltsignal $\beta$ = H ist, verschiedene Werte an. Die verschiedenen Werte werden mit Hilfe der T-Flip-Flops TR3–TR5 und der Gatter G19, G20 sowie der Inverter G22 und G23 aus den zugeführten Frequenz-Signalen von 16 und 32 Hz erzeugt. So beträgt das Ausgangssignal $F_o$ im ersten Bereich zum Beispiel 16 Hz und im zweiten Bereich 32 Hz. Die Zeitdauer dieser Bereiche ist von der dem ersten T-Flip-Flop TR1 des Wartezeitgliedes 7 zugeführten Taktfrequenz von 8 Hz und von der Anzahl der T-Flip-Flops der gesamten Kette TR1–TR5 abhängig. Mit der veränderlichen Frequenz $F_o$ wird in den nachgeschalteten Frequenz-Untersetzerstufen D12 und D13 die Frequenzfolge $F_1$ bzw. $F_2$ erzeugt, die die halbe Frequenz bzw. eine Viertel der Frequenz des Signals $F_o$ aufweisen. Die Frequenzsignale $F_1$ und $F_2$ werden zusammen mit dem Umschaltsignal $\beta$ der nachgeschalteten Ansteuerlogik 9 eingegeben, wo sie mit Hilfe der NAND-Gatter in dem Bereich, wo das Umschaltsignal $\beta$ = H die Schalter S1–S8 des Schaltgliedes 3 in der Weise ansteuern, dass die obengenannten Bedingungen erfüllt sind. Auf diese Weise werden die Wicklungen 22 und 23 des reaktiven Motors 2 in bestimmten Bereichen mit ansteigender Frequenz im Selbstanlaufbetrieb beaufschlagt. Diese Selbstanlaufsteuerung erhöht die Drehzahl des Läufers 21 von zum Beispiel 0 auf 8 Umdrehungen pro Sekunde, da die Impulsreihe mit der Frequenz von 16 Hz bei einem Läufer mit zwei Polpaaren die Drehzahl von 8 Umdrehungen pro Sekunde erzeugt. Die Umschaltzeitpunkte im Selbstanlaufbetrieb von einer Frequenz zur anderen können dabei beliebig festgelegt werden.

Wird das Ausgangssignal S des dritten T-Flip-Flops TR5 der Selbstanlaufstufe 8 am Ende des letzten Bereiches in den Zustand (L), so springt das Umschaltsignal β auf L und das negierte Umschaltsignal $\bar{\beta}$ auf H, was eine Änderung des bisherigen Selbstanlaufbetriebes in den Drehzahl-Regelungsbetrieb des reaktiven Motors 2 bedeutet. Im Drehzahl-Regelungsbetrieb dient die Steuerwicklung 23 des Motors 2 als sogenannte «Pick-up»-Spule, deren Ausgangssignale zu den Signalen V und I, wie oben beschrieben, führen. Da das negierte Umschaltsignal $\bar{\beta}$ nach Beendigung des Selbstanlaufbetriebes in den Zustand (H) gesprungen ist, werden die Ausgänge der Verknüpfungslogik 10 wirksam geschaltet und der Drehzahl-Regelungsbetrieb kann, wie oben geschildert, die Drehzahl-Konstanz des reaktiven Motors, wie oben beschrieben, regeln.

Während des Selbstanlaufbetriebes befindet sich das Umschaltsignal β im Zustand (H) und setzt damit die J/K-Flip-Flops des Schieberegisters auf hohes Potential. Jeder Sollfrequenz-Signalwechsel von H nach L oder von L nach H entsprechend den ansteigenden bzw. abfallenden Flanken des Sollfrequenz-Signals bewirkt einen weiteren Zählschritt im Schieberegister und jeder Istfrequenz-Signalwechsel, d. h. jede ansteigende aber abfallende Flanke des Istfrequenz-Signals ergibt einen rückwärtigen Zählschritt im Schieberegister bzw. im Aufwärts-Abwärts-Zähler. Wird der Ausgang $Q_3$ des Phasenkomparators 6 in den Zustand (H) gesetzt, dann wird die Arbeitswicklung 22 wie folgt an den positiven bzw. negativen Pol der Batterie $\mp U_B$ angeschlossen:

Ist das entstörte und verzögerte Ist-Frequenz-Signal I im Zustand (H), so wird der Wicklungsanschluss 2 der Arbeitswicklung 22 an den Pluspol der Batterie und der Wicklungsanschluss 32 der Arbeitswicklung 22 an den Minuspol der Batterie $U_B$ angeschlossen.

Ist das entstörte und verzögerte Istfrequenz-Signal I im Zustand (L), so wird der Wicklungsanschluss 2 der Arbeitswicklung 22 an den Minuspol der Batterie und der Wicklungsanschluss 32 an den Pluspol der Batterie $U_B$ angeschlossen.

Befindet sich dagegen der Ausgang $Q_1$ des Phasenkomparators 6 im Zustand L, dann wird die Arbeitswicklung 22 kurzgeschlossen, zum Beispiel in der Weise, dass der Wicklungsanschluss 2 und der Wicklungsanschluss 32 an den Minuspol der Batterie $U_B$ angeschlossen werden.

Hat der Läufer 21 aus irgendeinem Grunde am Ende des Selbstanlaufbetriebes nicht die für den Drehzahl-Regelungsbetrieb erforderliche Drehzahl erreicht, so wird der Selbstanlaufbetrieb wiederholt. Da das Ausgangssignal V der Entstör- und Verzögerungsstufe 51 bei Nichterreichen der Nenndrehzahl weiterhin im Zustand L bleibt, sorgt die Verknüpfung der Ausgangssignale N und S des Wartezeitgliedes 7 und des dritten T-Flip-Flops TR5 der Selbstanlaufstufe 8, die beide im Zustand L sind, am Ausgang des Gatters G32 für ein Signal, das über die beiden nachgeschalteten Gatter G33 und G34 zu einem Reset-Signal für die T-Flip-Flop-Kette TR1–TR4 führt, so dass sich der Selbstanlaufbetrieb wiederholen kann.

In Fig. 12 ist ein aus einer Anzahl von x-Flip-Flops bestehendes Schieberegister schematisch dargestellt. Das in Fig. 11 dargestellte detaillierte Schaltbild der Steuer- und Regelanordnung für einen reaktiven Motor mit Selbstanlauf weist im Phasenkomparator 6 ein Schieberegister auf, das aus drei J/K-Flip-Flops zusammengesetzt ist. Die Anzahl der J/K-Flip-Flops im Schieberegister kann auf eine Anzahl x vergrössert werden, so dass die verschiedenen Steuersignale $Q_A$, $Q_B$, $Q_C$ in einer Kette erscheinen, die x J/K-Flip-Flops beinhaltet. Dadurch wird das Erinnerungsvermögen für die Lage der Sollwert-Signale vor oder nach den Istwert-Signalen vergrössert und die Fähigkeit der gesamten Anordnung, verlorengegangene Impulse nachzuholen, verbessert. Das in Fig. 5 dargestellte Schieberegister enthält demnach x-Flip-Flops, denen die Soll- und Istwert-Signale zugeführt werden, wobei die ersten m-Flip-Flops der Speicherung und Abgabe von Bremsimpulsen, die Flip-Flops von m+1 bis n–1 der Speicherung von Warteimpulsen, die Flip-Flops n bis x der Speicherung und Abgabe von Beschleunigungsimpulsen im Bereich der positiven Polarität der an der Antriebswicklung anliegenden Spannung und die Flip-Flops von p bis x der Speicherung und Abgabe von zusätzlichen Beschleunigungsimpulsen auch in der negativen Polarität der an der Antriebswicklung anliegenden Spannung dienen. Die Ausgangsimpulse $Q_A$, $Q_B$, $Q_C$ werden in dem Ausführungsbeispiel am m-ten, n-ten, p-ten Flip-Flops der Kette abgegriffen.

Jeder Sollwertwechsel von H nach L oder L nach H ergibt einen weiteren Schritt in der Kette der Flip-Flops in Richtung des x-ten Flip-Flops und jeder Istwertwechsel von H nach L oder L nach H ergibt einen weiteren Schritt in der Kette der Flip-Flops in Richtung des ersten Flip-Flops. Damit kann die Regelungsempfindlichkeit zur Abgabe von Brems- und Beschleunigungsimpulsen sowohl in positiver als auch in negativer Polarität beliebig fein eingestellt werden.

Das in Fig. 13 dargestellte detaillierte Schaltbild der Steuer- und Regelanordnung für einen reaktiven Motor mit Selbstanlauf entspricht weitgehend der detaillierten Schaltung nach Fig. 4. Demzufolge sind der reaktive Motor 2, die Schaltstufe 3, das Vergleichsglied 4, das Entstör- und Verzögerungsglied 5 sowie die Ansteuerlogik 9 nicht näher beziffert worden. Abweichungen gegenüber der Schaltung nach Fig. 4 in dem Phasenkomparator 6, in der Selbstanlaufstufe 8 und im Verknüpfungsglied 10 werden nachstehend näher erläutert.

Der Phasenkomparator 6 enthält zwei getaktete Flip-Flops D14, D15, deren Takteingänge $C_k$ mit der zweiten Taktfrequenz $f_2$ von 4096 Hz beaufschlagt sind. Der Eingang des ersten getakteten Flip-Flops D14 ist mit dem Sollfrequenz-Signal $f_s$ von beispielsweise 16 Hz beaufschlagt, während an den Eingang des zweiten getakteten Flip-Flops D15 das entstörte Istgrequenz-Signal $i_1$ gelegt ist. Die Ausgänge Q der beiden getakteten Flip-Flops D14 und D15 sind an den einen Eingang je eines nachgeschalteten Exklusiv-ODER-Gatters G39 und G40 gelegt, deren andere Eingänge mit dem Sollfrequenz-Signal $f_s$ bzw. mit dem entstörten Istfrequenz-Signal $i_1$ beaufschlagt sind. Die Ausgänge der beiden Exklusiv-ODER-Gatter G39 und G40 sind an den einen Eingang je eines nachgeschalteten NAND-Gatters G41 bzw. G42 und über je einen Inverter G43 bzw. G44 an den anderen Eingang des jeweils anderen NAND-Gatters G42 bzw. G41 angeschlossen. Die Ausgänge dieser beiden NAND-Gatter G41 und G42 werden zusammen mit der über einen Inverter G45 geführten zweiten Taktfrequenz $f_2$ und dem Umschaltsignal dem aus sechs J/K-Flip-Flops J1–J6 sowie zehn ODER-Gatter G70–G79 sowie zwei weitere Inverter G80 und G81 umfasst. Die Setz-Eingänge S der J/K-Flip-Flops J1–J6 werden mit dem Umschaltsignal $\beta$ beaufschlagt, während die Takteingänge $C_k$ der Flip-Flops J1–J6 an die invertierte Taktfrequenz $f_2$ angeschlossen sind. Der J-Eingang des ersten J/K-Flip-Flops J1 ist an den Ausgang des einen Inverters G81 und die J-Eingänge des zweiten bis sechsten J/K-Flip-Flops J2–J6 sind an die Ausgänge der ODER-Gatter G70–G74 angeschlossen. Die K-Eingänge der ersten fünf J/K-Flip-Flops J1–J5 sind an die Ausgänge weiterer ODER-Gatter G75–G79 und der K-Eingang des sechsten J/K-Flip-Flops J6 an den Ausgang des weiteren Inverters G80 angeschlossen. Während der eine Eingang der ausgangsseitig mit den J-Eingängen verbundenen ODER-Gatter G70–G74 und der Eingang des einen Invertes G81 an den Ausgang des ersten NAND-Gatters G41 angeschlossen ist, sind die einen Eingänge der mit den K-Eingängen verbundenen ODER-Gatter G75–G79 und der Eingang des weiteren Inverters G80 mit dem Ausgang des zweiten NAND-Gatters G42 verbunden. Der weitere Eingang der mit den J-Eingängen der J/K-Flip-Flops verbundenen ODER-Gatter G70–G74 ist an den negierten Ausgang $\bar{Q}$ des jeweils vorangestellten J/K-Flip-Flops J1–J5 angeschlossen. Die weiteren Eingänge der mit den K-Eingängen der J/K-Flip-Flops J1–J5 verbundenen ODER-Gatter G75–G79 sind an den Ausgang Q des jeweils nachgestellten J/K-Flip-Flops J2–J6 angeschlossen. An den Ausgängen Q des dritten, vierten und fünften J/K-Flip-Flops J3–J5 werden die entsprechenden Brems- bzw. Beschleunigungsimpulse $Q_A$, $Q_B$ und $Q_C$ an die nachgeschaltete Verknüpfungslogik 10 ab.

Mittels der acht NAND-Gatter der Verknüpfungslogik 10 werden die Ausgangssignale I, $\bar{I}$ sowie $Q_A$, $Q_B$ und $Q_C$ der Verzögerungsstufe 522 bzw. des Phasenkomparators 6 sowie das negierte Umschaltsignal $\bar{\beta}$ mit den Ausgängen des jeweils vorangestellten NAND-Gatters in folgender Weise verknüpft:

a) Gatter G52: Signal $\bar{I}$ und $Q_C$
b) Gatter G56: Signal $Q_B$ und I
c) Gatter G53: Ausgangssignal des Gatters G52 und Signal $Q_A$
d) Gatter G57: Ausgangssignal des Gatters G56 und Signal $Q_A$
e) Gatter G60: Umschaltsignal $\beta$, Signal $\bar{I}$ und Signal $Q_C$
f) Gatter G54: Ausgangssignal des Gatters G53 und Umschaltsignal $\bar{\beta}$
g) Gatter G61: Umschaltsignal $\beta$, Signal $Q_B$ und I
h) Gatter G58: Ausgangssignal des Gatters G57 und Umschaltsignal $\bar{\beta}$

Der Selbstanlaufstufe 8 werden in diesem Ausführungsbeispiel neben dem entstörten und verzögerten Selbstanlaufsignal V, das von der Entstör- und Verzögerungsstufe 51 abgegeben wird, nur ein einzelnes weiteres Frequenz-Signal, und zwar das Taktsignal des Wartezeitgliedes 7 eingegeben. Die Reset-Eingänge der beiden Verzögerungsstufen TR1 und TR2 des Wartezeitgliedes 7 und der T-Flip-Flops TR3–TR5 der Selbstanlaufstufe 8 werden synchron in Abhängigkeit von dem ebenfalls eingegebenen entstörten und verzögerten Selbstanlaufsignal V und vom Umschaltsignal $\beta$, das von der Selbstanlaufstufe 8 abgegeben wird, zurückgesetzt.

Die Selbstanlaufstufe 8 besteht in diesem Ausführungsbeispiel aus drei T-Flip-Flops TR3–TR5, deren Eingänge mit dem Ausgang Q des vorangegangenen Flip-Flops bzw. mit dem Ausgangssignal des Wartezeitgliedes 7 beaufschlagt sind. Entsprechend dem Ausführungsbeispiel nach Fig. 4 ist der Ausgang des letzten T-Flip-Flops TR5 zusammen mit dem Frequenz-Signal an ein NAND-Gatter gelegt, dessen Ausgangssignal zusammen mit dem Ausgangssignal des dritten T-Flip-Flops TR5 an den Eingang einer Kippstufe, die aus zwei miteinander in bekannter Weise verbundener NAND-Gatter besteht, gelegt ist. Am Ausgang dieser Kippstufe steht das Umschaltsignal $\beta$ bzw. das negierte Umschaltsignal $\bar{\beta}$ an. Die Erzeugung des Reset-Signals für die T-Flip-Flops des Wartezeitgliedes 7 und der Selbstanlaufstufe 8 erfolgt analog zur Schaltung nach Fig. 11. Zur Vorgabe verschiedener Frequenzsignale dienen in diesem Ausführungsbeispiel die Ausgänge Q und $\bar{Q}$ der beiden Teilerstufen TR1 und TR2 des Wartezeitgliedes 7, die die eingegebene Taktfrequenz von z. B. 16 Hz auf 8 Hz bzw. 4 Hz herunterteilen und somit die Frequenzsignale $F_1$, $\bar{F_1}$ und $F_2$, $\bar{F_2}$ vorgeben.

Die Ausgangssignale der Selbstanlaufstufe 8 und die Ausgangssignale der Verknüpfungsstufe 10 werden in der nachgeschalteten Ansteuerlogik 9 in der Weise miteinander verknüpft, dass sie der folgenden Wahrheitstabelle zur Ansteuerung der Schalter S1–S8 des Schaltgliedes 3 genügen:

| Ansteuersignale | | | | | | FET-Schalter | | | | | | | |
|---|---|---|---|---|---|---|---|---|---|---|---|---|---|
| $\bar{\beta}$ | $Q_C$ | $Q_B$ | $A_A$ | I | $\bar{I}$ | S1 | S2 | S3 | S4 | S5 | S6 | S7 | S8 |
| H | L | L | H | X | X | AUS | AUS | AUS | AUS | AUS | AUS | AUS | AUS |
| H | L | L | L | X | X | \| | \| | AUS | AUS | \| | \| | EIN | EIN |

(Fortsetzung)

| Ansteuersignale | | | | | | FET-Schalter | | | | | | | |
|---|---|---|---|---|---|---|---|---|---|---|---|---|---|
| $\bar{\beta}$ | $Q_C$ | $Q_B$ | $A_A$ | I | $\bar{I}$ | S1 | S2 | S3 | S4 | S5 | S6 | S7 | S8 |
| H | L | L | H | X | X | | | AUS | AUS | | | AUS | AUS |
| H | L | H | H | H | L | | | EIN | AUS | | | EIN | AUS |
| H | L | H | H | L | H | | | AUS | AUS | | | AUS | AUS |
| H | H | H | H | H | L | | | EIN | AUS | | | EIN | AUS |
| H | H | H | H | L | H | AUS | AUS | AUS | EIN | AUS | AUS | AUS | EIN |

Im Zusammenhang mit der zeitlichen Darstellung der Signale gemäss Fig. 14 soll die Funktionsweise der Anordnung nach Fig. 13 näher erläutert werden. In Fig. 14 sind von oben nach unten folgende Signale dargestellt:

a) das Selbstanlaufsignal V,
b) die 16 Hz-Taktfrequenz für das Wartezeitglied, die in dem Ausführungsbeispiel nach Fig. 13 dem zugeführten Frequenzsignal für die Selbstanlaufstufe 8 entspricht,
c) das Reset-Signal zum Zurücksetzen der T-Flip-Flops der Selbstanlaufstufe und des Wartezeitgliedes,
d) die Ausgangssignale der T-Flip-Flops der Selbstanlaufstufe und des Wartezeitgliedes,
e) das Ausgangssignal a des Wartezeitgliedes,
f) das Ausgangssignal $\gamma$ des NAND-Gliedes G90,
g) das Umschaltsignal $\beta$ und
h) die Spannung an den Wicklungen 22 und 23 des reaktiven Motors 2.

Sinkt die Drehzahl des Läufers 21 des Motors 2 unter eine bestimmte Grenze, so dass das Ausgangssignal V eine gewisse Zeitspanne nicht mehr auf hohes Potential kommt, so bleibt während dieser Zeitspanne der gemeinsame Reset-Eingang R der T-Flip-Flops TR1–TR5 des Wartezeitgliedes 7 und der Selbstanlaufstufe 8 auf niedrigem Potential. Dabei wird vorausgesetzt, dass das Umschaltsignal $\beta$ im vorangegangenen Regelungsbetrieb im Zustand niedrigen Potentials war und wenigstens eines der beiden Ausgangssignale a oder das negierte Ausgangssignal des zweiten T-Flip-Flops der Selbstanlaufstufe 8 im Zustand hohen Potentials war. Im gesamten hier betrachteten Zeitbereich befindet sich das Ausgangssignal V im Zustand niedrigen Potentials, zum Beispiel, weil der Läufer 21 des Motors 2 sich nicht mehr bewegt. Mit dem abfallenden Selbstanlaufsignal V verschwindet auch das Reset-Signal zum Zeitpunt $t_o$ (Fig. 14c). Damit werden die T-Flip-Flops TR1–TR5 wirksam geschaltet und untersetzen die eingegebene Taktfrequenz von zum Beispiel 16 Hz (Fig. 14b) gemäss der Darstellung in Fig. 14d, die die negierten Ausgänge der T-Flip-Flops TR1–TR4 bzw. den Ausgang Q des fünften T-Flip-Flops TR5 darstellen. Solange der Ausgang Q des fünften T-Flip-Flops TR5 im Zustand L ist, erscheint am Ausgang des Gatters G90 ein der Taktfrequenz entsprechendes Signal $\gamma$. Bleibt das Selbstanlaufsignal V während einer bestimmten Zeitspanne im Zustand L, so wird das Flip-Flop G91 gesetzt, so dass das Umschaltsignal $\beta$ zum Zeitpunkt $t_1$ in den Zustand H und das negierte Umschaltsignal $\bar{\beta}$ in den Zustand L gesetzt wird. Nachdem das Umschaltsignal $\beta$ in den Zustand H gesetzt worden ist und solange das Umschaltsignal $\beta$ in diesem Zustand verbleibt, wird ein Zurücksetzen der T-Flip-Flops TR1–TR5 verhindert, da das Reset-Signal für die fünf T-Flip-Flops TR1–TR5 wegen $\beta$ = H im Zustand L verbleibt. Solange das Umschaltsignal $\beta$ im Zustand H bleibt, dauert der Selbstanlaufbetrieb nach dem Prinzip eines Schrittmotors mit zwei Wicklungen an. Während dieser Zeit werden die beiden Wicklungen 22 und 23 des reaktiven Motors 2 mit Frequenzsignalen gemäss Fig. 14h beaufschlagt, die mittels der Ansteuerlogik aus den vom ersten und zweiten T-Flip-Flop TR1 und TR2 an ihren Ausgängen Q bzw. negierten Ausgängen $\bar{Q}$ abgegebenen Frequenzen zusammengesetzt werden. Dies geschieht in der Weise, dass die obenangegebene Schalttabelle für die Schalter S1–S8 erfüllt ist. Diese Einschaltlogik für die Schalter S1–S8 hat im Zeitbereich vom Zeitpunkt $t_1$–$t_2$ die in Fig. 7h wiedergegebene Impulsfolge für die Wicklungen 22 und 23 zum Ergebnis.

Wird das Ausgangssignal Q des fünften T-Flip-Flops TR5 in den Zustand L gesetzt, so wird das Flip-Flop G91 nach Ablauf eines weiteren Taktes des eingegebenen Frequenzsignals von zum Beispiel 16 Hz mit dem Umschaltsignal $\beta$ auf L und dem negierten Umschaltsignal $\bar{\beta}$ auf H gesetzt, was zum Zeitpunkt $t_2$ eine Änderung des bisherigen Selbstanlaufbetriebes in den normalen Regelungsbetrieb bedeutet. Mit dieser Art der Impulsverknüpfung wird erreicht, dass der letzte Selbstanlauf-Impuls die halbe Breite, entsprechend der eingegebenen Taktfrequenz, gegenüber den vorangegangenen Selbstanlaufimpulsen aufweist. Zum Zeitpunkt $t_3$ wird vom zweiten T-Flip-Flop TR2 am negierten Ausgang ein Signal gemäss Fig. 14e abgegeben, das zum Rücksetz-Impuls gemäss 14c führt, dessen abfallende Flanke zum Zeitpunkt $t_4$ auftritt. Damit ist der Selbstanlaufbetrieb beendet und im darauffolgenden Normal-Regelungsbetrieb dient die zweite Wicklung 23 des reaktiven Motors 2 als Steuerspule oder als «pick-up»-Spule, deren Ausgangssignale zu den Signalen V und I, wie oben beschrieben, führen.

**Patentansprüche**

1. Verfahren zur Steuerung und Regelung eines Motors (2) mit einem permanent-magnetischen Läufer (21) mit mindestens einem Polpaar und einem Ständer mit mindestens zwei Wicklungen (22, 23), von denen im Nominallauf-Betrieb eine (22) mit Antriebsimpulsen beaufschlagt wird und die andere Wicklung (23) als Steuerwicklung zur Erfassung der Läuferbewegung gegenüber dem Ständer dient, wobei die Läuferbewegungen in rechteckförmige Istfrequenz-Impulse umgesetzt, mit Sollfrequenz-Impulsen vorgegebener Frequenz verglichen werden und in Abhängigkeit vom Vergleich der Sollfrequenz-Impulse mit den Istfrequenz-Impulsen die Breite der Antriebsimpulse gesteuert wird, insbesondere für Reaktionsmotoren von zeithaltenden Geräten wie Uhren, dadurch gekennzeichnet, dass die Läuferdrehzahl erfasst und bei Absinken der Drehzahl unterhalb eines vorgebbaren Wertes ein Selbstanlauf zur stufenweisen Steigerung der Läuferdrehzahl durch zyklisches Umschalten und Umpolen der Antriebsimpulse von der ersten Wicklung (22) auf die zweite Wicklung (23) unter stufenweiser Steigerung der Sollfrequenz-Impulse eingeleitet wird und dass bei Erreichen der Nominallauf-Drehzahl der Selbstanlauf abgeschaltet und die Nominallauf-Regelung eingeschaltet wird.

2. Verfahren nach Anspruch 1, dadurch gekennzeichnet, dass im Nominallaufbetrieb die Istfrequenz-Impulse (i) verzögert werden und dass die Steuerimpulse (A–H) mit den ansteigenden und abfallenden Flanken der Istfrequenz- bzw. der Sollfrequenz-Impulse (i, $f_s$) in den Bereichen der verzögerten Istfrequenz-Impulse ($\bar{I}$) oder der verzögerten, invertierten Istfrequenz-Impulse ($\bar{I}$) erzeugt werden. (Fig. 9)

3. Verfahren nach Anspruch 2, dadurch gekennzeichnet, dass zur Beschleunigung des Motors in der gewünschten Drehrichtung bzw. zum Bremsen des Motors entgegen der gewünschten Drehrichtung Steuerimpulse (A, B; E, F) in der einen Halbwelle mit den ansteigenden Flanken der Sollfrequenz-Impulse ($f_s$) ansteigen und der ansteigenden Flanke der Istfrequenz-Impulse (i) im Bereich der verzögerten, invertierten Istfrequenz-Impulse (I) abfallen bzw. mit den abfallenden Flanken der Sollfrequenz-Impulse ($f_s$) ansteigen und der abfallenden Flanke der Istfrequenz-Impulse im Bereich der verzögerten Istfrequenz-Impulse (I) abfallen. (Fig. 9)

4. Verfahren nach Anspruch 2, dadurch gekennzeichnet, dass zum Bremsen des Motors sowohl in der gewünschten als auch entgegen der gewünschten Drehrichtung die erste Wicklung als Arbeitswicklung (22) mit Steuerimpulsen (C, D; G, H) mit der ansteigenden bzw. abfallenden Flanke der Istfrequenz-Impulse (i) kurzgeschlossen wird und der Kurzschluss mit der ansteigenden bzw. abfallenden Flanke der Sollfrequenz-Impulse ($f_2$) aufgehoben wird. (Fig. 9)

5. Verfahren nach den Ansprüchen 1 bis 4, dadurch gekennzeichnet, dass bei der Umschaltung vom Selbstanlaufbetrieb in den Regelungsbetrieb der letzte Impuls im Selbstanlaufbetrieb nur einen Bruchteil, vorzugsweise die Hälfte der im Selbstanlauf zuletzt aufgetretenen Impulsbreite aufweist.

6. Verfahren nach Anspruch 1, dadurch gekennzeichnet, dass eine der Läuferdrehzahl proportionale Spannung von der zweiten Wicklung (23) abgegeben und mit zwei Referenzspannungen ($U_v$, $U_s$) verglichen wird und dass bei drehzahlproportionalen Spannungen, die grösser als die beiden Referenzspannungen ($U_v$, $U_s$) sind, zwei im wesentlichen rechteckförmige Signale (v, i) abgegeben werden, die von Störimpulsen befreit, um eine einstellbare Zeit ($\Delta t$) verzögert werden und

a) als Istwertfrequenz-Impulse (I, $\bar{I}$) einer Regeleinrichtung für den Nominallauf-Betrieb (6) eingegeben, dort mit Sollfrequenz-Impulsen ($f_2$, $\bar{f}_2$) verglichen werden und zur Abgabe von zwei verschiedenen Nominallauf-Impulsen ($H\dot{o}$, $H\bar{o}$) führen, und

b) als Nominallaufsignale (V) einer Selbstanlaufstufe (8) zugeführt werden, der zusätzlich einer oder mehrere voneinander verschiedene Frequenzsignale ($f_{onz}$, N) eingegeben werden, wobei das Verschwinden der Nominallaufsignale (V), die Abgabe von Anlaufimpulsfolgen ($t_1$, 1Z, 2Z, 3Z) und eines Umschaltsignals ($\beta$, $\bar{\beta}$) auslöst, wobei sowohl die Nominallaufimpulse ($H\dot{o}$, $H\bar{o}$) als auch die Anlaufimpulsfolgen ($t_1$, 1Z, 2Z, 3Z) zusammen mit dem Umschaltsignal ($\beta$, $\bar{\beta}$), einer Ansteuerlogik (9) zugeführt werden, die die eingehenden Impulse und Signale verknüpft und Ausgangsimpulse (T5–T8) an einen nachgeordneten Schalter (3) in der Weise abgibt, dass

a) im Nominallaufbetrieb nach dem Prinzip eines Synchronmotors mit einer Feldwicklung (erste Wicklung 22) und einer Sensorwicklung (zweite Wicklung 23) die Nominallauf-Impulse ($H\dot{o}$, $H\bar{o}$) eine wechselweise Verbindung der Anschlüsse (22a, 22b) der ersten Wicklung (22) mit der positiven und negativen Batteriespannung ($+U_B$, $-U_B$) bewirkt wird und

b) im Selbstanlauf-Betrieb nach dem Prinzip eines Schrittmotors mit zwei Wicklungen Impulsfolgen mit ansteigender Frequenz wechselweise an beide Wicklungen (22, 23) abgegeben werden.

7. Verfahren nach Anspruch 6, dadurch gekennzeichnet, dass bei Verschwinden eines Nominallaufsignals (V) die Anlaufimpulsfolgen ($t_1$, 1Z, 2Z, 3Z) in der Weise erzeugt werden, dass verzögerte Impulse oder Zeitspannen erzeugt werden, die mit dem/den zusätzlich eingegebenen Frequenzsignal(en) ($f_{o1z}$, $f_{o2z}$, $f_{o3z}$, N) derart verriegelt werden, dass ausgangsseitig eine einzelne einen n-tel der Nominalfrequenz entsprechende Impulsfolge oder mehrere Impulsfolgen mit nacheinander ansteigender Frequenz ($f_o$) abgegeben werden.

8. Verfahren nach Anspruch 7, dadurch gekennzeichnet, dass das Umschaltsignal ($\beta$, $\bar{\beta}$) durch logische Verknüpfung des Nominallaufsignals (V) und des Ausgangssignals (N) des Wartezeitgliedes (7) gebildet wird.

9. Verfahren nach Anspruch 6, dadurch gekennzeichnet, dass die Nominallauf-Impulse ($H\dot{o}$, $H\bar{o}$) durch Verknüpfung der ansteigenden und abfallenden Flanken der Sollfrequenz-Impulse ($f_2$) und der Istfrequenz-Impulse (I, $\bar{I}$) gebildet werden.

10. Verfahren nach Anspruch 9, dadurch gekennzeichnet, dass die invertierten Nominallauf-Impulse ($H\bar{o}$) mit der abfallenden Flanke der invertierten Sollfrequenz-Impulse ($\bar{f}_2$) ansteigen und

der ansteigenden Flanke der Istfrequenz-Impulse (I) abfallen und die Nominallauf-Impulse (Hö) mit der ansteigenden Flanke der Sollfrequenz-Impulse ($f_2$) ansteigen und mit der abfallenden Flanke der invertierten Istfrequenz-Impulse ($\bar{I}$) abfallen.

11. Verfahren nach einem der vorstehenden Ansprüche, dadurch gekennzeichnet, dass der Selbstanlauf wiederholt wird, wenn der vorangegangene Selbstanlauf nicht zur Nominallauf-Drehzahl geführt hat.

12. Anordnung zur Durchführung des Verfahrens nach einem der Ansprüche 1 bis 6, dadurch gekennzeichnet, dass die Eingänge eines Vergleichsgliedes (4) sowohl mit der Steuerwicklung (23) des reaktiven Motors (2) verbunden als auch mit zwei Referenzspannungen ($U_r$, $U_s$) beaufschlagt sind und die beiden Ausgänge (v, i) des Vergleichsgliedes (4) mit einer Entstör- und Verzögerungsstufe (5) verbunden sind, deren erster Ausgang ($i_1$) an einen Phasenkomparator (6), deren zweiter Ausgang (V) an eine Selbstanlaufstufe (8) und ein Wartezeitglied (7) und deren dritter Ausgang (I, $\bar{I}$) zusammen mit den Ausgängen ($Q_1$, $Q_3$) des Phasenkomparators (6) an eine Verknüpfungslogik (10) angeschlossen sind, dass die Ausgänge ($\beta$, $\bar{\beta}$, $F_1$m $\bar{F_1}$, $F_2$, $\bar{F_2}$) der Selbstanlaufstufe (8) und der Ausgang der Verknüpfungslogik (10) über eine Ansteuerlogik (9) mit einer Schaltstufe (3) verbunden sind, an der sowohl die Versorgungsspannung ($\mp U_B$) als auch die Wicklungen (22, 23) des reaktiven Motors (2) angeschlossen sind. (Fig. 11)

13. Anordnung nach Anspruch 12, dadurch gekennzeichnet, dass die Entstör- und Verzögerungsstufe (5) eine mit einer Taktfrequenz ($f_1$) beaufschlagte Entstörstufe (521) enthält, deren Ausgang einerseits an den mit einer zweiten Taktfrequenz ($f_2$) beaufschlagten Phasenkomparator (6) und andererseits an ein mit einer dritten Taktfrequenz ($f_3$) beaufschlagtes Verzögerungsglied (522) angeschlossen ist und dass die Ausgänge (Q1, Q3) des Phasenkomparators (6) und die Ausgänge (I, I) des Verzögerungsgliedes (522) mit der Verknüpfungslogik (10) verbunden sind. (Fig. 8)

14. Anordnung nach Anspruch 12, dadurch gekennzeichnet, dass der Phasenkomparator (6) zwei getaktete Flip-Flops (D14, D15) enthält, an deren Eingänge die Sollfrequenz-Impulse ($f_s$) bzw. die Istfrequenz-Impulse ($i_1$) und an deren Takteingänge ($T_K$) die zweite Taktfrequenz ($f_2$) anliegt und deren Ausgänge über Verknüpfungsglieder (G39–G42) mit einem Schieberegister oder einem Aufwärts-Abwärts-Zähler verbunden sind.

15. Anordnung nach Anspruch 14, dadurch gekennzeichnet, dass bei jedem Sollfrequenz-Signalwechsel von H nach L oder L nach H ein Sollfrequenz-Impuls abgespeichert und bei jedem Istfrequenz-Signalwechsel von H nach L oder L nach H ein Istfrequenz-Impuls abgespeichert wird.

16. Anordnung nach Anspruch 14, dadurch gekennzeichnet, dass das Schieberegister aus x J/K-Flip-Flops (J1–J6) besteht, deren Setz-Eingänge mit dem Umschaltsignal ($\beta$) beaufschlagt sind und von denen die ersten m J/K-Flip-Flops zur Abgabe von Bremsimpulsen bzw. zum Kurzschliessen der Antriebswicklung dienen, die nächsten J/K-Flip-Flops (m + 1 bis n − 1) als Warte-Flip-Flops ohne Angabe von Beschleunigungs- oder Bremsimpulsen dienen und dass die nächsten Flip-Flops (n bis x) erste Beschleunigungsimpulse positiver Polarität abgeben und zusätzlich Beschleunigungsimpulse negativer Polarität von den J/K-Flip-Flops p bis x abgegeben werden, wobei m kleiner als n kleiner als p kleiner als x ist.

17. Anordnung nach den Ansprüchen 14–16, dadurch gekennzeichnet, dass die Ausgänge (Q) der beiden getakteten Flip-Flops (D14, D15) an den Eingang je eines nachgeschalteten Exklusiv-ODER-Gatters (G39, G40) gelegt sind, deren andere Eingänge mit dem Sollfrequenz-Signal ($f_s$) bzw. mit dem entstörten Istfrequenz-Signal ($i_1$) beaufschlagt sind, dass die Ausgänge der beiden Exklusiv-ODER-Gatter (G39, G40) an den einen Eingang je eines nachgeschalteten NAND-Gatters (G41, G42) und über je einen Inverter (G43, G44) an den anderen Eingang des jeweils anderen NAND-Gatters (G42, G41) angeschlossen sind und dass die Ausgänge dieser beiden NAND-Gatter (G41, G42) zusammen mit der über einen Inverter (G45) geführten Taktfrequenz ($f_2$) und dem Umschaltsignal ($\beta$) dem Schieberegister bzw. Aufwärts-Abwärts-Zähler zugeführt sind.

18. Anordnung nach Anspruch 16, dadurch gekennzeichnet, dass das Schieberegister drei J/K-Flip-Flops (J1–J3), vier NOR-Gatter (G46, G48, G49, G51) sowie zwei weitere Inverter (G47, G50) enthält, dass die Takteingänge ($C_K$) der J/K-Flip-Flops (J1–J3) an die invertierte zweite Taktfrequenz ($f_2$) angeschlossen sind, dass die J-Eingänge der J/K-Flip-Flops (J1–J3) an die Ausgänge der NOR-Gatter (G46, G48) bzw. an den Ausgang des Inverters (50) angeschlossen sind, dass die beiden NOR-Gatter (G46, G48) und der Inverter (G50) an den Ausgang des ersten NAND-Gatters (G41) angeschlossen ist, dass die beiden anderen Eingänge der NOR-Gatter (G46, G48) an die negierten Ausgänge ($\bar{Q}$) des zweiten J/K-Flip-Flops (J2) bzw. des ersten J/K-Flip-Flops (J1) angeschlossen sind, dass die K-Eingänge der drei J/K-Flip-Flops (J1–J3) zyklisch vertauscht mit den Ausgängen des Inverters (G47) bzw. zweier NOR-Gatter (G49, G51) verbunden sind, dass je ein Eingang der beiden NOR-Gatter (G49, G51) sowie der Eingang des Inverters (G47) an den Ausgang des zweiten NAND-Gatters (G42) angeschlossen ist, und dass die beiden anderen Eingänge der NOR-Gatter (G49, G50) mit den Ausgängen (Q) des zweiten bzw. dritten J/K-Flip-Flops (J2, J3) verbunden sind.

19. Anordnung nach Anspruch 16, dadurch gekennzeichnet, dass das Schieberegister sechs J/K-Flip-Flops (J1–J6) sowie zehn NOR-Gatter (G70–G79) sowie zwei weitere Inverter (G80, G81) enthält, dass die Takteingänge ($C_K$) der J/K-Flip-Flops (J1–J6) an die invertierte zweite Taktfrequenz ($f_2$) angeschlossen sind, dass die J-Eingänge der J/K-Flip-Flops (J1 − J6) an die Ausgänge von NOR-Gatter (G70–G74) bzw. an den Ausgang des einen Inverters (G81) angeschlossen sind, dass jeweils ein Eingang der NOR-Gatter (G70–G74) und der Inverter (G81) an den Ausgang des ersten NAND-Gatters (G41) angeschlossen ist, dass die anderen Eingänge der NOR-Gatter (G70–G74) an den negierten Ausgang ($\bar{Q}$) des jeweils vorangestellten J/K-Flip-Flops (J1–J5) angeschlossen ist, dass die K-Eingänge der ersten fünf J/K-Flip-Flops (J1–J5) an die Ausgänge weiterer NOR-Gatter (G75–G79) und der K-Eingang des sechsten J/K-Flip-Flops (J6) an den Ausgang eines weiteren Inverters angeschlossen sind, dass je ein Eingang der NOR-Gatter (G75–G79) und der Eingang des weiteren Inverters (G80) an den Ausgang des zweiten NAND-Gatters (42) und die anderen Eingänge der NOR-Gatter (G75–G79) an den Ausgang Q des nachfolgenden J/K-Flip-Flops (J2–J6) angeschlossen ist und dass die Ausgänge (Q) des dritten, vierten und fünften J/K-Flip-Flops (J3–J5) an die Eingänge der nachgeschalteten Verknüpfungsstufe (10) angeschlossen sind.

20. Anordnung nach Anspruch 12, dadurch gekennzeichnet, dass die Ausgangssignale der Selbstanlaufstufe (8) und des Phasenkomparators (6) in der Verknüpfungslogik (10) und der Ansteuerlogik (9) in der Weise verknüpft sind, dass sie folgender Wahrheitstabelle genügen und zu folgenden Schaltzuständen der Schalter (S1–S8) der Schaltstufe (3) führen:

| Ansteuersignale | | | | | | FET-Schalter | | | | | | | | |
|---|---|---|---|---|---|---|---|---|---|---|---|---|---|---|
| $\bar{\beta}$ | $Q_C$ | $Q_B$ | $A_A$ | I | $\bar{I}$ | S1 | S2 | S3 | S4 | S5 | S6 | S7 | S8 | Bem. |
| H | L | L | H | X | X | AUS | AUS | AUS | AUS | AUS | AUS | AUS | AUS | 1 |
| H | L | L | L | X | X | | | AUS | AUS | | | EIN | EIN | 2 |
| H | L | L | H | X | X | | | AUS | AUS | | | AUS | AUS | 3 |
| H | L | H | H | H | L | | | EIN | AUS | | | EIN | AUS | 4 |
| H | L | H | H | L | H | | | AUS | AUS | | | AUS | AUS | 5 |
| H | H | H | H | H | L | | | EIN | AUS | | | EIN | AUS | 6 |
| H | H | H | H | L | H | AUS | AUS | AUS | EIN | AUS | AUS | AUS | EIN | 7 |

Bemerkung:
1) Keine Impulse auf Wicklung 22
2) Wicklung 22 in Kurzschluss auf OV
3) Keine Impulse auf Wicklung 22
4) + Impuls auf Wicklung 22
5) keine Impulse auf Wicklung 22
6) + Impuls auf Wicklung 22
7) − Impuls auf Wicklung 22

21. Anordnung zur Durchführung des Verfahrens nach Anspruch 6,dadurch gekennzeichnet, dass die Eingänge eines Vergleichsgliedes (4) sowohl mit einer Drehzahl-Erfassungseinrichtung (23) des reaktiven Motors (2) verbunden als auch mit zwei Referenzspannungen ($U_v$, $U_s$) beaufschlagt sind und die beiden Ausgänge dieses Vergleichsgliedes (4) mit einer Entstör- und Verzögerungsstufe (5) verbunden sind, deren Ausgänge einerseits an eine Nominallauf-Regeleinrichtung (6), andererseits an eine Selbstanlaufstufe (8) angeschlossen sind und dass die Ausgänge der Nominallauf-Regeleinrichtung (6) und der Selbstanlaufstufe (8) über eine Ansteuerlogik (9) mit einer Schaltstufe (3) verbunden sind, an der sowohl die Versorgungsspannung ($\pm U_B$) als auch die Wicklungen (22, 23) des reaktiven Motors (2) angeschlossen sind. (Fig. 2)

22. Anordnung nach Anspruch 21, dadurch gekennzeichnet, dass weitere Eingänge der Selbstanlaufstufe (8) zum einen mit dem Ausgang eines Wartezeitgliedes (7) verbunden sind, an dessen Eingang eine frei wählbare Frequenz ($f_3$) gelegt ist und an dessen Ausgang ein von der Frequenz ($f_3$) und dem Nominallaufsignal (V) und der Anzahl der Verzögerungsstufen abhängiges Signal (N) ansteht, zum anderen mit einer oder mehreren freiwählbaren, vorzugsweise mit in Zweier-Potenzen steigenden Frequenzen ($f_{onz}$), beaufschlagt sind.

23. Anordnung nach Anspruch 21, dadurch gekennzeichnet, dass das Vergleichsglied (4) zwei Komparatoren (41, 42) enthält, deren positiven Eingänge an die Drehzahl-Erfassungseinrichtung (23) und deren negativen Eingänge zum einen (1. Komparator 41) an die eine Referenzspannung ($U_s$) zum anderen (2. Komparator 42) an die andere Referenzspannung ($U_v$) angeschlossen sind.

24. Anordnung nach Anspruch 22 oder 23, dadurch gekennzeichnet, dass die Entstör- und Verzögerungsstufe zwei Teilstufen (51, 52) enthält, wobei die erste Entstör- und Verzögerungsstufe (51) mit dem Ausgang des ersten Komparators (41) und die zweite Entstör- und Verzögerungsstufe (52) mit dem Ausgang des zweiten Komparators (42) verbunden ist und der Ausgang (V) der ersten Entstör- und Verzögerungsstufe (51) an den Eingang der Selbstanlaufstufe (8) und die Ausgänge (I, $\bar{I}$) der zweiten Entstör- und Verzögerungsstufe (52) an die Eingänge der Nominalbetriebs-Regeleinrichtung (6) angeschlossen sind.

25. Anordnung nach Anspruch 24, dadurch gekennzeichnet, dass die Entstör- und Verzögerungsstufe (51, 52) aus der Reihenschaltung mehrerer getakteter Flip-Flops (D1–D4 bzw. D5–D8) bestehen, deren Takteingänge (Ck) synchron mit einer festlegbaren Frequenz ($f_4$) beaufschlagt sind, dass der Eingang des ersten getakteten Flip-Flops (D1 bzw. D5) mit dem Ausgang des ersten bzw. zweiten Komparators (41, 42) verbunden ist, dass die Ausgänge (Q) der getakteten Flip-Flops (D1–D8) jeweils mit dem Eingang des nachfolgenden getakteten Flip-Flops (D2–D4 bzw. D6–D8) und der des letzten getakteten Flip-Flops (D4 bzw. D8) mit einem Eingang eines nachgeschalteten ersten NAND-Gatters (G1 bzw. G5) verbunden sind, an dessen anderen Eingang der Ausgang des jeweils ersten getakteten Flip-Flops (D1 bzw. D5) angeschlossen ist, dass an die Eingänge eines zweiten NAND-Gatters (G2 bzw. G6) die negierten Ausgänge ($\bar{Q}$) des jeweils ersten bzw. letzten getakteten Flip-Flops (D1 bzw. D4, D5 bzw. D8) angeschlossen sind, dass die Ausgänge der NAND-Gatter (G1, G2 bzw. G5, G6) an einen Eingang eines nachgeschalteten dritten bzw. vierten NAND-Gatters (G3, G4 bzw. G7, G8) angeschlossen sind, dessen anderer Eingang jeweils mit dem Ausgang des jeweils anderen NAND-Gatters (G3, G4 bzw. G7, G8) verbunden ist und dass der Ausgang (V) des dritten NAND-Gatters (G3) der ersten Entstör- und Verzögerungsstufe (51) an einem Eingang der nachgeschalteten Selbstanlaufstufe (8) und die Ausgänge (I, $\bar{I}$) des dritten und vierten NAND-Gatters (G7, G8) der zweiten Entstör- und Verzögerungsstufe (52) an die Eingänge der nachgeschalteten Regeleinrichtung für den Nominalbetrieb (6) angeschlossen sind.

26. Anordnung nach Anspruch 21, dadurch gekennzeichnet, dass die Nominallauf-Regeleinrichtung (6) jeweils eine Regeleinrichtung (61, 62) für die beiden Nominallauf-Impulse (H$\ddot{o}$, H$\bar{o}$) aufweist, wobei jede Regeleinrichtung (61 bzw. 62) zwei D-Flip-Flops $D_{R1}$, $D_{R2}$ bzw. $D_{R3}$, $D_{R4}$) und zwei NOR-Gatter (G12, G13 bzw. G14, G15) enthält, die in der Weise miteinander verknüpft sind, dass die negierten Ausgänge ($\bar{Q}$) beider D-Flip-Flops ($D_{R1}$, $D_{R2}$, $D_{R3}$, $D_{R4}$) über das erste NOR-Gatter (G12 bzw. G14) zusammengefasst sind, dessen Ausgang an die Reset-Eingänge der beiden D-Flip-Flops ($D_{R1}$, $D_{R2}$, $D_{R3}$, $D_{R4}$) angeschlossen ist, dass der negierte Ausgang ($\bar{Q}$) des ersten D-Flip-Flops ($D_{R1}$ bzw. $D_{R3}$) und der Ausgang (Q) des zweiten D-Flip-Flops ($D_{R2}$ bzw. $D_{R4}$) sowie der Ausgang (I) bzw. der negierte Ausgang ($\bar{I}$) der zweiten Entstör- und Verzögerungsstufe (52) an die drei Eingänge des zweiten NOR-Gatters (G13 bzw. G15) angeschlossen sind, dass die Ausgänge dieser beiden NOR-Gatter (G13, G15) mit Eingängen der Ansteuerlogik (9) verbunden sind, dass die Eingänge der D-Flip-Flops ($D_{R1}$–$D_{R4}$) an positives Potential angeschlossen sind und dass der Takteingang ($C_k$) des ersten D-Flip-Flops ($D_{R1}$ bzw. $D_{R3}$) mit der abfallenden bzw. ansteigenden Flanke einer von der Selbstanlaufstufe (8) vorgegebenen Frequenz ($f_2$ bzw. $\bar{f}_2$) und der Takteingang des zweiten D-Flip-Flops ($D_{R2}$ bzw. $D_{R4}$) mit der ansteigenden bzw. abfallenden Flanke (I bzw. $\bar{I}$) der am Ausgang der zweiten Entstör- und Verzögerungsstufe (52) anstehenden Impulse beaufschlagt ist.

27. Anordnung nach Anspruch 21, dadurch gekennzeichnet, dass die Selbstanlaufstufe (8) eine Reihenschaltung von mindestens zwei T-Flip-Flops ($T_{R4}$, $T_{R5}$, $T_{R6}$) enthält, deren negierte Ausgänge ($\bar{Q}$) auf den Eingang des nachfolgenden T-Flip-Flops ($T_{R4}$, $T_{R5}$, $T_{R6}$) und der Ausgang des dritten Flip-Flops ($T_{R6}$) auf den Eingang eines ersten NOR-Gatters (G9) geschaltet sind und Signale (P, R, S) abgeben, dass der Eingang des ersten T-Flip-Flops ($T_{R4}$) mit einem vorgebbaren Signal (N) angesteuert ist, dass die Reset-Eingänge (R) gemeinsam an den Ausgang einer Gatter-Schaltung mit drei NOR-Gattern (G9, G10, G11) angeschlossen sind, wobei die Eingänge des ersten NOR-Gatters (G9) sowohl mit dem negierten Ausgang ($\bar{Q}$) des letzten T-Flip-Flops ($T_{R6}$) als auch mit dem vorgebbaren Signal (N) beaufschlagt sind, dass ein Eingang des zweiten NOR-Gatters (10) mit dem Ausgang des ersten NOR-Gatters (G9) verbunden ist und der zweite Eingang mit dem Selbstanlaufsignal (V) beaufschlagt ist und dass das dritte NOR-Gatter (G11) sowohl mit dem Ausgang des zweiten NOR-Gatters (G10) verbunden als auch mit dem Umschaltsignal (β) beaufschlagt ist, dass vier UND-Gatter (G30–G33) vorgesehen sind, an deren Eingänge folgende Signale gelegt sind:

Erstes UND-Gatter (G30): negiertes Umschaltsignal ($\bar{\beta}$) und drittes Frequenzsignal ($f_{o3z}$)
Zweites UND-Gatter (G31): Umschaltsignal (β), Ausgangssignal (P) des ersten T-Flip-Flops ($T_{R4}$), Ausgangssignal (R) des zweiten T-Flip-Flops ($T_{R5}$) und erstes Frequenzsignal ($f_{o1z}$)
Drittes UND-Gatter (G32): Umschaltsignal (β), negiertes Ausgangssignal ($\bar{P}$) des ersten T-Flip-Flops ($T_{R4}$), Ausgangssignal (R) des zweiten T-Flip-Flops ($T_{R5}$) und zweites Frequenzsignal ($f_{o2z}$)
Viertes UND-Gatter (G33): Umschaltsignal (β), negiertes Ausgangssignal ($\bar{R}$) des zweiten T-Flip-Flops ($T_{R5}$) und drittes Frequenzsignal ($f_{o3z}$),

dass die Ausgänge der UND-Gatter (G30–G33) über ein NOR-Gatter (G34) zur Impulsfolge ($f_o$) zusammengefasst sind, der mit dem Eingang einer nachgeschalteten Frequenz-Untersetzerstufe (82, 83) verbunden ist, und dass ein Flip-Flop (81) vorgesehen ist, an dessen Eingängen das negierte Ausgangssignal ($\bar{S}$) des dritten T-Flip-Flops und das Ausgangssignal eines weiteren NOR-Gatters (36) an dem das negierte Ausgangssignal ($\bar{S}$) und das vorgebbare Signal (N) zusammengefasst sind, anliegen, und an dessen Ausgänge das Umschaltsignal (β) sowie das negierte Umschaltsignal ($\bar{\beta}$) anstehen.

28. Anordnung nach Anspruch 21, dadurch gekennzeichnet, dass der reaktive Motor (2) zwei Wicklungen (22, 23) aufweist, von denen im Selbstanlaufbetrieb beide Wicklungen (22, 23) als Feldwicklungen und im Nominalbetrieb die eine Wicklung (22) als Feldwicklung und die andere Wicklung (23) als Sensorwicklung zur Drehzahlerfassung dient.

29. Anordnung nach Anspruch 28, dadurch gekennzeichnet, dass beide Wicklungen (22, 23) des reaktiven Motors (2) mit Schaltern (S1–S8) der Schaltstufe (3) verbunden sind, wobei die Schalter (S1–S8) wechselweise an den einen oder anderen

Pol der Spannungsquelle ($\mp U_B$) und das eine oder andere Wicklungsende der Wicklungen (22, 23) angeschlossen sind.

30. Anordnung nach Anspruch 21, dadurch gekennzeichnet, dass die Ansteuerlogik (9) Ausgänge (T5–T8) aufweist, die je zwei Schalter (S1, S5 bzw. S2, S6 bzw. S3, S7 bzw. S4, S8) der Schaltstufe (3) ansteuern.

31. Anordnung nach Anspruch 30, dadurch gekennzeichnet, dass die Ausgangssignale der Selbstanlaufstufe (8) und der Regeleinrichtung für den Nominalbetrieb (6) in der Ansteuerlogik (9) in der Weise verknüpft sind, dass sie folgender Wahrheitstabelle genügen und zu folgenden Schaltzuständen der vom jeweiligen Ausgangssignal (T5–T8) angesteuerten Schalter (S1–S8) der Schaltstufe (3) führen:

| Betrieb | | Signale β | $T_5$ | $T_6$ | $T_7$ | $T_8$ | Hȯ | Hō | Schalter S1/S5 | S2/S6 | S3/S7 | S4/S8 |
|---|---|---|---|---|---|---|---|---|---|---|---|---|
| Selbstanlauf | | H | H | L | L | L | – | – | E | A | A | A |
| | | H | L | L | L | H | – | – | A | A | A | E |
| | | H | L | H | L | L | – | – | A | E | A | A |
| | | H | L | L | H | L | – | – | A | A | E | A |
| Nominal- | Hȯ | L | L | L | H | L | H | L | A | A | E | A |
| laufbe- | Hō | L | L | L | L | H | L | H | A | A | A | E |
| trieb | Hȯ = Hō | L | L | L | L | L | L | L | A | A | A | A |

wobei H = hohes Potential
L = niedriges Potential
– = unbedeutender Zustand
E = Schalter geschlossen
A = Schalter geöffnet

bedeutet.

32. Anordnung nach Anspruch 21, dadurch gekennzeichnet, dass das Wartezeitglied (7) aus einer oder mehreren Verzögerungsstufen (T-Flip-Flops TR1 bis TR3) besteht, deren Reset-Eingänge synchron in Abhängigkeit vom Nominallauf-Signal (V) und vom Umschaltsignal (β) zurückgesetzt werden, und an dessen Ausgang das vorgebbare Signal (N) ansteht.

33. Anordnung nach Anspruch 12 oder 21, dadurch gekennzeichnet, dass zwischen den beiden Wicklungen (22, 23) des reaktiven Motors (2) ein Winkel von $\Delta = k \cdot \frac{\pi}{2} - \varphi 1$ mit $k = 1, 3, 5$ und $\varphi 1 = (0 \text{ bis } 0{,}4) \cdot \frac{\pi}{2}$ eingeschlossen wird.

34. Anordnung nach Anspruch 12 oder 21, dadurch gekennzeichnet, dass zwei Wicklungsenden der Wicklungen (22 und 23) zusammengeschaltet sind und dieser gemeinsame Wicklungsanschluss über zwei Schalter (S2, 4 und S5, 7) sowie die beiden anderen Wicklungsenden über je zwei Schalter (S1, S6 bzw. S3, S8) an die Ansteuerlogik (9) angeschlossen sind und dass das eine Wicklungsende der zweiten Wicklung (23) mit den positiven Eingängen der Komparatoren (41, 42) und der negative Eingang des einen Komparators (42) mit dem Minuspol der Stromversorgung ($U_{6-}$) und der andere Komparator (41) an die eine Referenzspannung (Us) angeschlossen ist.

**Claims**

1. Method for controlling and regulating a motor (2) with a permanent magnetic rotor (21) having at least one pair of poles and a stator with at least two windings (22, 23), to one (22) of which drive pulses are applied in nominal running mode, whilst the other winding (23) serves as a control winding for determining the rotor movement with respect to the stator, whereby the rotor movements are converted into rectangular actual frequency pulses and are compared with desired frequency pulses having a predetermined frequency and, as a function of the comparison between the desired frequency pulses and the actual frequency pulses, the width of the drive pulses is controlled, particularly for reaction motors of timekeeping devices, such as clocks, characterized in that the rotor speed is determined and when the speed drops below a predeterminable value, automatic starting is initiated for the stepwise increase of the rotor speed by cyclic switching and polarity reversal of the drive pulses from the first winding (22) to the second winding (23), accompanied by a stepwise increase in the desired frequency pulses and that on reaching the nominal running speed, the automatic start mode is switched off and the nominal running mode is switched on.

2. Method according to claim 1, characterized in that in the nominal running mode, the actual frequency pulses (i) are delayed and that the control pulses (A–H) with the rising and falling sides of the actual or desired frequency pulses (i, $f_s$) are produced in the areas of the delayed actual frequency pulses ($\bar{\text{I}}$) or the delayed inverted actual frequency pulses ($\bar{\text{I}}$) (Fig. 9).

3. Method according to claim 2, characterized in that for accelerating the motor in the desired rotation direction, or for decelerating the motor counter to the desired rotation direction, control pulses (A, B; E, F) rise in one half-wave with the rising sides of the desired frequency pulses ($f_s$), and the rising side of the actual frequency pulses (i) falls in the area of the delayed inverted actual frequency pulses (I) or rises with the falling sides of the desired frequency pulses ($f_s$) and the falling side of the actual frequency pulses falls in the area of the delayed actual frequency pulses (I) (Fig. 9).

4.Method according to claim 2, characterized in that for decelerating the motor, both in the desired direction and counter to the desired direction, the first winding as the working winding (22) is shortcircuited with control pulses (C, D; G, H) with the rising or falling side of the actual frequency pulses (i) and the short-circuit is removed with the rising or falling side of the desired frequency pulses ($f_2$) (Fig. 9).

5. Method according to claims 1 to 4, characterized in that on switching from the automatic starting mode to the control mode, the last pulse in the automatic starting mode only has a fraction, preferably half, the pulse width which last occurred in the automatic starting mode.

6. Method according to claim 1, characterized in that a voltage proportional to the rotor speed is supplied by the second winding (23) and compared with two reference voltages ($U_v$, $U_s$) and that in the case of speed-proportional voltages which are higher than the two reference voltages ($U_v$, $U_s$), two substantially square-wave signals (v, i) are supplied, which are free from interference pulses and are delayed by an adjustable time ($\Delta t$), and

a) as actual valve frequency pulses (I, $\bar{I}$) of a regulating means are fed in for the nominal running mode (6), compared with desired frequency pulses ($f_2$, $\bar{f}_2$) and lead to two different nominal operational pulses (Hȯ, H$\bar{o}$) being supplied, and

b) are supplied as nominal running signals (V) of an automatic starting stage (8), whereby additionally one or more different frequency signals ($f_{onz}$, N) are fed in, whereby the disappearance of the nominal running signals (V) triggers the supply of starting pulse trains ($t_1$, 1Z, 2Z, 3Z) and a switching signal ($\beta$, $\bar{\beta}$)

whereby both the nominal running pulses (Hȯ, H$\bar{o}$) as well as the starting pulse trains ($t_1$, 1Z, 2Z, 3Z) are supplied together with the switching signal ($\beta$, $\bar{\beta}$), to a control logic (9) which links the entering pulses and signals and supplies output pulses (T5–T8) to a following switch (3) in such a way that

a) in the nominal running mode in accordance with the principle of a synchronous motor with a field winding (first winding 22) and a sensor winding (second winding 23), the nominal running pulses (Ho, H$\bar{o}$) bring about an alternating connection of the connections (22a, 22b) of the first winding (22) to the positive and negative battery voltage ($+U_B$, $-U_B$), and

b) in the self starting mode, according to the principle of a stepping motor with two windings, pulse trains with rising frequency are alternately supplied to the two windings (22, 23).

7. Method according to claim 6, characterized in that when a nominal running signal (V) disappears, the starting pulse trains ($t_1$, 1Z, 2Z, 3Z) are produced in such a way that delayed pulses or time intervals are produced, which are locked with the additionally fed in frequency signal or signals ($F_{o1z}$, $f_{o2z}$, $f_{o3z}$, N) in such a way that on the output side is supplied a single pulse train corresponding to a nth of the nominal frequency or several pulse trains with successively rising frequency ($f_o$).

8. Method according to claim 7, characterized in that the switching signal ($\beta$, $\bar{\beta}$) is formed by the logic combining of the nominal running signal (V) and the output signal (N) of the waiting time element (7).

9. Method according to claim 6, characterized in that the nominal running pulses (Hȯ, H$\bar{o}$) are formed by combining the rising and falling sides of the desired frequency pulses ($f_2$) and the actual frequency pulses (I, $\bar{I}$).

10. Method according to claim 9, characterized in that the inverted nominal running pulses (H$\bar{o}$) rise with the falling sides of the inverted desired frequency pulses ($\bar{f}_2$) and fall with the rising side of the actual frequency pulse (I) and the nominal running pulses (Hȯ) rise with the rising side of the desired frequency pulses ($f_2$) and fall with the falling side of the inverted actual frequency pulses ($\bar{I}$).

11. Method according to one of the preceding claims, characterized in that the automatic starting mode is repeated if the preceding automatic starting mode has not led to the nominal running speed.

12. Arrangement for performing the method according to one of the claims 1 to 6, characterized in that the inputs of a comparing element (4) are connected to the control winding (23) of the reactive motor (2) and are also subject to the action of two reference voltages ($U_r$, $U_s$) and the two outputs (v, i) of the comparing element (4) are connected to an interference suppression and delay stage (5), whose first output ($i_i$) is connected to a phase comparator (6), whose second output (V) is connected to an automatic starting stage (8) and a waiting time element (7) and whose third output (I, I), together with the outputs ($Q_1$, $Q_3$) of the phase comparator (6) are connected to a combination logic (10), that the outputs ($\beta$, $\bar{\beta}$, $F_1$, $\bar{F}_1$, $F_2$, $\bar{F}_2$) of the automatic starting stage (8) and the output of the combination logic (10) are connected across a control logic (9) to a switching stage (3), to which are connected both the supply voltage ($\mp U_B$) as well as the windings (22, 23) of the reactive motor (2) (Fig. 11).

13. Arrangement according to claim 12, characterized in that the interference suppression and delay stage (5) contains an interference suppression stage (521) to which a clock frequency ($f_1$) is applied and the output of said stage is connected on the one hand to the phase comparator (6) to which a second clock frequency ($f_2$) is applied and on the other hand to a delay element (522) to which a third clock frequency (f3) is applied and that the outputs (Q1, Q3) of the phase comparator 6 and the outputs (I, $\bar{I}$) of the delay element (522) are connected to the combination logic (10) (Fig. 8).

14. Arrangement according to claim 12, characterized in that the phase comparator (6) contains two timed flip-flops (D14, D15), at whose inputs are the desired frequency pulses ($f_s$) or the actual frequency pulses ($i_i$) and at whose clock inputs ($T_k$) are the second clock frequencies ($f_2$) and whose outputs are connected via linking elements (G39–G42) to a shift register or a bidirectional counter.

15. Arrangement according to claim 14, characterized in that at each desired frequency signal change of H to L or L to H, a desired frequency pulse is stored and that at each actual frequency signal change from H to L or L to H an actual frequency pulse is stored.

16. Arrangement according to claim 14, characterized in that the shift register comprises x J/K flip-flops (J1–J6), to whose set inputs are applied the switching signal (β) and whereof the first m J/K flip-flops supply deceleration pulses or are used for short-circuiting the drive winding, the next J/K flip-flops (m + 1 to n − 1) serve as waiting flip-flops without supplying acceleration or deceleration pulses and that the next flip-flops (n to x) supply first acceleration pulses of positive polarity and additional acceleration pulses of negative polarity are supplied by J/K flip-flops p to x, whereby m is smaller than n, which is smaller than p, which is smaller than x.

17. Arrangement according to claims 14 to 16, characterized in that outputs (Q) of the two timed flip-flops (D14, D15) are applied to the input of an in each case one series-connected EXCLUSIVE-OR gate (G39, G40), to whose other inputs are applied the desired frequency signal ($f_s$) or with the interference suppressed actual frequency signal ($i_1$), that the outputs of the two EXCLUSIVE-OR gates (G39, G40) are connected to one input of in each case one series-connected NAND-gate (G41, G42) and via in each case one inverter (G43, G44) to the other input of the in each case other NAND-gate (G42, G41), and that the output of these two NAND-gates (G41, G42), together with the clock frequency ($f_2$) supplied across an inverter (G45) and the switching signal (β) are supplied to the shift register or the bi-directional counter.

18. Arrangement according to claim 16, characterized in that the shift register contains three J/K flip-flops (J1–J3), four NOR-gates (G46, G48, G49, G51) as well as two further inverters (G47, G50), that the clock input ($C_k$) of the J/K flip-flops (J1–J3) are connected to the inverted second clock frequency ($f_2$), that the J inputs of the J/K flip-flops (J1–J3) are connected to the outputs of the NOR-gates (G46, G48) or to the output of inverter (50), that the two NOR-gates (G46, G48) and the inverter (G50) are connected to the output of the first NAND-gate (G41), that the two other inputs of the NOR-gates (G46, G48) are connected to the inverted outputs ($\bar{Q}$) of the second J/K flip-flop (J2) or the first J/K flip-flop (J1), that the K inputs of the three J/K flip-flops (J1–J3) are cyclically reversed and connected to the outputs of inverter (G47) or the two NOR-gates (G49, G51), that in each case one input of the two NOR-gates (G49, G51) and the input of the inverter G47) is connected to the output of the second NAND-gate G42) and that the two other inputs of the NOR-gates G49, G50) are connected to the outputs (Q) of the second or third J/K flip-flops (J2, J3).

19. Arrangement according to claim 16, characterized in that the shift register has six J/K flip-flops (J1–J6), ten NOR-gates (G70–G79), and two further inverters (G80, G81), that the clock inputs ($C_k$) of the J/K flip-flops (J1–J6) are connected to the inverted second clock frequency ($F_2$), that the J inputs of the J/K flip-flops (J1–J6) are connected to the outputs of the NOR-gates (G70–G74) or to the output of one inverter (G81), that in each case one input of the NOR-gates (G70–G74) and the inverter (G81) is connected to the first NAND-gate (G81), that the other input of the NOR-gates (G70–G74) is connected to the inverted output ($\bar{Q}$) of the in each case preceding J/K flip-flop (J1–J5), that the K inputs of the first five J/K flip-flops (J1–J5) are connected to the outputs of further NOR-gates (G75–G79) and the K input of the sixth J/K flip-flop (J6) is connected to the output of a further inverter, that in each case one input of the NOR-gates (G75 to G79) and the input of the further inverter (G80) is connected to the output of the second NAND-gate (42) and the other inputs of the NOR-gates (G75–G79) are connected to the output (Q) of the following J/K flip-flops (J2–J6), and that the outputs (Q) of the third, fourth and fifth J/K flip-flops (J3–J5) are connected to the inputs of the following combination stage (10).

20. Arrangement according to claim 12, characterized in that the output signals of the automatic starting stage (8) and the phase comparator (6) are combined in the combination logic (10) and the control logic (9), in such a way that they satisfy the following truth table and lead to the following switching states of switches (S1–S8) of switching stage (3):

| Control signals | | | | | | FET switches | | | | | | | | |
|---|---|---|---|---|---|---|---|---|---|---|---|---|---|---|
| $\bar{\beta}$ | $Q_C$ | $Q_B$ | $A_A$ | I | $\bar{I}$ | S1 | S2 | S3 | S4 | S5 | S6 | S7 | S8 | Remarks |
| H | L | L | H | X | X | OFF | OFF | OFF | OFF | OFF | OFF | OFF | OFF | 1 |
| H | L | L | L | X | X | | | OFF | OFF | | | ON | ON | 2 |
| H | L | L | H | X | X | | | OFF | OFF | | | OFF | OFF | 3 |
| H | L | H | H | H | L | | | ON | OFF | | | ON | OFF | 4 |

(Fortsetzung)

| Control signals | | | | | | FET switches | | | | | | | | |
|---|---|---|---|---|---|---|---|---|---|---|---|---|---|---|
| $\bar{B}$ | $Q_C$ | $Q_B$ | $A_A$ | I | $\bar{I}$ | S1 | S2 | S3 | S4 | S5 | S6 | S7 | S8 | Remarks |
| H | L | H | H | L | H | | | OFF | OFF | | | OFF | OFF | 5 |
| H | H | H | H | H | L | | | ON | OFF | | | ON | OFF | 6 |
| H | H | H | H | L | H | OFF | OFF | OFF | ON | OFF | OFF | OFF | ON | 7 |

Remarks: 1) No pulses on winding 22
2) winding 22 in short-circuit on OV
3) no pulses on winding 22
4) + pulse on winding 22
5) no pulses on winding 22
6) + pulse on winding 22
7) − pulse on winding 22

21. Arrangement for performing the method according to claim 6, characterized in that the inputs of a comparing element (4) are connected to a speed determination device (23) of the reactive motor (2) and subject to the action of two reference voltages ($U_v$, $U_s$) and the two outputs of this comparing element (4) are connected to an interference suppression and delay stage (5), whose outputs are on the one hand connected to a nominal running-regulating device (6) and on the other hand to an automatic starting-stage (8) and that the outputs of the nominal running-regulating device (6) and the automatic starting stage (8) are connected across a control logic (9) to a switching stage (3), to which are connected both the supply voltage ($\pm U_B$) and the windings (22, 23) of the reactive motor (2) (Fig. 2).

22. Arrangement according to claim 21, characterized in that further inputs of the automatic starting stage (8) are firstly connected to the output of a waiting time element (7), to whose input is applied a freely selectable frequency ($f_3$) and at whose output there is a signal (N) dependent on the frequency ($f_3$), the nominal running signal (V) and the number of delay stages and further are subject to the action of one or more freely selectable frequencies ($f_{onz}$), which preferably rise in powers of two.

23. Arrangement according to claim 21, characterized in that the comparing element (4) contains two comparators (41, 42), whose positive inputs are connected to the speed determination device (23) and whose negative inputs are firstly (1. comparator 41) connected to one reference voltage ($U_s$) and secondly (2. comparator 42) to the other reference voltage ($U_r$).

24. Arrangement according to claim 22 or 23, characterized in that the interference suppression and delay stage contains two partial stages (51, 52), whereby the first stage (51) is connected to the output of the first comparator (41) and the second stage (52) is connected to the output of the second comparator (42) and the output (V) of the first stage (51) is connected to the input of the automatic starting stage (8) and the outputs (I, $\bar{I}$) of the second stage (52) are connected to the inputs of the nominal operation regulating device (6).

25. Arrangement according to claim 24, characterized in that the interference suppression and delay stage (51, 52) comprises the series connection of several timed flip-flops (D1–D4 or D5–D8), whose timing inputs (Ck) are synchronously subject to the action of a determinable frequency ($f_4$), that the input of the first timed flip-flop (D1 or D5) is connected to the output of the first or second comparator (41, 42), that the outputs (Q) of the timed flip-flops (D1–D8) are in each case connected to the input of the following timed flip-flops (D2–D4 or D6–D8) and that of the last timed flip-flop (D4 or D8) is connected to an input of a series-connected first NAND-gate (G1 to G5), to whose other input is connected the output of the in each case first timed flip-flop (D1 or D5), that the inverted output ($\bar{Q}$) of the in each case first or last timed flip-flops (D1 or D4, D5 or D6) are connected to the inputs of the second NAND-gate (G2 or G6), that the outputs of NAND-gates (G1, G2 or G5, G6) are connected to the inputs of a series-connected third or fourth NAND-gate (G3, G4, G7, G8), whose other input is in each case connected to the output of the in each case other NAND-gate (G3, G4 or G7, G8) and that the output (V) of the third NAND-gate (G3) of the first interference and suppression stage (51) is connected to an input of the series-connected automatic starting stage (8) and the output (I, $\bar{I}$) of the third and fourth NAND-gates (G7, G8) of the second stage (52) are connected to the inputs of the series-connected nominal operation regulating device (6).

26. Arrangement according to claim 21, characterized in that the nominal operating regulating device (6) has in each case a regulating device (61, 62) for the two nominal running pulses ($H\dot{o}$, $H\bar{o}$), whereby each regulating device (61 or 62) contains two D-flip-flops ($D_{R1}$, $D_{R2}$ or $D_{R3}$, $D_{R4}$) and two NOR-gates (G12, G13 or G14, G15), which are linked with one another in such a way that the inverted outputs ($\bar{Q}$) of the two D-flip-flops ($D_{R1}$, $D_{R2}$, $D_{R3}$, $D_{R4}$) are combined across the first NOR-gate (G12 or G13), whose output is connected to the reset inputs of the two D-flip-flops ($D_{R1}$, $D_{R2}$, $D_{R3}$, $D_{R4}$), that the inverted output ($\bar{Q}$) of the first D-flip-flops ($D_{R1}$ or $D_{R3}$ and the output ($\bar{Q}$) of the second D-flip-flops ($D_{R2}$ or $D_{R4}$), as well as the output (I) or the inverted output ($\bar{I}$) of the second interference suppression and delay stages (52) are connected to the three inputs of the second NOR-gates (G13 or G15), that the outputs of these two NOR-gates (G13, G15) are connected to the inputs of the control logic (9), the inputs of the D-flip-flops ($D_{R1}$–$D_{R4}$) are connected to the positive potential and that the rising or falling side of a frequency ($f_2$ or $\bar{f}_2$) given by the auromatic starting stage (8) is applied to the timing input ($C_k$) of the first D-flip-flop ($D_{R1}$ or $D_{R3}$) and the rising or falling side (I or $\bar{I}$) of the pulses at the second interference suppression and delay stage (52) are applied to the timing input of the second D-flip-flop ($D_{R2}$ or $D_{R4}$).

27. Arrangement according to claim 21, characterized in that the automatic starting stage (8) contains a series connection with at least two T-flip-flops ($T_{R4}$, $T_{R5}$, $T_{R6}$), whose inverted outputs ($\bar{Q}$) are connected to the input of the following T-flip-flop ($T_{R4}$, $T_{R5}$, $T_{R6}$) and the output of the third flip-flop ($T_{R6}$) is connected to the input of a first NOR-gate (G9) and supply signals (P, R, S), that the input of the first T-flip-flop ($T_{R4}$) is controlled with a predeterminable signal (N), that the reset inputs (R) are jointly connected to the output of a gate circuit with three NOR-gates (G9, G10, G11), whereby the inputs of the first NOR-gate (G9) are subject to the action of both the inverted outpunt ($\bar{Q}$) of the final T-flip-flop ($T_{R6}$) as well as the predeterminable signal (N), that an input of the second NOR-gate (10) is connected to the output of the first NOR-gate (9) and the second input is connected to the action of the automatic starting signal (V) and that the third NOR-gate (G11) is connected to the output of the second NOR-gate (G10) and subject to the action of the switching signal (β), that four AND gates (G30–G33) are provided, to whose inputs the following signals are applied:

first AND-gate (G30): inverted switching signal ($\bar{\beta}$) and third frequency signal ($f_{o3z}$);
second AND-gate (G31): switching signal (β), output signal (P) of the first T-flip-flop ($T_{R4}$), output signal (R) of second T-flip-flop ($T_{R5}$) and first frequency signal ($f_{o1z}$);
third AND-gate (G32): switching signal (β), inverted output signal ($\bar{P}$) of the first T-flip-flop ($T_{R4}$), output signal (R) of second T-flip-flop ($T_{R5}$) and second frequency signal ($f_{o2z}$);
fourth AND-gate (G33): switching signal (β), inverted output signal ($\bar{R}$) of second T-flip-flop ($T_{R5}$) and third frequency signal ($f_{o3z}$);

that the outputs of the AND-gates (G30–G33) are combined across the NOR-gate (G34) to the pulse train ($F_o$), which is connected to the input of a series-connected frequency reduction stage (82, 83), and that a flip-flop (81) is provided, to whose inputs are applied the inverted output signal ($\bar{S}$) of the third T-flip-flop and the output signal of a further NOR-gate (36) at which the inverted output signal ($\bar{S}$) and the predetermined signal (N) are combined, and at whose outputs are switching signal (β) and the inverted switching signal ($\bar{\beta}$).

28. Arrangement according to claim 21, characterized in that the reactive motor (2) has two windings (22, 23), whereby in the automatic starting mode both windings (22, 23) act as field windings and in the nominal mode one winding (22) acts as a field winding and the other winding (23) as a sensor winding (23) as a sensor winding for speed determination.

29. Arrangement according to claim 28, characterized in that the two windings (22, 23) of the reactive motor (2) are connected to switches (S1–S8) of the switching stage (3), whereby the switches are alternately connected to one or other pole of the voltage supply ($\mp U_B$) and that one or other winding end of the windings (22, 23) are connected.

30. Arrangement according to claim 21, characterized in that the control logic (9) has outputs (T5–T8) which in each case control two switches (S1, S5 or S2, S6 or S3, S7 or S4, S8) of the switching stage (3).

31. Arrangement according to claim 30, characterized in that the output signals of the automatic starting stage (8) and nominal operation regulating device (6) are combined in the control logic (9) in such a way that they satisfy the following truth table and lead to the following switching states of the switches (S1–S8) of the switching stage (3) controlled by the particular output signal (T5–T8):

| Mode | | Signals β | $T_5$ | $T_6$ | $T_7$ | $T_8$ | Hō̇ | Hō | Switches S1/S5 | S2/S6 | S3/S7 | S4/S8 |
|---|---|---|---|---|---|---|---|---|---|---|---|---|
| Automatic starting | | H | H | L | L | L | – | – | E | A | A | A |
| | | H | L | L | L | H | – | – | A | A | A | E |
| | | H | L | H | L | L | – | – | A | E | A | A |
| | | H | L | L | H | L | – | – | A | A | E | A |
| Nominal- | Hō̇ | L | L | L | H | L | H | L | A | A | E | A |
| running | Hō | L | L | L | L | H | L | H | A | A | A | E |
| operation | Hō̇ = Hō | L | L | L | L | L | L | L | A | A | A | A |

in which H = high potential
L = low potential
– = insignificant state
E = switch closed
A = switch open.

32. Arrangement according to claim 21, characterized in that the waiting time element (7) comprises one or more delay stages (T-flip-flops TR1 to TR3), whose reset inputs are synchronously reset as a function of the nominal running signal (V) and the switching signal (β) and at whose output is the predeterminable signal (N).

33. Arrangement according to claim 12 or 21, characterized in that between the two windings (22, 23) of the reactive motor (2) is formed an angle of $\Delta = k \cdot \frac{\pi}{2} - \varphi 1$ with $k = 1, 3, 5$ and $\varphi 1 = 0$ to $0.4) \cdot \frac{\pi}{2}$.

34. Arrangement according to claim 12 or 21, characterized in that the two winding ends of the windings (22, 23) are interconnected and that this common winding connection is connected to control logic (9) across two switches (S2, 4 and S5, 7), whilst the two other winding ends are connected across in each case two switches (S1, S6 or S3, S8) to said control logic (9) and that one winding end of the second winding (23) is connected to the positive inputs of comparators (41, 42) and the negative input of one comparator (42) is connected to the negative pole of the power supply ($U_{6-}$) and the other comparator (41) is connected to the one reference voltage (Us).

**Revendications**

1. Procédé de commande et de régulation d'un moteur (2) muni d'un rotor (21) à aimant permanent, au moins une paire de pôles et un stator à deux enroulements au moins (22, 23), dont au régime nominal un (22) reçoit des impulsions motrices et l'autre (23) sert d'enroulement de commande pour la détection du mouvement du rotor par rapport au stator, les mouvements du rotor étant convertis en impulsions carrées de fréquence instantanée qui sont comparées à des impulsions de fréquence de consigne à fréquence prédéterminée, et la durée des impulsions motrices étant commandée en fonction du résultat de la comparaison des impulsions de fréquence de consigne et des impulsions de fréquence instantanée, ledit procédé, destiné en particulier aux moteurs à réaction de garde-temps tels que montres, étant caractérisé en ce que la vitesse de rotation du rotor est déterminée et, quand elle tombe audessous d'une valeur prédéterminée, un autodémarrage est produit pour augmenter progressivement la vitesse de rotation du rotor par commutation cyclique et inversion de la polarité des impulsions motrices entre le premier (22) et le second (23) enroulement avec accroissement progressif des impulsions de fréquence de consigne; et, quand la vitesse nominale est atteinte, l'autodémarrage est coupé et la régulation du régime nominal est branchée.

2. Procédé selon revendication 1, caractérisé en ce que les impulsions de fréquence instantanée (i) sont retardées au régime nominal; et les impulsions de commande (A–H) sont produites par les fronts croissants et décroissants des impulsions de fréquence instantanée ou de fréquence de consigne (i, $f_s$) sur les plages des impulsions de fréquence instantanée retardées (I) ou des impulsions de fréquence instantanée inversées et retardées ($\bar{I}$) (figure 9).

3. Procédé selon revendication 2, caractérisé en ce que pour l'accélération du moteur dans le sens de rotation souhaité ou le freinage du moteur dans le sens opposé, des impulsions de commande (A, B; E, F), au cours d'une alternance, augmentent avec les fronts croissants des impulsions de fréquence de consigne ($f_s$) et diminuent avec le front croissant des impulsions de fréquence instantanée (i) sur la plage des impulsions de fréquence instantanée ($\bar{I}$) inversées et retardées, ou augmentent avec les fronts décroissants des impulsions de fréquence de consigne ($f_s$) et diminuent avec le front décroissant des impulsions de fréquence instantanée sur la plage des impulsions de fréquence instantanée (I) retardées (figure 9).

4. Procédé selon revendication 2, caractérisé en ce que pour le freinage du moteur dans le sens de rotation souhaité ou dans le sens opposé, le premier enroulement, constituant l'enroulement de travail (22), est court-circuité par des impulsions de commande (C, D; G, H) avec les fronts croissants ou décroissants des impulsions de fréquence instantanée (i), et le court-circuit est supprimé par les fronts croissants ou décroissants des impulsions de fréquence de consigne ($f_2$) (figure 9).

5. Procédé selon revendications 1 à 4, caractérisé en ce que lors de la commutation du mode autodémarrage ou mode régulation, la durée de la dernière impulsion de mode autodémarrage n'est qu'une fraction, et de préférence la moitié de celle de l'impulsion d'autdémarrage précédente.

6. Procédé selon revendication 1, caractérisé en ce que le second enroulement (23) délivre une tension proportionnelle à la vitesse de rotation du rotor et qui est comparée à deux tensions de référence ($U_v$, $U_s$); et dans le cas de tensions proportionnelles à la vitesse de rotation et supérieures aux deux tensions de référence ($U_v$, $U_s$), deux signaux (v, i) sensiblement carrés sont délivrés, débarrassés des impulsions parasites, retardés d'un temps ajustable (Δt) et

a) appliqués sous forme d'impulsions de fréquence instantanée (I, $\bar{I}$) à un dispositif de régulation du régime nominal (6), qui les compare à des impulsions de fréquence de consigne ($f_2$, $\bar{f_2}$), puis délivre deux impulsions différentes de régime nominal ($H\dot{o}$, $H\bar{o}$), et

b) sont appliqués sous forme de signaux de régime nominal (V) à un étage d'autodémarrage (8) qui reçoit en outre un ou plusieurs signaux de fréquence différents ($f_{onz}$, N), la disparition des signaux de régime nominal (V) déclenchant la délivrance de trains d'impulsions de démarrage ($t_1$, 1Z, 2Z, 3Z) et d'un signal de commutation (β, $\bar{\beta}$), les impulsions de régime nominal ($H\dot{o}$, $H\bar{o}$) et les trains d'impulsions de démarrage ($t_1$; 1Z, 2Z, 3Z) étant appliqués avec le signal de commutation (β, $\bar{\beta}$) à une logique de commande (9), qui combine les impulsions et signaux appliqués et délivre des impulsions de sortie (T5–T8) à un étage de commutation (3) en aval de façon que:

a) au régime nominal selon le principe d'un moteur synchrone comportant un enroulement d'excitation (premier enroulement 22) et un enroulement de capteur (second enroulement 23), les impulsions de régime nominal (H$\dot{o}$, H$\bar{o}$) connectent alternativement les bornes (22a, 22b) du premier enroulement (22) à la tension de pile positive ou négative ($+U_B$, $-U_B$), et

b) pendant l'autodémarrage selon le principe d'un moteur pas à pas à deux enroulements, des trains d'impulsions de fréquence croissante soient délivrés alternativement aux deux enroulements (22, 23).

7. Procédé selon revendication 6, caractérisé en ce que lors de la disparition d'un signal de régime nominal (V), les trains d'impulsions de dèmarrage ($t_1$, 1Z, 2Z, 3Z) sont produits comme suit: des impulsions retardées ou des intervalles de temps sont produits, qui sont verrouillés par le ou les signaux de fréquence supplémentaire appliqués ($f_{o1z}$, $f_{o2z}$, $f_{o3z}$, N) de façon que la sortie délivre un seul train d'impulsions correspondant à 1/n de la fréquence nominale ou plusieurs trains d'impulsions de fréquence croissante ($f_o$).

8. Procédé selon revendication 7, caractérisé en ce que le signal de commutation ($\beta$, $\bar{\beta}$) est produit par combinaison logique du signal de régime nominal (V) et du signal de sortie (N) de l'élément de temps d'attente (7).

9. Procédé selon revendication 6, caractérisé en ce que les impulsions de régime nominal (H$\dot{o}$, H$\bar{o}$) sont produites par combinaison des fronts croissants de décroissants des impulsions de fréquence et consigne ($f_2$) et des impulsions de fréquence instantanée (I, $\bar{I}$).

10. Procédé selon revendication 9, caractérisé en ce que les impulsions de régime nominal inversées (H$\bar{o}$) augmentent avec les fronts décroissants des impulsions de fréquence de consigne inversées ($\bar{f}_2$) et diminuent avec les fronts croissants des impulsions de fréquence instantanée (I), et les impulsions de régime nominal (H$\dot{o}$) augmentent avec les fronts croissants des impulsions de fréquence de consigne ($f_2$) et diminuent avec les fronts décroissants des impulsions de fréquence instantanée inversées ($\bar{I}$).

11. Procédé selon une quelconque des revendications 1 à 10, caractérisé par une répétition de l'autodémarrage quand l'autodémarrage précédent n'a pas abouti à la vitesse nominale.

12. Dispositif pour la mise en œuvre du procédé selon une quelconque des revendications 1 à 6, caractérisé en ce que les entrées d'un comparateur (4) sont chargées par l'enroulement de commande (23) du moteur à réaction (2) et deux tensions de référence ($U_r$, $U_s$), et les deux sorties (v, i) du comparateur (4) sont reliées à un étage d'antiparasitage et de retard (5), dont la première sortie ($i_1$) est reliée à un comparateur de phase (6), la deuxième sortie (V) est reliée à un étage d'autodémarrage (8) et à un élément de temps d'attente (7), et la troisième sortie (I, $\bar{I}$) est reliée avec les sorties ($Q_1$, $Q_3$) du comparateur de phase (6) à une logique combinatoire (10); et les sorties ($\beta$, $\bar{\beta}$, $F_1$, $\bar{F}_1$, $F_2$, $\bar{F}_2$) de l'étage d'autodémarrage (8) et la sortie de la logique combinatoire (10) sont reliées par une logique de commande (9) à un étage de commutation (3) auquel sont reliés la tension d'alimentation ($\pm U_B$) et les enroulements (22, 23) du moteur à réaction (2).

13. Dispositif selon revendication 12, caractérisé en ce que l'étage d'antiparasitage et de retard (5) contient un étage d'antiparasitage (521) alimenté par une fréquence d'horloge (f1), dont la sortie est reliée d'une part au comparateur de phase alimenté par une deuxième fréquence d'horloge (f2) et d'autre part à un élément de retard (522) alimenté par une troisième fréquence d'horloge (f3); et les sorties (Q1, Q3) du comparateur de phase (6) et les sorties (I, $\bar{I}$) de l'élément de retard (522) sont reliées à la logique combinatoire (10) (figure 8).

14. Dispositif selon revendication 12, caractérisé en ce que le comparateur de phase (6) comporte deux bascules synchronisées (D14; D15), dont les entrées reçoivent les impulsions de fréquence de consigne ($f_s$) ou les impulsions de fréquence instantanée ($i_1$), dont les entrées d'horloge ($T_k$) reçoivent la deuxième fréquence d'horloge ($f_2$) et dont les sorties sont reliées par des opérateurs combinatoires (G39–G42) à un registre à décalage ou un compteur bidirectionnel.

15. Dispositif selon revendication 14, caractérisé par la mémorisation d'une impulsion de fréquence de consigne à chaque transition du signal de fréquence de consigne de H vers L ou de L vers H, et la mémorisation d'une impulsion de fréquence instantanée à chaque transition du signal de fréquence instantanée de H vers L ou de L vers H.

16. Dispositif selon revendication 14, caractérisé en ce que le registre à décalage est constitué par x bascules J/K (J1–J6), dont les entrées de mise à 1 sont chargées par le signal de commutation ($\beta$), dont les m premières bascules J/K délivrent des impulsions de freinage ou de courtcircuitage de l'enroulement de travail, et dont les bascules J/K suivantes ($m+1$ à $n-1$) constituent des bascules d'attente ne délivrant aucune impulsion d'accélération ou de freinage; et les bascules suivantes (n à x) délivrent des premières impulsions d'accélération de polarité positive, les bascules J/K p à x délivrant des impulsions d'accélération supplémentaires de polarité négative avec $m < n < p < x$.

17. Dispositif selon revendications 14 à 16, caractérisé en ce que les sorties (Q) des deux bascules synchronisées (D14, D15) sont reliées chacune à un opérateur OU exclusif en aval (G39, G40) dont la seconde entrée est chargée par le signal de fréquence de consigne ($f_s$) ou le signal de fréquence instantanée ($i_1$) déparasité; les sorties des deux opérateurs OU exclusif (G39, G40) sont reliées chacune à une entrée d'un opérateur NON-ET (G41, G42) en aval et, par un inverseur (G43, G44), à la seconde entrée de l'autre opérateur NON-ET (G42, G41); et les sorties de ces deux opérateurs NON-ET (G41, G42) sont reliées, avec la fréquence d'horloge ($f_2$) appliquée par un inverseur (G45), et le signal de commutation (β) au registre à décalage ou au compteur bidirectionnel.

18. Dispositif selon revendication 16, caractérisé en ce que le registre à décalage comporte trois bascules J/K (J1–J3), quatre opérateurs NI (G46, G48; G49, G51) et deux autres inverseurs (G47, G50); les entrées d'horloge ($C_K$) des bascules J/K (J1–J3) sont reliées à la deuxième fréquence d'horloge ($f_2$) inversée; les entrées J des bascules J/K (J1–J3) sont reliées aux sorties des opérateurs NI (G46, G48) ou à la sortie de l'inverseur (G50); les deux opérateurs NI (G46; G48) et l'inverseur (G50) sont reliés à la sortie du premier opérateur NON-ET (G41); les deux autres entrées des opérateurs NI (G46, G48) sont reliées aux sorties inverseuses ($\overline{Q}$) de la deuxième bascule J/K ou de la première bascule J/K (J1); les entrées K des trois bascules J/K (J1–J3) sont reliées par permutations cycliques aux sorties de l'inverseur (G47) ou de deux opérateurs NI (G49, G51); une entrée de chacun des deux opérateurs NI (G49, G51) et l'entrée de l'inverseur G47 sont reliées à la sortie du deuxième opérateur NON-ET (G42); et les deux autres entrées des opérateurs NI (G49, G50) sont reliées aux sorties (Q) de la deuxième ou de la troisième bascule J/K (J2, J3).

19. Dispositif selon revendication 16, caractérisé en ce que le registre à décalage comprend six bascules J/K (J1–J6), dix opérateurs NI (G70–G79) et deux autres inverseurs (G80, G81); les entrées d'horloge ($C_K$) des bascules J/K (J1–J6) sont reliées à la deuxième fréquence d'horloge ($f_2$) inversée; les entrées J des bascules J/K (J1–J6) sont reliées aux sorties d'opérateurs NI (G70–G74) ou à la sortie de l'inverseur (G81); une entrée de chacun des opérateurs NI (G70–G74) et l'inverseur (G81) sont reliés à la sortie du premier opérateur NON-ET (G41); les secondes entrées des opérateurs NI (G70–G74) sont reliées à la sortie inverseuse ($\overline{Q}$) de la bascule J/K précédente (J1–J5); les entrées K des cinq premières bascules J/K (J1–J5) sont reliées aux sorties d'autres opérateurs NI (G75–G79) et l'entrée K de la sixième bascule J/K (J6) à la sortie d'un autre inverseur; une entrée de chacun des opérateurs NI (G75–G79) et l'entrée de l'autre inverseur (G80) sont reliées à la sortie du deuxième opérateur NON-ET (42) et les secondes entrées des opérateurs NI (G75–G79) à la sortie Q de la bascule J/K en aval (J2–J6); et les sorties (Q) des troisième, quatrième et cinquième bascules J/K (J3–J5) sont reliées aux entrées de l'étage combinatoire (10) en aval.

20. Dispositif selon revendication 12, caractérisé en ce que les signaux de sortie de l'étage d'autodémarrage (8) et du comparateur de phase (6) sont combinés par la logique combinatoire (10) et la logique de commande (9) de façon qu'ils satisfassent à la table de vérité ci-dessous et produisent les états suivants des interrupteurs (S1–S8) de l'étage de commutation (3):

| Signaux de commande | | | | | | Interrupteurs TEC | | | | | | | | |
|---|---|---|---|---|---|---|---|---|---|---|---|---|---|---|
| $\overline{\beta}$ | $Q_C$ | $Q_B$ | $A_A$ | I | $\overline{I}$ | S1 | S2 | S3 | S4 | S5 | S6 | S7 | S8 | Obs. |
| H | L | L | H | X | X | HORS | HORS | HORS | HORS | HORS | HORS | HORS | HORS | 1 |
| H | L | L | L | X | X | | | HORS | HORS | | | EN | EN | 2 |
| H | L | L | H | X | X | | | HORS | HORS | | | HORS | HORS | 3 |
| H | L | H | H | H | L | | | EN | HORS | | | EN | HORS | 4 |
| H | L | H | H | L | H | | | HORS | HORS | | | HORS | HORS | 5 |
| H | H | H | H | H | L | | | EN | HORS | | | EN | HORS | 6 |
| H | H | H | H | L | H | HORS | HORS | HORS | EN | HORS | HORS | HORS | EN | 7 |

Observations: 1) pas d'impulsion sur l'enroulement 22
2) enroulement 22 court-circuité à 0 V
3) pas d'impulsion sur l'enroulement 22
4) impulsion + sur l'enroulement 22
5) pas d'impulsion sur l'enroulement 22
6) impulsion + sur l'enroulement 22
7) impulsion − sur l'enroulement 22

21. Dispositif pour la mise en œuvre du procédé selon revendication 6, caractérisé en ce que les entrées d'un comparateur (4) sont chargées par un dispositif de détection (23) de la vitesse de rotation du moteur à réaction (2) et deux tensions de référence ($U_r$, $U_s$), et les deux sorties du comparateur (4) sont reliées à un étage d'antiparasitage et de retard (5), dont les sorties sont reliées d'une part à un dispositif (6) de régulation du régime nominal et d'autre part à un étage d'autodémarrage (8); et les sorties du dispositif (6) de régulation du régime nominal et de l'étage d'autodémarrage (8) sont reliées par une logique de commande (9) à un étage de commutation (3) auquel sont reliés la tension d'alimentation ($\pm U_B$) et les enroulements (22, 23) du moteur à réaction (2) (figure 2).

22. Dispositif selon revendication 21, caractérisé en ce que d'autres entrées de l'étage d'autodémarrage (8) sont reliées d'une part à la sortie d'un élément de temps d'attente (7), dont l'entrée reçoit une fréquence ($f_3$) choisie librement et dont la sortie délivre un signal (N) fonction de la fréquence ($f_3$), du signal de régime nominal (V) et du nombre d'étage de retard, et d'autre part à une ou plusieurs fréquences ($f_{onz}$) choisies librement et croissant de préférence comme les puissances de 2.

23. Dispositif selon revendication 21, caractérisé en ce que l'étage comparateur (4) comporte deux comparateurs (41, 42), dont les entrées positives sont reliées au dispositif (23) de détection de la vitesse de rotation et les entrées négatives d'une part (1^er^ comparateur 41) à une tension de référence ($U_s$) et d'autre part (2^e^ comparateur 42) à la seconde tension de référence ($U_r$).

24. Dispositif selon une des revendications 22 ou 23, caractérisé en ce que l'étage d'antiparasitage et de retard comporte deux étages partiels (51, 52), le premier étage d'antiparasitage et de retard (51) étant relié à la sortie du premier comparateur (41) et le second étage d'antiparasitage et de retard (52) à la sortie du second comparateur (42), la sortie (V) du premier étage d'antiparasitage et de retard (51) étant relié à l'entrée de l'étage d'autodémarrage (8) et les sorties (I, $\bar{I}$) du second étage d'antiparasitage et de retard (52) aux entrées du dispositif (6) de régulation du régime nominal.

25. Dispositif selon revendication 24, caractérisé en ce que l'étage d'antiparasitage et de retard (51, 52) est constitué par le couplage en série de plusieurs bascules synchronisées (D1–D5–D8), dont les entrées d'horloge (Ck) sont chargées au synchronisme par une fréquence ($f_4$) déterminable; l'entrée de la première bascule synchronisée (D1 ou D5) est reliée à la sortie du premier ou du second comparateur (41, 42); les sorties (Q) des bascules synchronisées (D1–D8) sont reliées chacune à l'entrée de la bascule synchronisée en aval (D2–D4 ou D6–D8) et l'entrée de la dernière bascule synchronisée (D4 ou D8) est reliée à une entrée d'un premier opérateur NON-ET (G1 ou G5) en aval, dont la seconde entrée est reliée à la sortie de la première bascule synchronisée (D1 ou D5); les entrées d'un deuxième opérateur NON-ET (G2 ou G6) sont reliées aux sorties inverseuses ($\bar{Q}$) de la première ou de la dernière bascule synchronisée (D1 ou D4, D5 ou D8); les sorties des opérateurs NON-ET (G1, G2 ou G5, G6) sont reliées à une entrée d'un troisième ou quatrième opérateur NON-ET en aval (G3, G4 ou G7, G8), dont la seconde entrée est reliée à la sortie de l'autre opérateur NON-ET (G3, G4 ou G7, G8); et la sortie (V) du troisième opérateur NON-ET du premier étage d'antiparasitage et de retard (51) est reliée à une entrée de l'étage d'autodémarrage (8) en aval et les sorties (I, $\bar{I}$) des troisième et quatrième opérateur NON-ET (G7, G8) du second étage d'antiparasitage et de retard (52) sont reliées aux entrées du dispositif (6) de régulation du régime nominal en aval.

26. Dispositif selon revendication 21, caractérisé en ce que le dispositif (6) de régulation du régime nominal comprend un dispositif de régulation (61, 62) pour chacun des deux types d'impulsions de régime nominal (Hŏ, Hō), chaque dispositif de régulation (61 ou 62) comportant deux bascules D (DR1, DR2 ou DR3, DR4) et deux opérateurs NI (G12, G13, ou G14, G15), qui sont combinés de façon que les sorties inverseuses ($\bar{Q}$) des deux bascules D (DR1, DR2, DR3, DR4) soient réunies par le premier opérateur NI (G12 ou G14), dont la sortie est reliée aux entrées de remise à 0 des deux bascules D (DR1, DR2, DR3, DR4); la sortie inverseuse ($\bar{Q}$) de la première bascule D (DR1 ou DR3), la sortie (Q) de la deuxième bascule D (DR2 ou DR4) et la sortie (I) ou la sortie inverseuse ($\bar{I}$) du second étage d'antiparasitage et de retard (52) sont reliées aux trois entrées du deuxième opérateur NI (G13 ou G15); les sorties de ces deux opérateurs NI (G13, G15) sont reliées à des entrées de la logique de commande (9); les entrées des bascules D (DR1–DR4) sont reliées au potentiel positif; et l'entrée d'horloge ($C_k$) de la première bascule D (DR1 ou DR3) est chargée par le front décroissant ou croissant d'une fréquence ($f_2$ ou $\bar{f}_2$) prédéterminée par l'étage d'autodémarrage (8), et l'entrée d'horloge de la seconde bascule D (DR2 ou DR4) est chargée par le front croissant ou décroissant (I ou $\bar{I}$) des impulsions apparaissant à la sortie du second étage d'antiparasitage et de retard (52).

27. Dispositif selon revendication 21, caractérisé en ce que l'étage d'autodémarrage (8) comprend le couplage en série d'au moins deux bascules T (TR4, TR5, TR6), dont les sorties inverseuses ($\bar{Q}$) sont reliées à l'entrée de la bascule T en aval (TR4, TR5, TR6) et la sortie de la troisième bascule (TR6) est reliée à l'entrée d'un premier opérateur NI (G9), lesdites sorties délivrant des signaux (P, R, S); l'entrée de la première bascule T (TR4) est commandée par un signal (N) prédéterminable; les entrées (R) de remise à 0 communes sont reliées à la sortie d'un circuit de trois opérateurs NI (G9, G10, G11), les entrées du premier opérateur NI (G9) étant chargées par la sortie inverseuses ($\bar{Q}$) de la dernière bascule T (TR6) et par le signal (N) prédéterminable; une entrée du deuxième opérateur NI (10) est reliée à la sortie du premier opérateur NI (G9) et la seconde entrée par le signal d'autodémarrage (V); le troisième opérateur NI (G11) est chargé par la sortie du deuxième opérateur NI (G10) et par le signal de commutation (β); quatre opérateurs ET (G30–G33) sont prévus, aux entrées desquels sont appliqués les signaux suivants:

premier opérateur ET (G30): signal de commutation inversé $\bar{\beta}$) et troisième signal de fréquence ($f_{o3z}$)

deuxième opérateur ET (G31): signal de commutation (β), signal de sortie (P) de la première bascule T (TR4), signal de sortie (R) de la deuxième bascule T (TR5) et premier signal de fréquence ($f_{o1z}$)

troisième opérateur ET (G32): signal de commutation (β), signal de sortie inversé ($\bar{P}$) de la première bascule T (TR4), signal de sortie (R) de la deuxième bascule T (TR5) et deuxième signal de fréquence ($f_{o2z}$)

quatrième opérateur ET (G33): signal de commutation (β), signal de sortie inversé ($\bar{R}$) de la deuxième bascule T (TR5) et troisième signal de fréquence ($f_{o3z}$);

les sorties des opérateurs ET (G30–G33) sont réunies par un opérateur NI (G34) pour délivrer un train d'impulsions ($f_o$) qui est appliqué à l'entrée d'un étage diviseur de fréquence (82, 83 en aval); et une bascule (81) est prévue, aux entrées de laquelle sont appliqués le signal de sortie inversé ($\bar{S}$) de la troisième bascule T et le signal de sortie d'un autre opérateur NI (36), qui réunit le signal de sortie inversé ($\bar{S}$) et le signal (N) prédéterminable, et dont les sorties délivrent le signal de commutation ($\beta$) et le signal de commutation inversé ($\bar{\beta}$).

28. Dispositif selon revendication 21, caractérisé en ce que le moteur à réaction (2) comporte deux enroulements (22, 23), constituant tous les deux des enroulements d'excitation en mode autodémarrage, tandis qu'au régime nominal, un enroulement (22) sert d'enroulement d'excitation et l'autre (23) d'enroulement de capteur pour la détection de la vitesse de rotation.

29. Dispositif selon revendication 28, caractérisé en ce que les deux enroulements (22, 23) du moteur à réact; on (2) sont reliés à des interrupteurs (S1–S8) de l'étage de commutation (3), lesdits interrupteurs étant reliés alternativement à l'une ou l'autre borne de la source de tension ($\pm U_B$) et à l'une ou l'autre extrémité des enroulements (22, 23).

30. Dispositif selon revendication 21, caractérisé en ce que la logique de commande (9) comporte des sorties (T5–T8), commandant chacune deux interrupteurs (S1, S5; S2, S6; S3, S7 ou S4, S8) de l'étage de commutation (3).

31. Dispositif selon revendication 30, caractérisé en ce que les signaux de sortie de l'étage d'autodémarrage (8) et le dispositif (6) de régulation du régime normal sont combinés par la logique de commande (9) de façon qu'ils satisfassent à la table de vérité ci-dessous et produisent les états suivants des interrupteurs (S1–S8) de l'étage de commutation (3) commandés par le signal de sortie instantané (T5–T8):

| Service | | Signaux $\beta$ | $T_5$ | $T_6$ | $T_7$ | $T_8$ | $H\overset{+}{o}$ | $H\bar{o}$ | Interrupteurs S1/S5 | S2/S6 | S3/S7 | S4/S8 |
|---|---|---|---|---|---|---|---|---|---|---|---|---|
| Autodémarrage | | H | H | L | L | L | – | – | E | A | A | A |
| | | H | L | L | L | H | – | – | A | A | A | E |
| | | H | L | H | L | L | – | – | A | E | A | A |
| | | H | L | L | H | L | – | – | A | A | E | A |
| Régime | $H\overset{+}{o}$ | L | L | L | H | L | H | L | A | A | E | A |
| nominal | $H\bar{o}$ | L | L | L | L | H | L | H | A | A | A | E |
| | $H\overset{+}{o}=H\bar{o}$ | L | L | L | L | L | L | L | A | A | A | A |

avec: H = potentiel haut
L = potentiel bas
– = état indifférent
E = interrupteur fermé
A = interrupteur ouvert

32. Dispositif selon revendication 21, caractérisé en ce que l'élément de temps d'attente (7) est constitué par un ou plusieurs étages de retard (bascules T TR1 à TR3), dont les entrées de remise à 0 sont remises à 0 au synchronisme en fonction du signal de régime nominal (V) et du signal de commutation $\beta$, et dont la sortie délivre le signal (N) prédéterminable.

33. Dispositif selon une des revendications 12 ou 21, caractérisé en ce que les deux enroulements (22, 23) du moteur à réaction (2) forment un angle: $\Delta = k \cdot \frac{\pi}{2} - \varphi_1$ avec $k = 1, 3, 5$ et $\varphi_1 = 0$ à $0{,}4) \cdot \frac{\pi}{2}$.

34. Dispositif selon une des revendications 12 ou 21, caractérisé en ce que deux extrémités des enroulements (22 et 23) sont connectées et cette borne commune (par l'intermédiaire de deux interrupteurs S2, 4 et S5, 7) et les deux autres extrémités d'enroulement, chacune par deux interrupteurs (S1, S6 ou S3, S8), sont reliées à la logique de commande (9); une extrémité du second enroulement (23) est reliée aux entrées positives des comparateurs (41, 42), l'entrée négative d'un comparateur (42) est reliée à la borne négative de l'alimentation ($U_{B-}$) et celle du second comparateur (41) est reliée à une tension de référence ($U_s$).

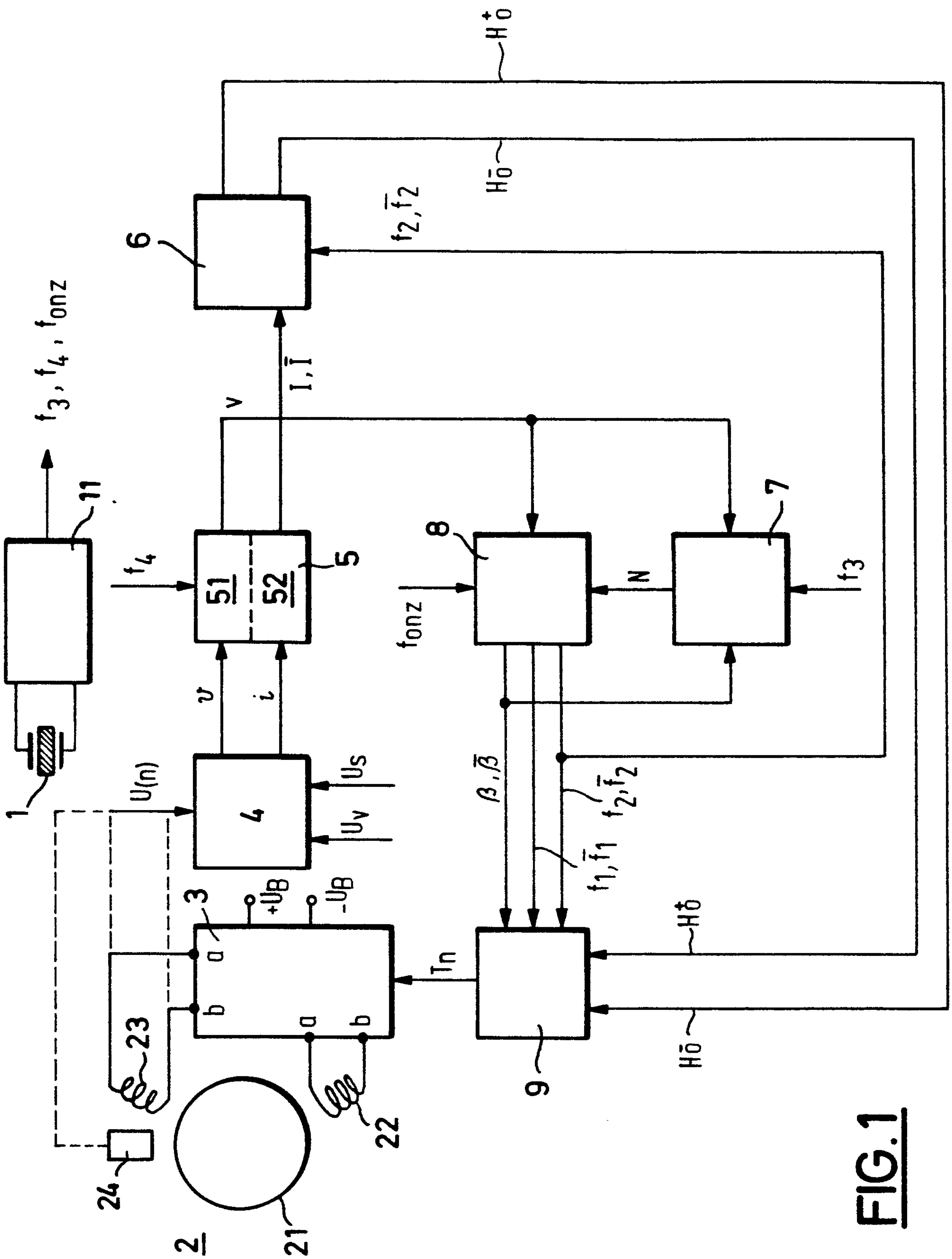
1
11
f3, f4, fonz
f4
51
52
5
v
V
i
I, Ī
6
f2, f̄2
H0+
H0-
4
U(n)
Us
Uv
3
a
b
+UB
-UB
23
22
24
21
2
8
fonz
7
N
f3
β, β̄
f1, f̄1
f2, f̄2
9
Tn
H0+
H0-

FIG.1

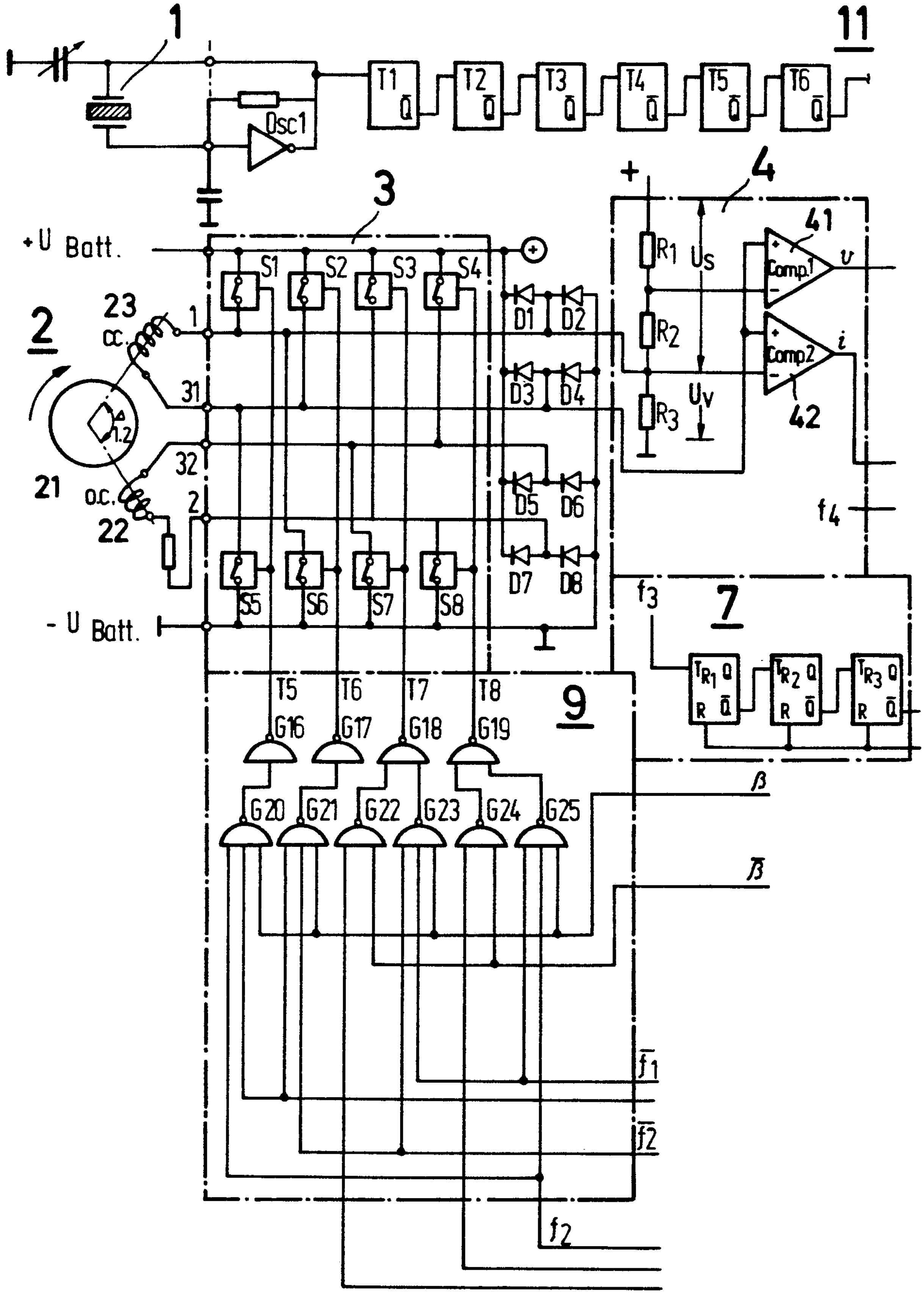
1
11
T1
T2
T3
T4
T5
T6
Osc1
3
4
+
+U Batt.
S1 S2 S3 S4
S5 S6 S7 S8
D1 D2 D3 D4 D5 D6 D7 D8
R1 R2 R3
Us
Uv
41
42
Comp.1
Comp.2
2
23
oc.
1
31
32
2
21
22
o.c.
1.2
- U Batt.
f4
f3
7
TR1 TR2 TR3
T5 T6 T7 T8
9
G16 G17 G18 G19
G20 G21 G22 G23 G24 G25
f1
f2

FIG. 2a → FIG. 2b

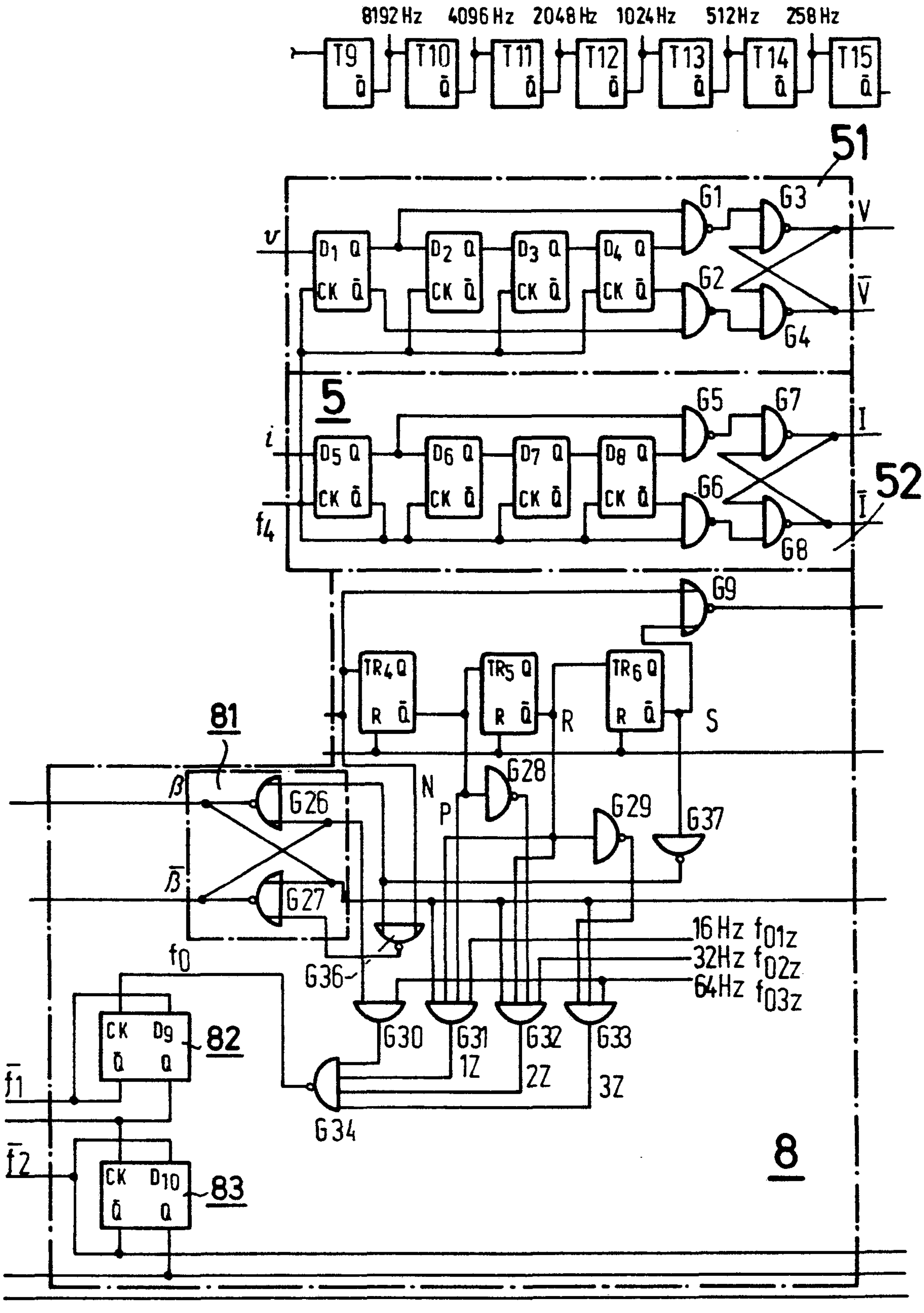
8192 Hz
4096 Hz
2048 Hz
1024 Hz
512 Hz
258 Hz
T9
T10
T11
T12
T13
T14
T15
51
G1
G3
V
v
D1 Q
CK Q̄
D2 Q
D3 Q
D4 Q
G2
V̄
G4
5
G5
G7
I
i
D5 Q
D6 Q
D7 Q
D8 Q
G6
52
Ī
f4
G8
G9
TR4 Q
TR5 Q
TR6 Q
R Q̄
R
S
81
N
P
G28
β
G26
G29
G37
β̄
G27
16 Hz f01z
32Hz f02z
64Hz f03z
f0
G36
G30
G31
G32
G33
1Z
2Z
3Z
CK D9
82
f̄1
G34
f̄2
CK D10
83
8

FIG. 2 b → FIG. 2c

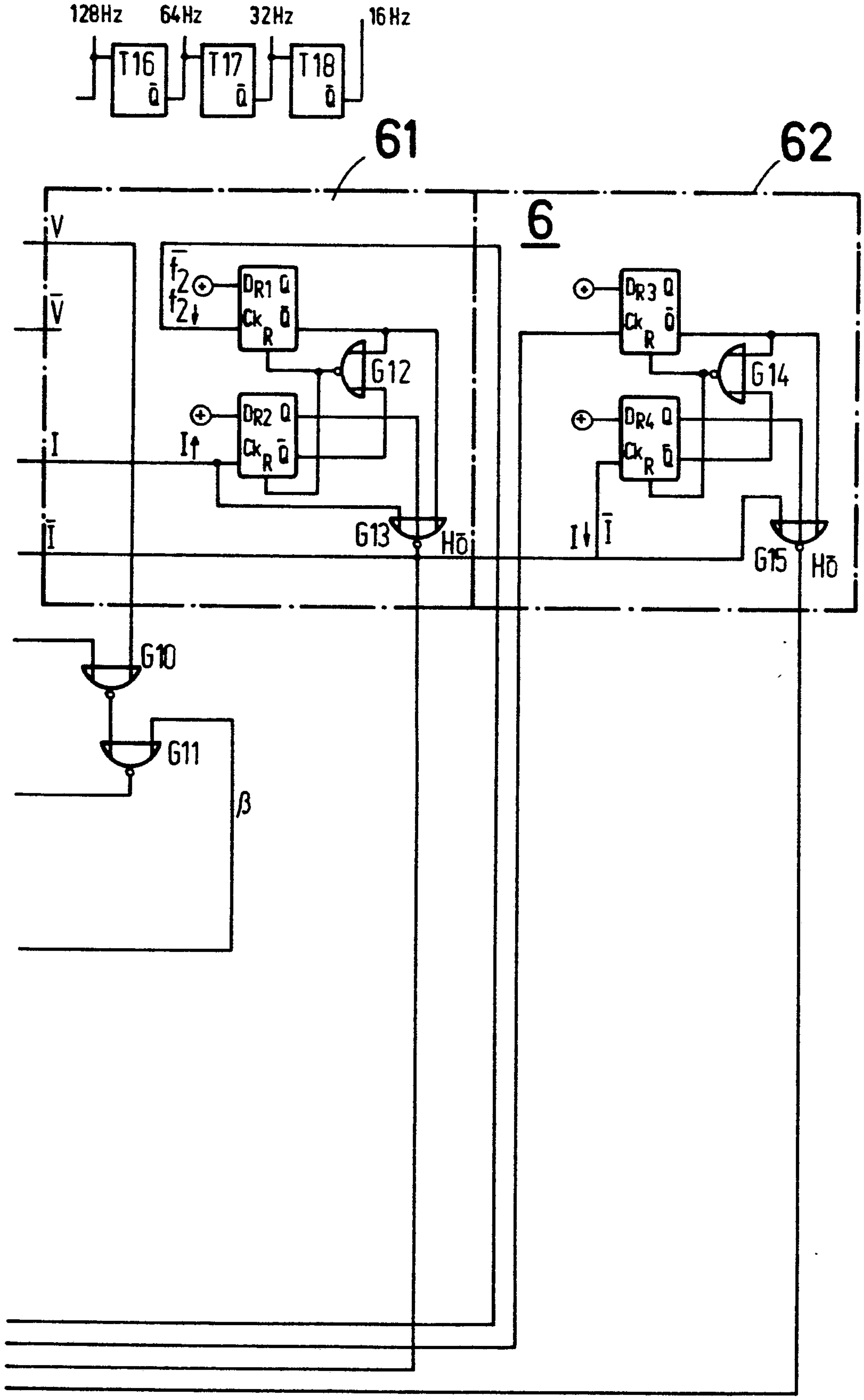
128Hz
64Hz
32Hz
16Hz
T16
T17
T18
Q̄
61
62
6
V
V̄
I
Ī
f̄2
f2↓
DR1 Q
Ck R Q̄
DR2 Q
Ck R Q̄
DR3 Q
Ck R Q̄
DR4 Q
Ck R Q̄
G12
G13
G14
G15
I↑
I↓
Hō
G10
G11
β

FIG. 2c

FIG. 3

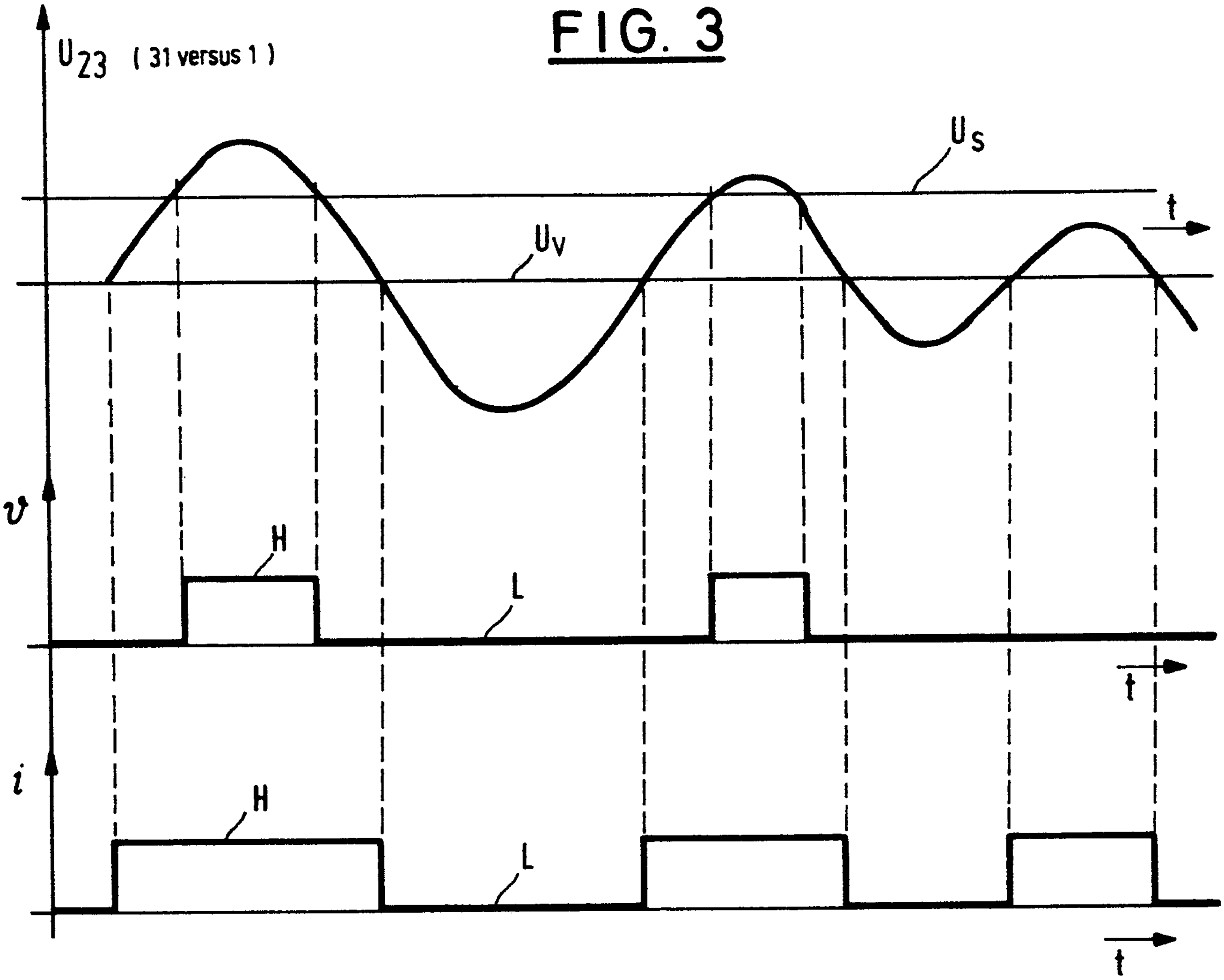

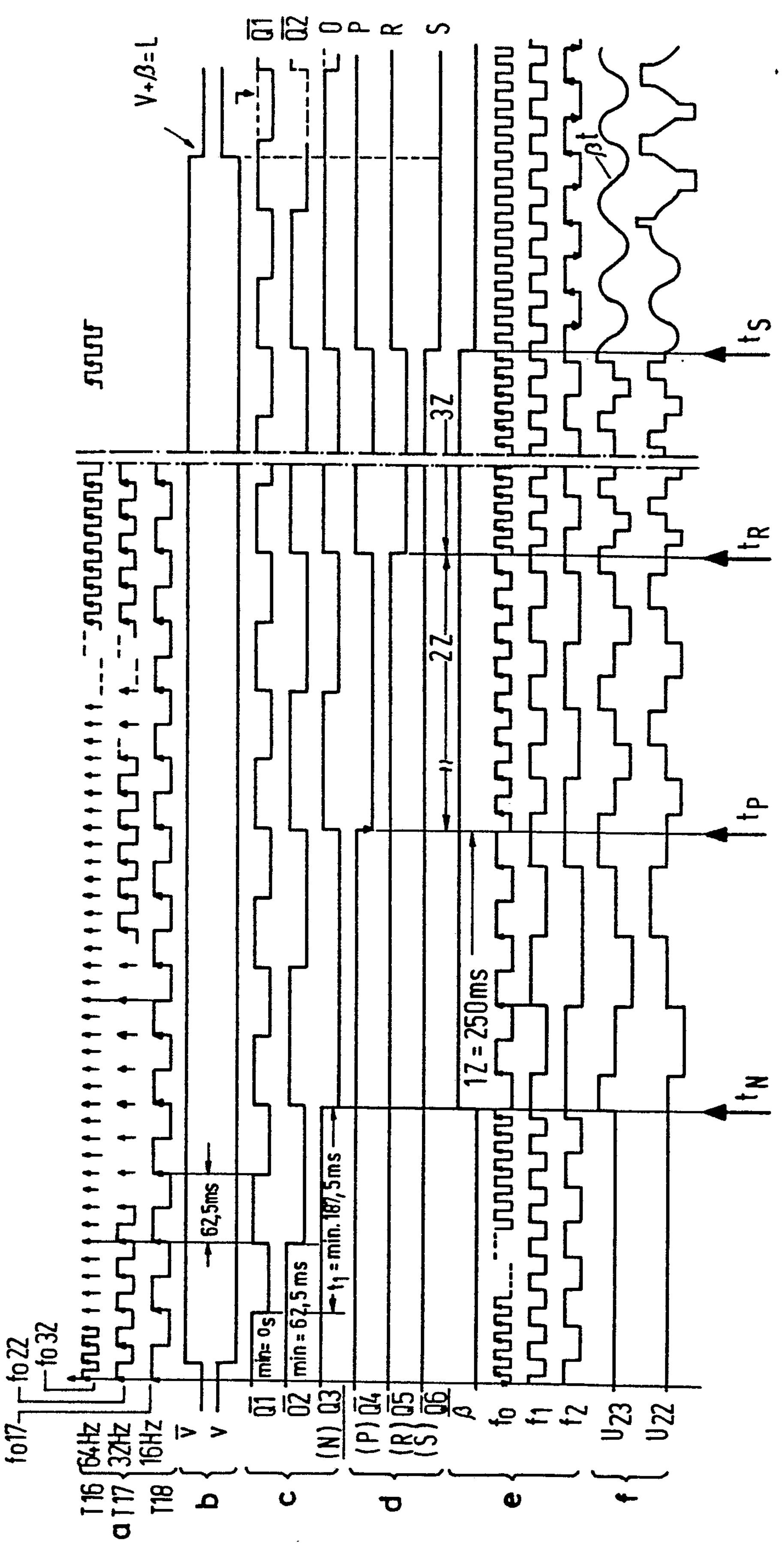

V+β=L
a
T16
T17
T18
64Hz
32Hz
16Hz
fo17
fo22
fo32
b
c
d
e
f
62,5ms
min = 0s
min = 62,5 ms
t1 = min. 187,5 ms
1Z = 250ms
2Z
3Z
tN
tP
tR
tS


FIG. 4

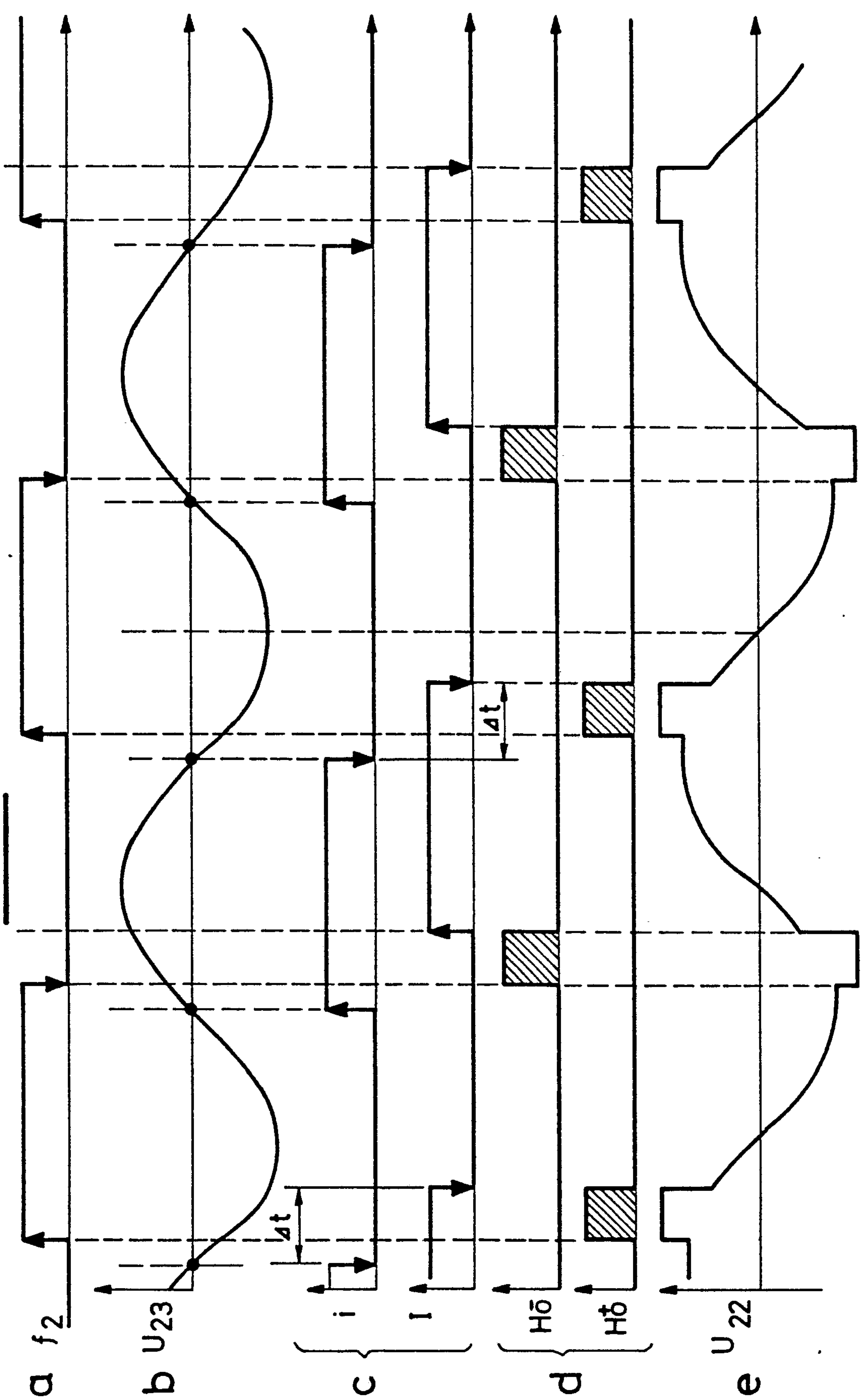


FIG. 5

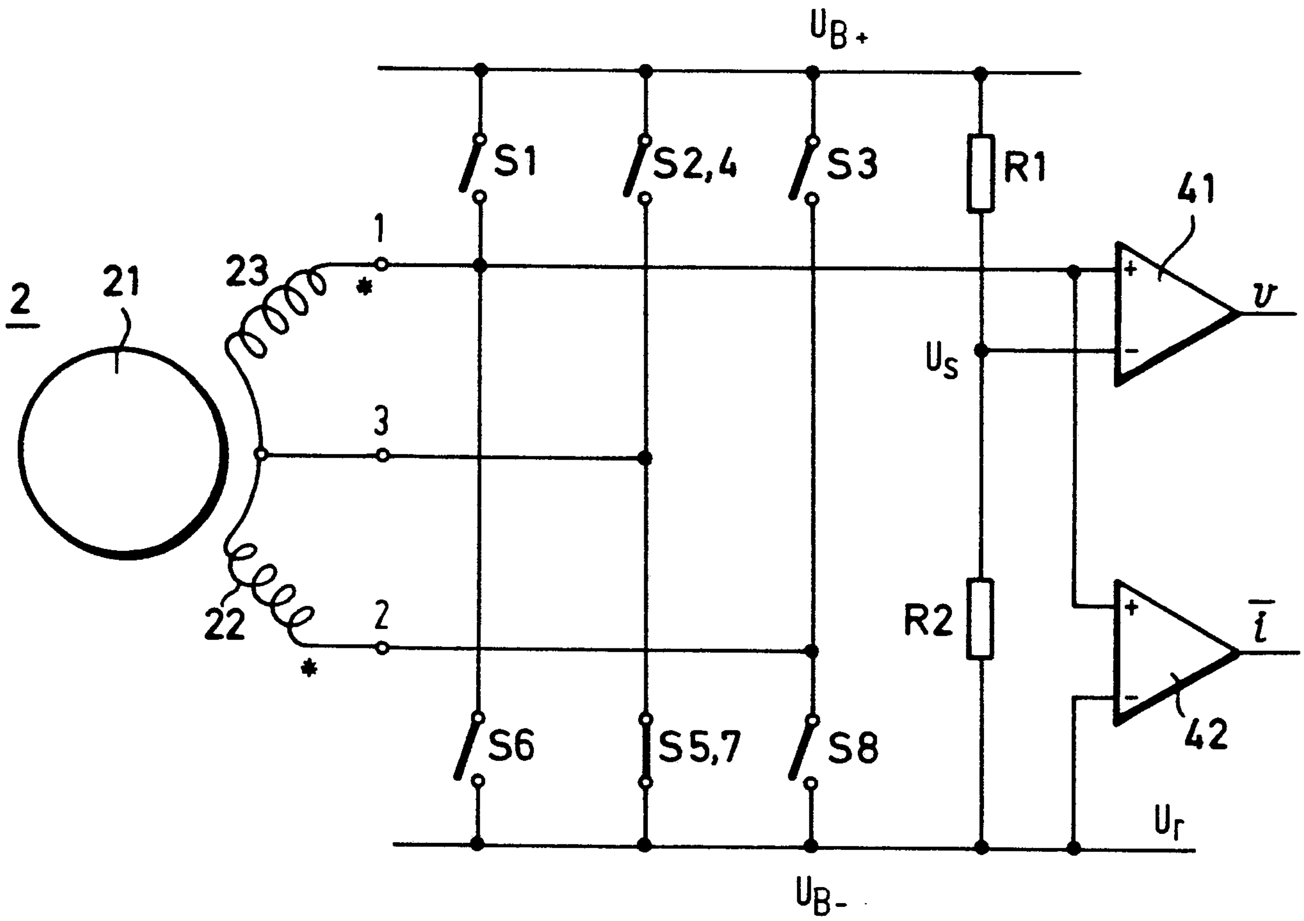


FIG. 6

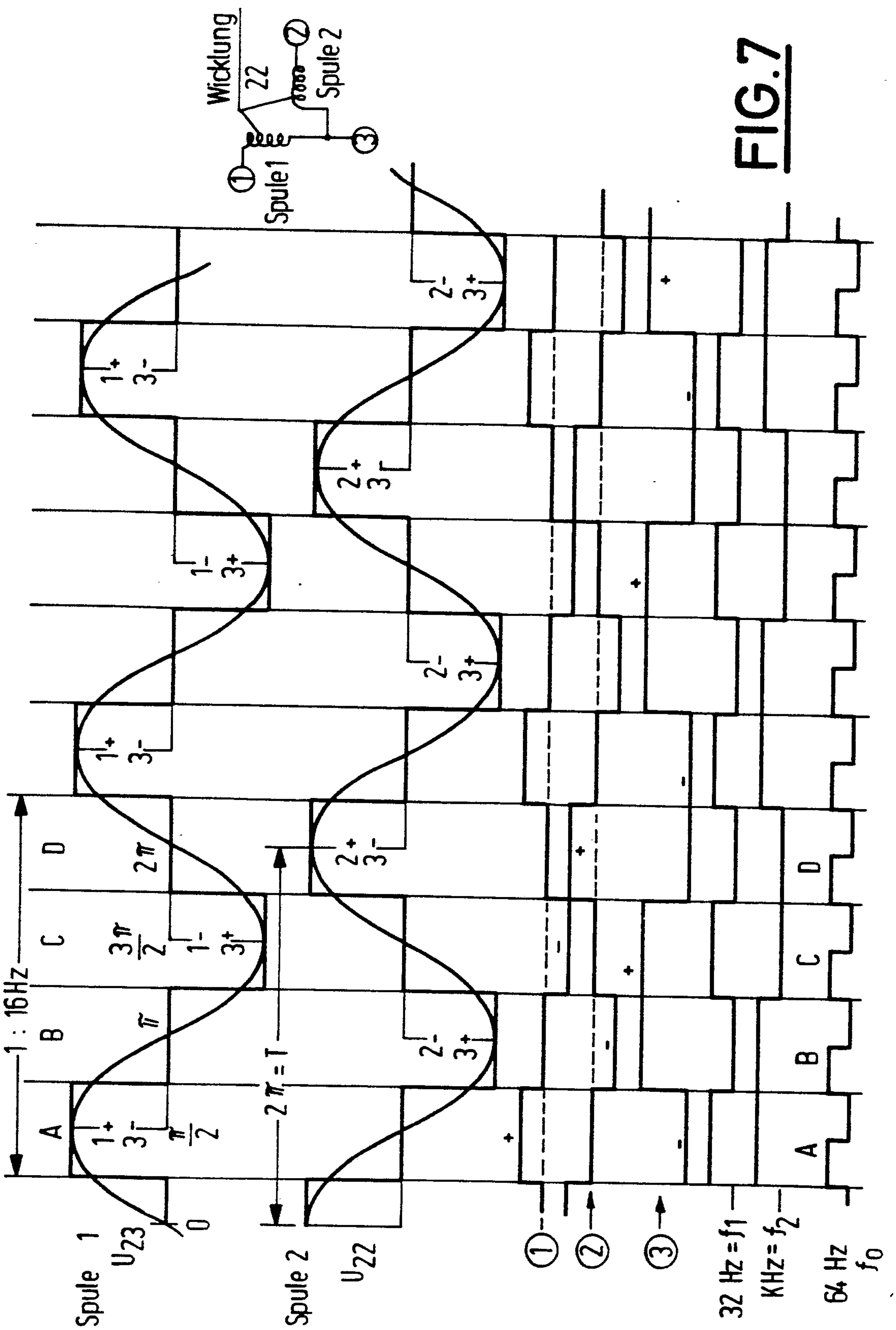
Spule 1
$U_{23}$
Spule 2
$U_{22}$
1 : 16Hz
A
B
C
D
π/2
π
3π/2
2π
2π = T
0
①
②
③
32 Hz = $f_1$
KHz = $f_2$
64 Hz $f_0$
Wicklung
22
Spule1
Spule 2

FIG.7

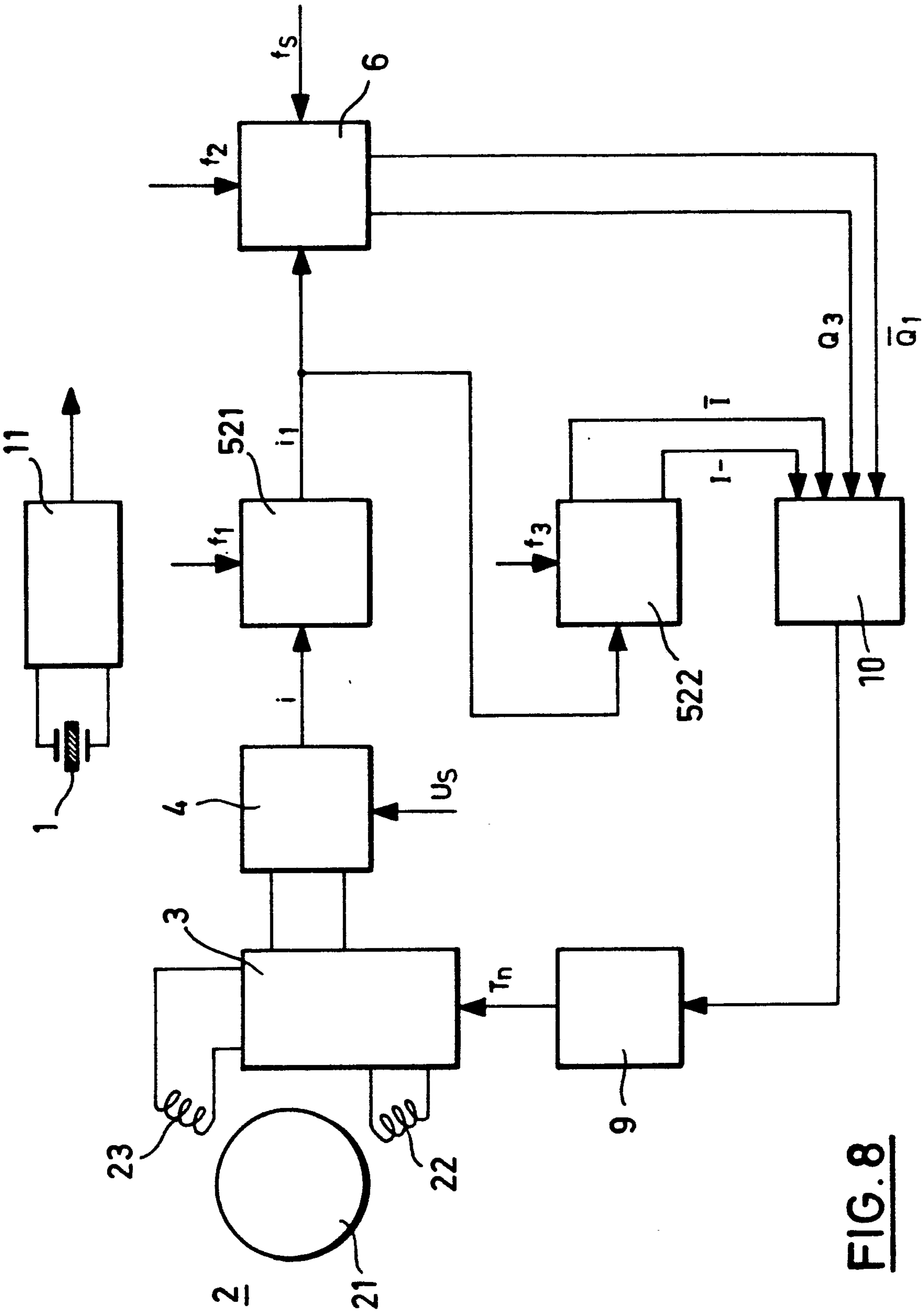


FIG. 8

FIG. 9

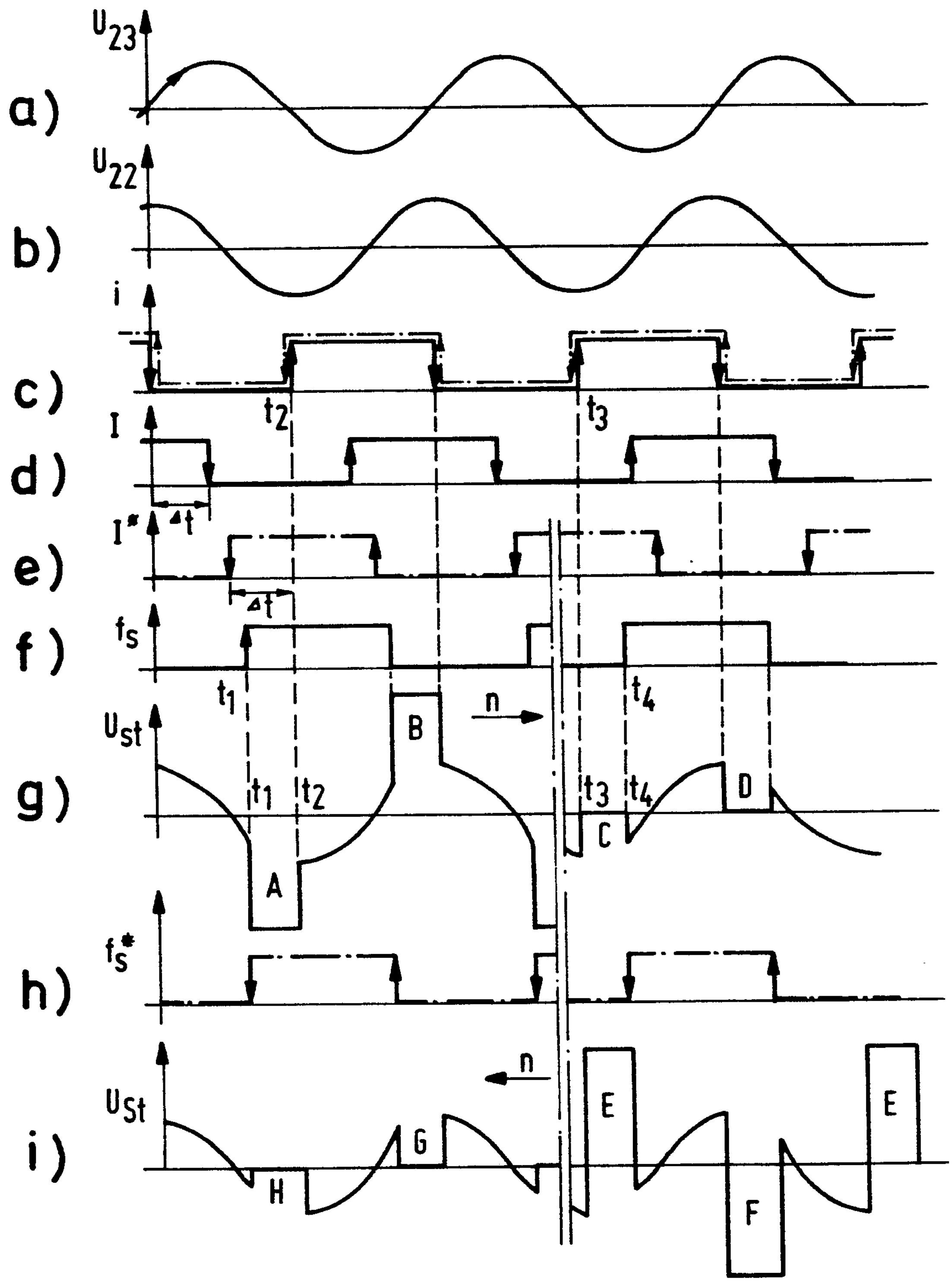

a)
$U_{23}$
b)
$U_{22}$
c)
i
$t_2$
$t_3$
d)
I
Δt
e)
I*
Δt
f)
$f_s$
$t_1$
$t_4$
g)
$U_{St}$
$t_1$
$t_2$
$t_3$
$t_4$
n
A
B
C
D
h)
$f_s^*$
i)
$U_{St}$
n
E
F
G
H
E

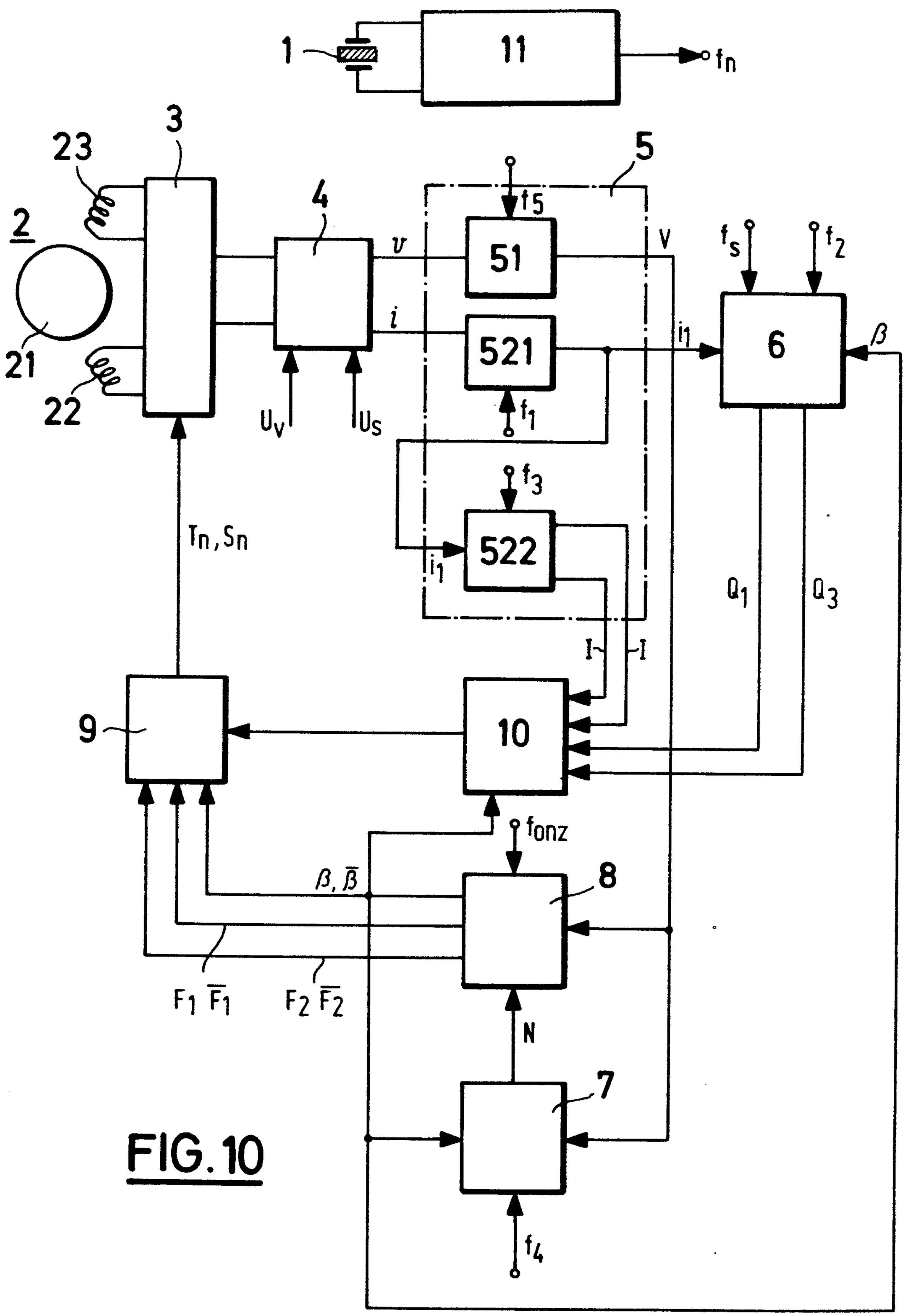
1
11
fn
2
21
22
23
3
4
v
i
Uv
Us
5
f5
51
V
521
f1
f3
522
i1
I
I
fs
f2
6
β
Q1
Q3
Tn, Sn
9
10
fonz
8
β, β̄
F1 F̄1
F2 F̄2
N
7
f4

FIG. 10

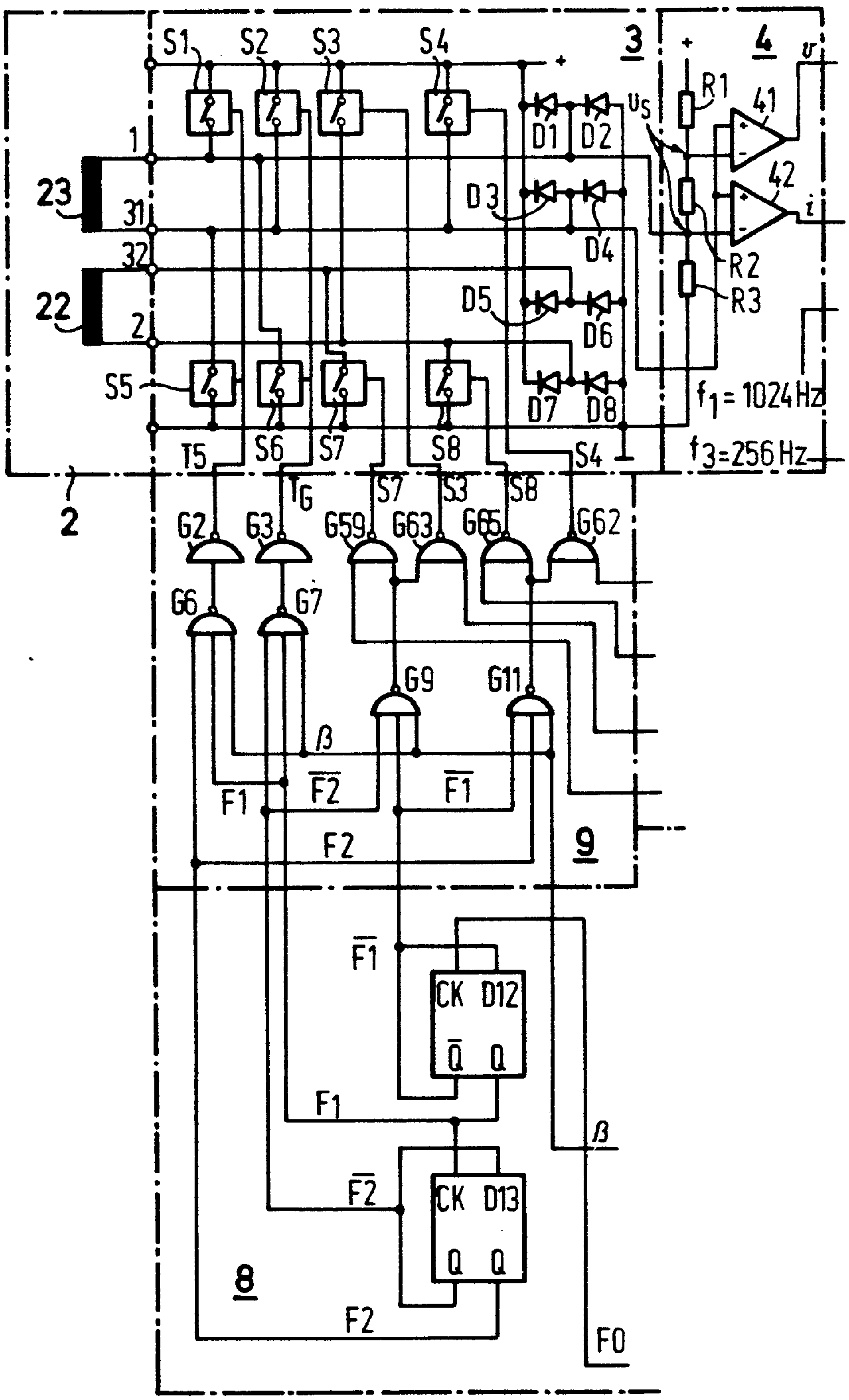


FIG. 11a → FIG. 11b

FIG. 11b → FIG. 11c

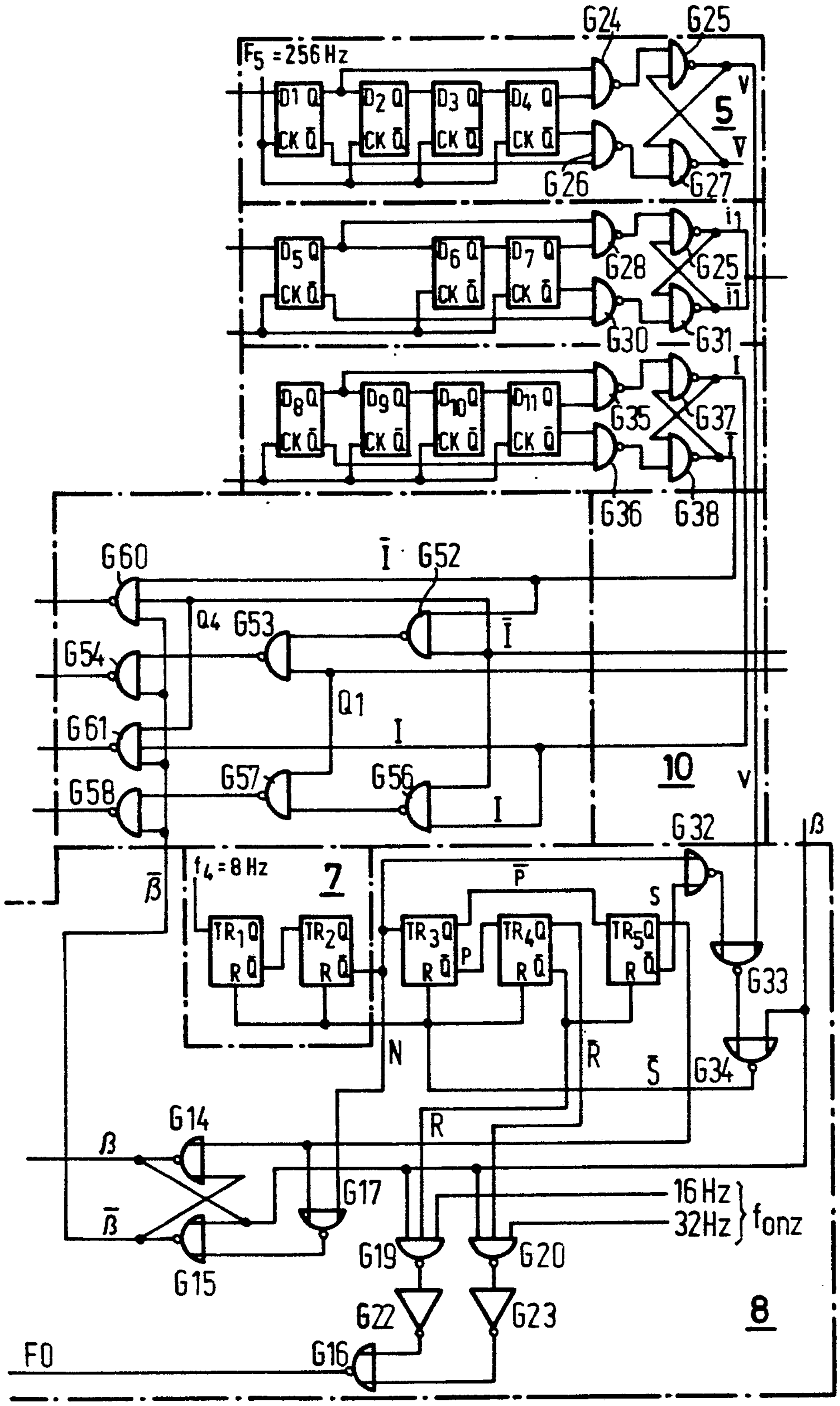

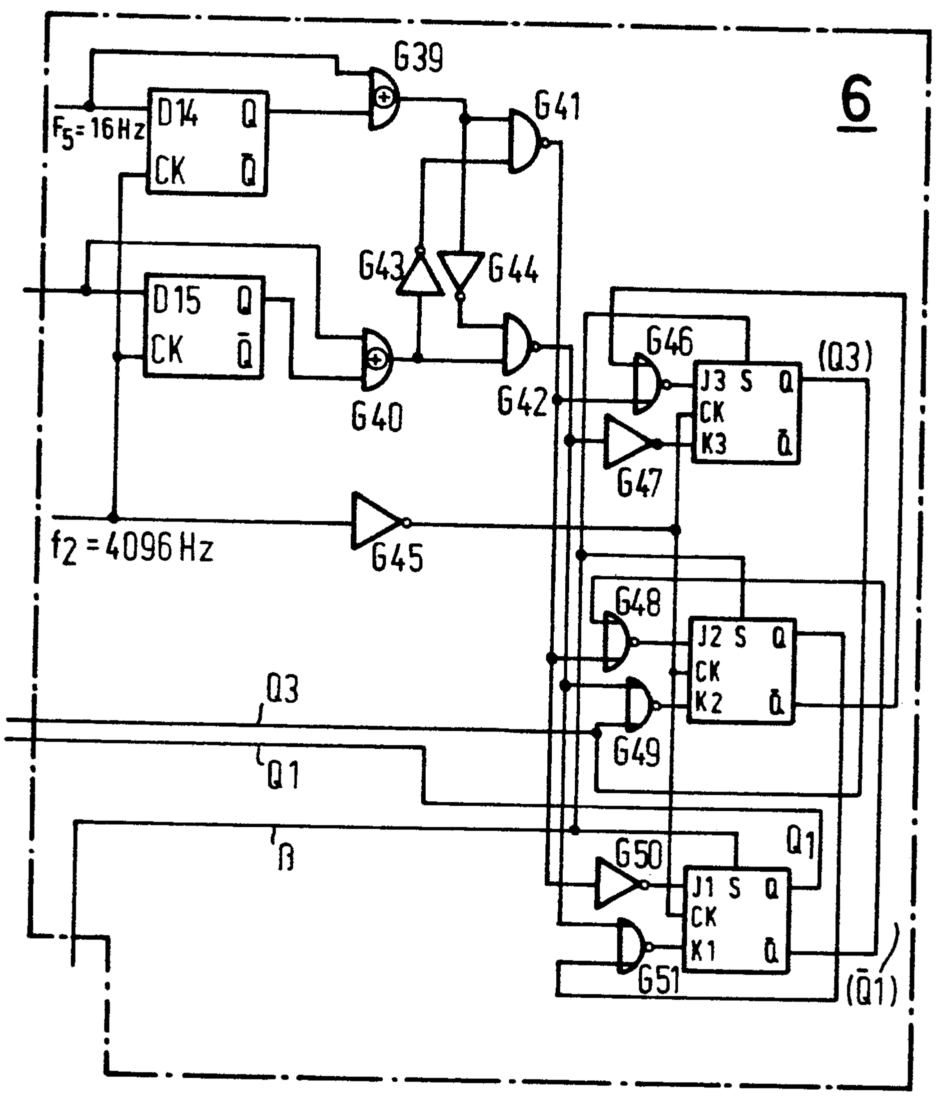
6
G39
G41
D14 Q
CK Q̄
F5 = 16Hz
G43
G44
D15 Q
CK Q̄
G40
G42
G46
(Q3)
J3 S Q
CK
K3 Q̄
G47
f2 = 4096 Hz
G45
G48
J2 S Q
CK
K2 Q̄
Q3
G49
Q1
ß
Q1
G50
J1 S Q
CK
K1 Q̄
G51
(Q̄1)

FIG. 11c

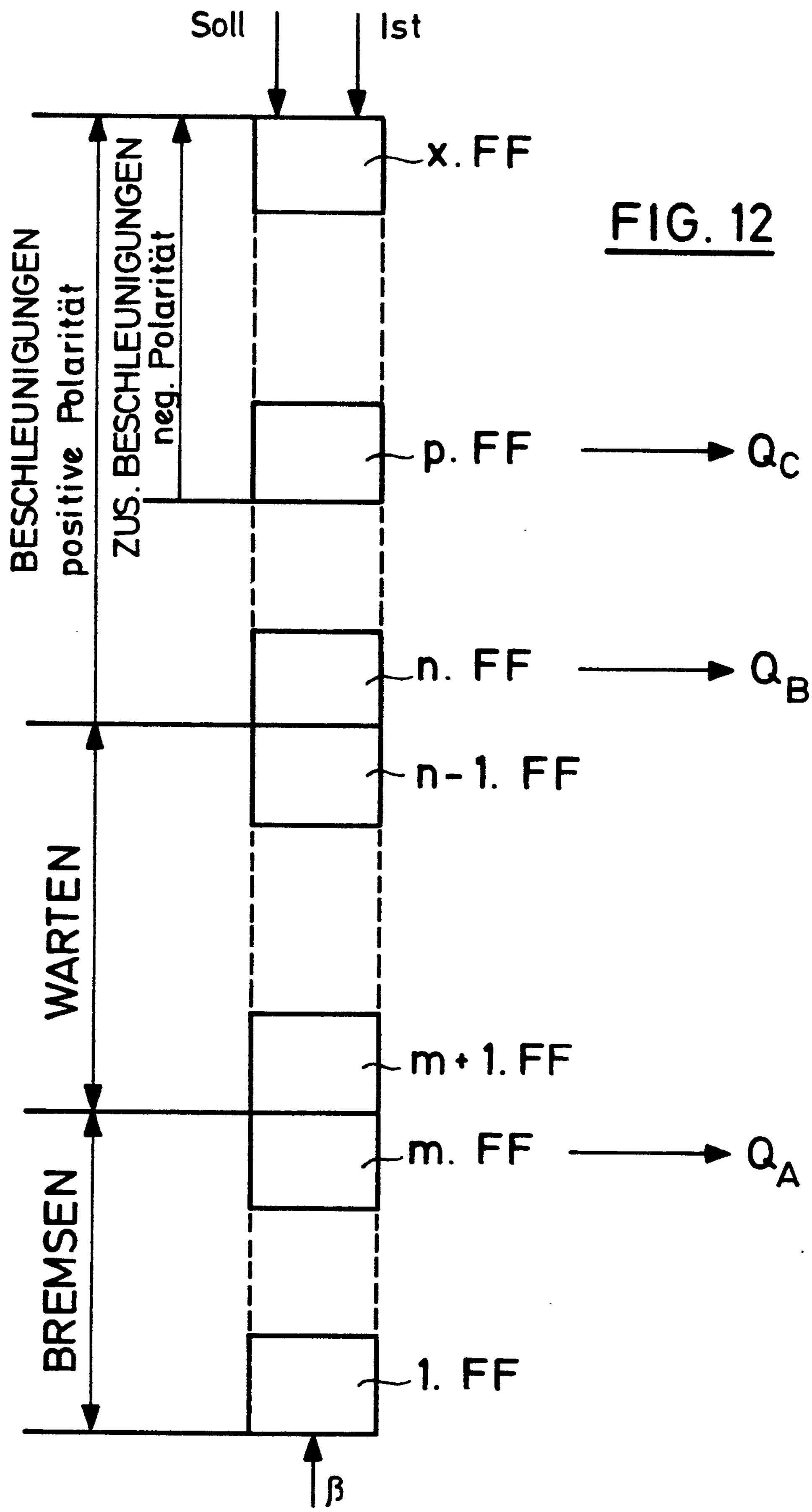

Soll
Ist
x. FF
p. FF
Q_C
n. FF
Q_B
n-1. FF
m+1. FF
m. FF
Q_A
1. FF
β
BESCHLEUNIGUNGEN positive Polarität
ZUS. BESCHLEUNIGUNGEN neg. Polarität
WARTEN
BREMSEN


FIG. 12

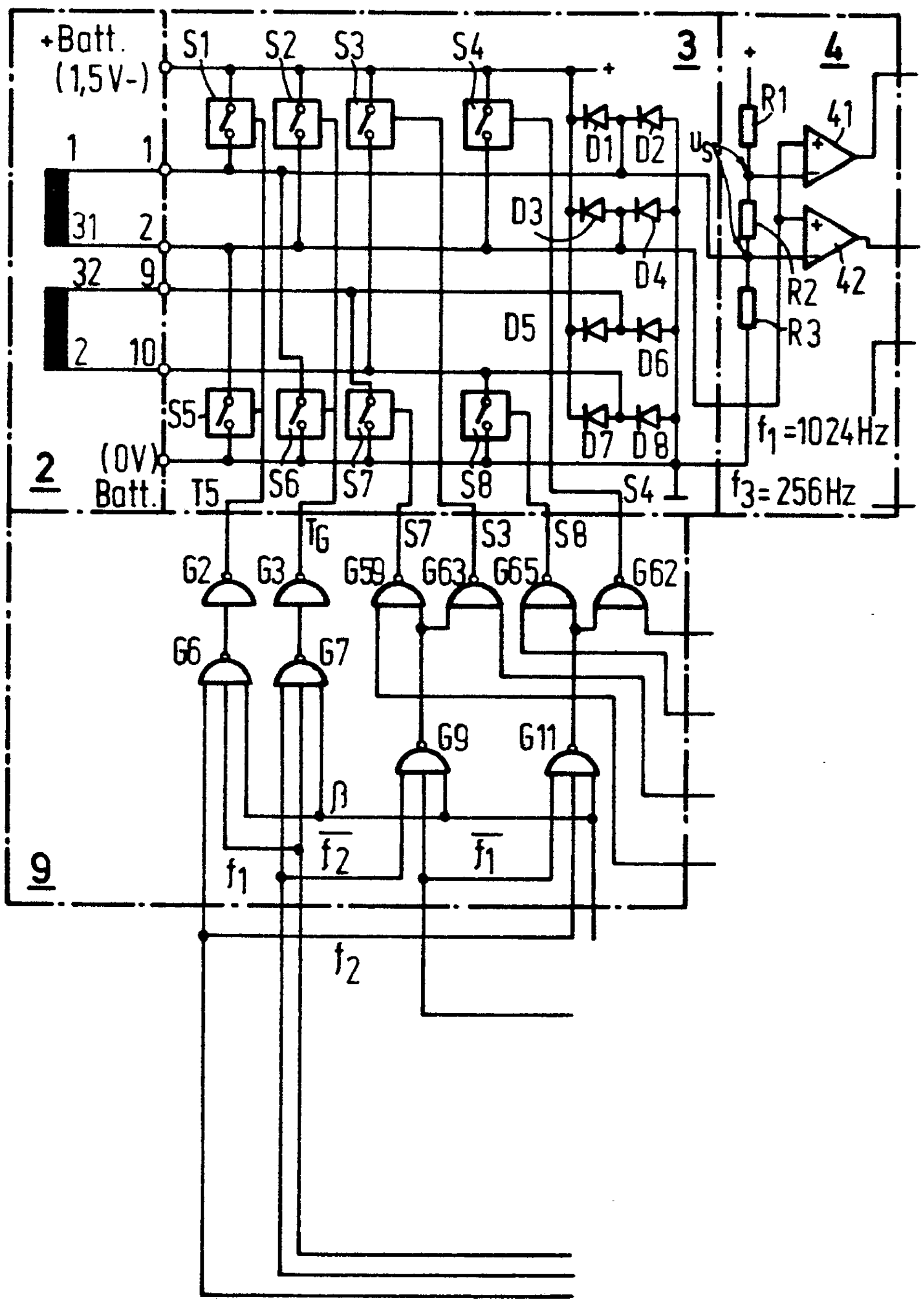


FIG. 13a → FIG. 13b

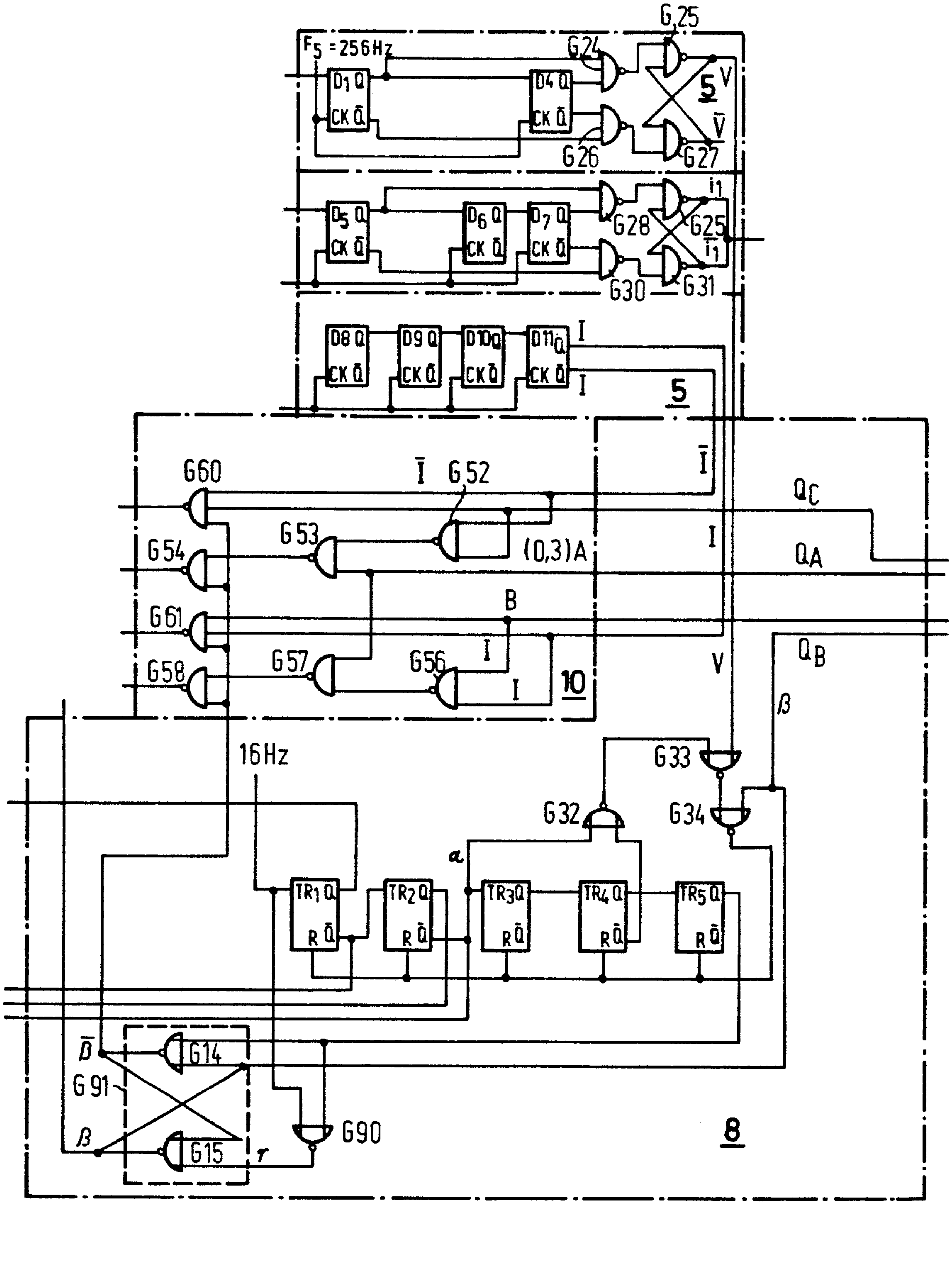


FIG. 13 b → FIG. 13c

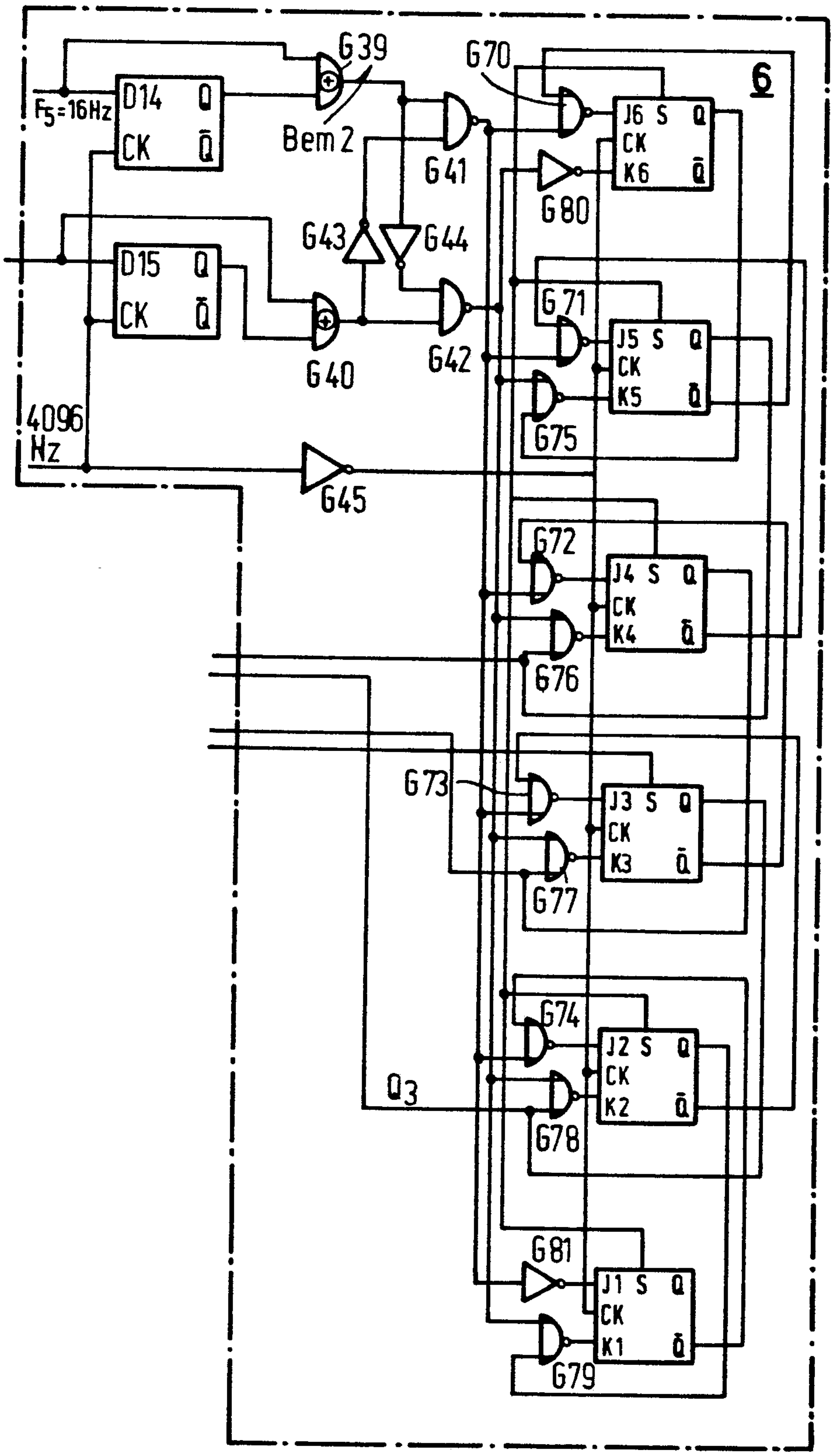
6
D14
Q
CK
Q̄
F5=16Hz
G39
Bem 2
G70
G41
D15
G43
G44
G40
G42
4096 Hz
G45
J6 S Q
CK
K6 Q̄
G80
G71
J5 S Q
CK
K5 Q̄
G75
G72
J4 S Q
CK
K4 Q̄
G76
G73
J3 S Q
CK
K3 Q̄
G77
G74
J2 S Q
CK
K2 Q̄
Q3
G78
G81
J1 S Q
CK
K1 Q̄
G79

FIG. 13c

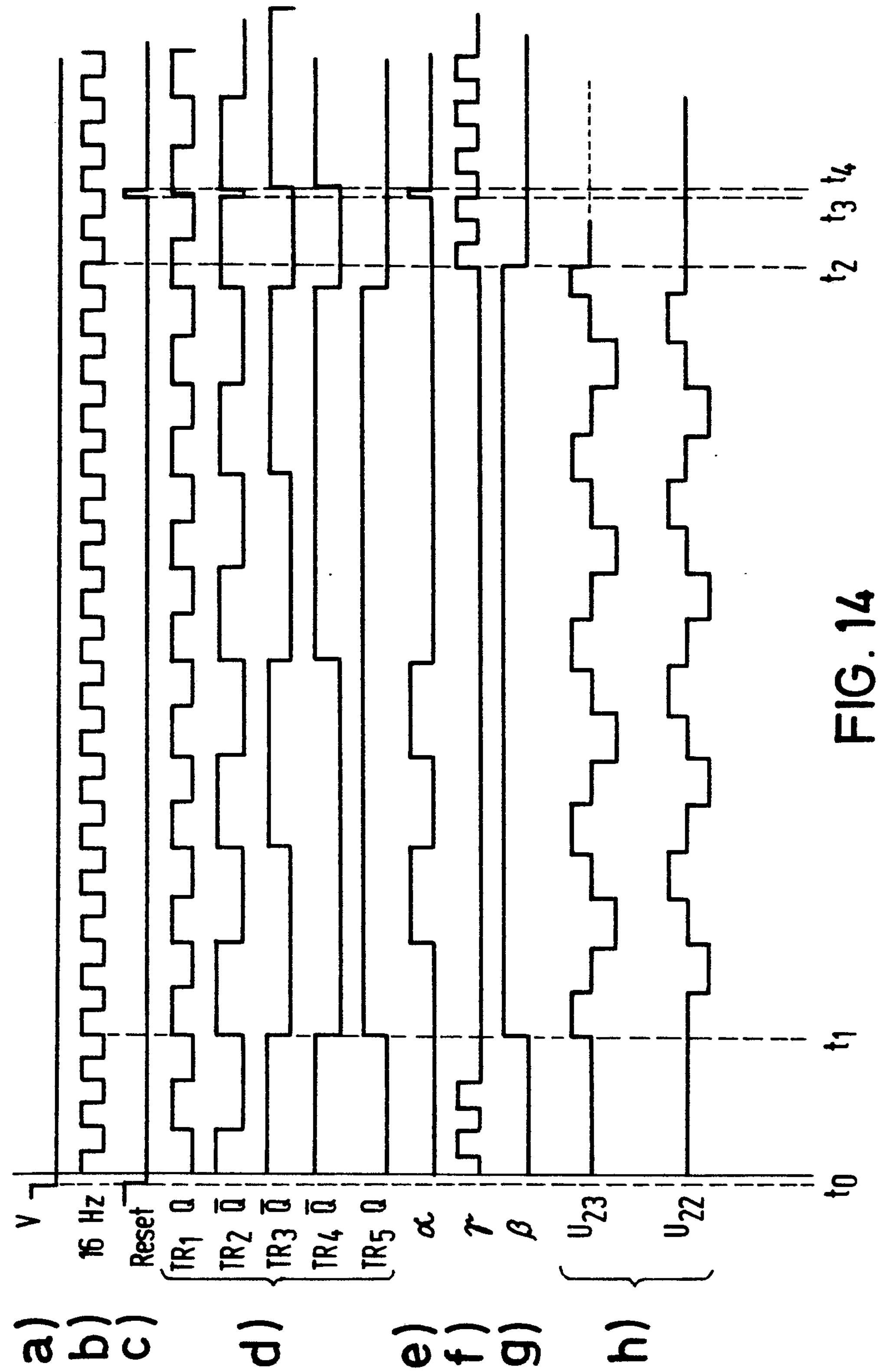
a)
b)
c)
d)
e)
f)
g)
h)
V
16 Hz
Reset
TR1 Q
TR2 Q̄
TR3 Q̄
TR4 Q̄
TR5 Q
α
γ
β
U23
U22
t0
t1
t2
t3
t4

FIG. 14